# EUROPÄISCHE PATENTSCHRIFT

(11) **EP 3 244 332 B1**
(45) Veröffentlichungstag und Bekanntmachung des Hinweises auf die Patenterteilung: **06.03.2019**
(21) Anmeldenummer: 17170162.6
(22) Anmeldetag: 09.05.2017
(51) Int. Cl.: G06F 21/31

(54) **VERFAHREN ZUM LESEN VON ATTRIBUTEN AUS EINEM ID-TOKEN**
METHOD FOR READING ATTRIBUTES FROM AN ID TOKEN
PROCÉDÉ DE LECTURE D'ATTRIBUTS À PARTIR D'UN JETON D'IDENTIFICATION

(30) Priorität: 10.05.2016 DE 102016208038
(43) Veröffentlichungstag der Anmeldung: 15.11.2017
(73) Patentinhaber: Bundesdruckerei GmbH, 10969 Berlin (DE)
(72) Erfinder: WIRTH, Klaus-Dieter, 12683 Berlin (DE); SCHOLZE, Steffen, 13469 Berlin (DE); SCHWAN, Matthias, 10437 Berlin (DE); MÜLLER, Frank, 10435 Berlin (DE); FILZHUTH, Elke, 12359 Berlin (DE)
(74) Vertreter: Richardt Patentanwälte PartG mbB

(56) Entgegenhaltungen:
- "Advanced Security Mechanisms for Machine Readable Travel Documents and eIDAS Token - Part 2", , 16. Dezember 2014 (2014-12-16), XP055257174, Gefunden im Internet: URL:https://www.bsi.bund.de [gefunden am 2016-03-10]
- "Technical Guideline eID-Server", , 15. Januar 2014 (2014-01-15), XP055256439, Gefunden im Internet: URL:https://www.bsi.bund.de/SharedDocs/Dow nloads/DE/BSI/Publikationen/TechnischeRich tlinien/TR03130/TR-03130_TR-eID-Server_Par t1.pdf?__blob=publicationFile
- Bsi ET AL: "Advanced Security Mechanisms for Machine Readable Travel Documents and eIDAS Token", Part 3 - Common Specifications Version 2.20, 3. Februar 2015 (2015-02-03), XP055258090, Gefunden im Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile&v=1 [gefunden am 2016-03-14]

## Beschreibung

Die Erfindung betrifft ein Verfahren zum Lesen von Attributen aus einem ID-Token, einen ID-Token und ein Computersystem.
Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.
Aus US 2007/0294431 A1 ist ein weiteres Verfahren zur Verwaltung der digitalen Identitäten bekannt, welches ebenfalls eine Nutzerregistrierung erfordert.
Aus DE 10 2008 000 067 A1 ist ein Verfahren zum Lesen von zumindest einem Attribut aus einem ID-Token bekannt, von dem die vorliegende Erfindung als dem nächstkommenden Stand der Technik ausgeht. Weiterbildungen dieses Verfahrens sind in den Patentanmeldungen DE 10 2008 040 416, DE 10 2008 042 262, DE 10 2009 026 953, DE 10 2009 027 723, DE 10 2009 027 681 und DE 10 2010 028133 offenbart.

Die Technische Richtlinie TR-03 110-2 "Advanced Security Mechanisms for Machine Readable Travel Documents and eIDAS Token - Part 2" beschreibt die Verwendung des elektronischen Personalausweises. Sie zeigt ein Verfahren zum Lesen und Aktualisieren von Attributen aus einem ID-Token (eIDAS), bei dem fehlende Attribute nach einer gegenseitigen Authentifizierung von einem Attribut-Provider bereitgestellt werden.

Der Erfindung liegt demgegenüber die Aufgabe zugrunde, ein verbessertes Verfahren zum Lesen von Attributen aus einem ID-Token zu schaffen einen entsprechenden ID-Token, ein entsprechendes Attribut-Provider-Computersystem, ein entsprechendes Nutzer-Computersystem und Computersystem.
Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Ausführungsformen der Erfindung sind frei miteinander kombinierbar sofern sie sich nicht gegenseitig ausschließen.
Unter einem "ID-Token" wird hier insbesondere ein tragbares elektronisches Gerät verstanden, welches zumindest einen geschützten elektronischen Datenspeicher zur Speicherung der Attribute und eine Kommunikations-Schnittstelle zum Auslesen der Attribute aufweist. Der Speicherbereich ist geschützt, um zu verhindern, dass das in dem Speicherbereich gespeicherte Attribut in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Bei dem ID-Token kann es sich um einen Hardwaretoken handeln oder um einen Softtoken, wenn dieser kryptografisch an einen Hardwaretoken, das heißt beispielsweise an ein sogenanntes Secure Element, gebunden ist.

Insbesondere kann ein solcher kryptografisch an ein Secure Element gebundener Softtoken gemäß DE 10 2011 082 101, deren Offenbarungsgehalt voll umfänglich zum Offenbarungsgehalt der vorliegenden Patentanmeldung gemacht wird, erzeugt werden.

Unter einem "ID-Provider-Modul" wird hier ein Programmlogik-Modul verstanden, welches dazu ausgebildet ist, Attribute aus dem ID-Token eines Nutzers auszulesen und eine Attributspezifikation in den ID-Token zu schreiben. Das ID-Provider-Modul kann z.B. als Softwarekomponente oder Computersystem ausgebildet sein. Das ID-Provider-Modul kann z.B. als ID-Provider-Computersystem ausgebildet sein welches vorzugsweise in einem sogenannten Trustcenter betrieben wird, um ein möglichst hohes Maß an Sicherheit zu schaffen. In manchen Ausführungsformen gehören das ID-Provider-Modul und das Dienst-Computersystem zur gleichen IT-Infrastruktur, z.B. zum gleichen Intranet einer Firma. Es ist sogar möglich, dass das ID-Provider-Modul auf dem Dienst-Computersystem installiert und ausgeführt wird, sodass es sich in diesem Fall bei dem ID-Provider-Modul und dem Dienst-Computersystem, bzw. dem auf diesem betriebenen elektronischen Dienst in diesem Fall dann um funktional unterschiedliche, miteinander interoperierende Module handelt. Ein ID-Provider-Modul verfügt z.B. über spezifische Berechtigungsnachweise, z.B. Zertifikate oder kryptographische Schlüssel oder dergleichen, die dem ID-Provider-Modul einen Zugriff auf bestimmte ausgewählte Speicherbereiche eines ID-Tokens erlauben.

Unter einem "Attribut-Provider-Computersystem" wird hier ein Computersystem verstanden, welches dazu ausgebildet ist, Attribute auf Antrage bereitzustellen. Insbesondere kann die Bereitstellung attributklassenspezifisch und/oder spezifisch für einen bestimmten Nutzer eines ID-Tokens erfolgen. Vorzugsweise ist ein Attribut-Provider-Computersystem dazu ausgebildet, eine Attributspezifikation aus dem ID-Token eines Nutzers auszulesen und Attribute in den ID-Token zu schreiben.

Unter einem "Attribut-Provider-Verzeichnis-Computersystem" wird hier ein Computersystem verstanden, welches dazu ausgebildet ist, für bestimmte Klassen von Attributen ein oder mehrere Attribut-Provider-Computersysteme zu identifizieren, welche in der Lage sind, Attribute dieser Klassen vollständig oder zumindest teilweise bereitzustellen. Nach manchen Ausführungsformen können neben der Identität der Attribut-Provider-Computersysteme selbst auch noch weitere Informationen wie z.B. eine Kontaktadresse, Leistungsdaten, historische Verfügbarkeitsdaten bezüglich der jeweiligen Attribut-Provider-Computersysteme identifiziert und an das anfragende System kommuniziert werden.

Bei den Attributklassen kann es sich um (beliebig) vordefinierte Gruppen von Attributen handeln. Die Klassen können disjunkt oder überlappend sein. Beispiele für verschiedene Attributklassen sind: Adressdaten eines Nutzers; medizinische Daten eines Nutzers; Bankdaten eines Nutzers; Informationen, die über die Kreditwürdigkeit eines Nutzers Auskunft geben; und andere.

Unter einem "Attribut" werden hier insbesondere Daten verstanden, die den Nutzer des ID-Tokens oder den ID-Token selbst betreffen, insbesondere Personalisierungsdaten, wie zum Beispiel persönliche Daten des Nutzers, eine Gültigkeitsdauer oder den Herausgeber des ID-Tokens oder eine Zahlungsinformation, wie zum Beispiel Kreditkartendaten oder andere Daten für ein elektronisches Bezahlsystem.

Unter einer "Attributspezifikation" wird hier eine Beschreibung von denjenigen Attributen verstanden, die zum Beispiel von einem Dienst-Computersystem zur Erbringung eines Dienstes benötigt werden. Die Attribute können über Feldnamen von Datenfeldern identifiziert werden, in denen die jeweiligen Attributwerte gespeichert sind, und/oder über ein semantisches Netz, d.h. eine Konvention, wie Attribute systemübergreifend bezeichnet werden.

Unter einem "Dienst-Computersystem" wird hier ein Computersystem verstanden, welches über eine Netzwerk-Schnittstelle zur Verbindung mit dem Netzwerk verfügt, sodass mithilfe eines Internetbrowsers oder eines anderen Anwendungsprogramms auf von dem Dienst-Computersystem gespeicherte oder generierte Internetseiten zugegriffen werden kann. Insbesondere kann es sich bei dem Dienst-Computersystem um einen Internetserver zur Verfügungstellung einer eCommerce- oder eGovernment-Anwendung handeln, insbesondere einen Onlineshop oder einen Behördenserver.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smartphone, mit einem üblichen Internetbrowser, wie zum Beispiel Microsoft Internet Explorer, Safari, Google Chrome, Firefox oder einem anderen Anwendungsprogramm zum Zugriff auf das Dienst-Computersystem handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Lesegerät" wird hier ein elektronisches Gerät verstanden, welches einen Lesezugriff und auch einen Schreibzugriff auf den ID-Token ermöglicht, insbesondere ein sogenanntes Chipkartenterminal. Das Lesegerät kann einen integralen Bestandteil des Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln.

Unter einem "nichtflüchtigen elektronischen Speicher" wird hier ein Speicher zur Speicherung von Daten, insbesondere von Attributen, verstanden, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier eine Logikschaltung verstanden, die zur Ausführung von Programminstruktionen dient. Die Logikschaltung kann auf einem oder mehreren diskreten Bauelementen implementiert sein, insbesondere auf einem Chip.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein Card Verifiable Certificate (CVC).

In dem Zertifikat kann spezifiziert sein, für welches Attribut oder welche Attribute des Nutzers, die in dem geschützten Speicherbereich des ID-Tokens gespeichert sind, das ID-Provider-Modul bzw. das Attribut-Provider-Computersystem zur Durchführung des Lesezugriffs berechtigt ist. Ferner können auch die jeweiligen Schreibrechte für Attributspezifikationen oder Attribute in einem Zertifikat definiert sein. Ein solches Zertifikat wird auch als Berechtigungszertifikat bezeichnet.

Unter einer "Session" wird hier eine temporäre Kommunikationsverbindung, das heißt eine sog. "Communication Session", insbesondere eine Internet-Session verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische Verschlüsselung geschützt ist.

Unter einem "gesicherten", "geschützten" oder "sicheren" "Übertragungskanal" wird hier ein Übertragungskanal verstanden, der kryptografisch abgesichert ist, um ein Ausspähen und/oder eine Manipulation der Übertragung zu verhindern, wobei hierzu ein sogenanntes Secure-Messaging-Verfahren eingesetzt werden kann. Beispielsweise kann ein geschützter Übertragungskanal zwischen einem ID-Token, z.B. einem Chip, und einem entfernten Computer (z.B. Dienst-Computersystem, Attribut-Providersystem) oder einem lokalen Computer (z.B. Nutzer-Computersystem) aufgebaut werden, z.B. mittels eines PACE Protokolls. Geschützte Verbindungen zwischen Computersystemen können z.B. mittels SSL/TLS aufgebaut werden.

Unter einem "lokalen" geschützten Übertragungskanal wird hier ein gesicherter Übertragungskanal verstanden, der zwischen dem ID-Token und dem Nutzer-Computersystem über das Lesegerät aufgebaut wird, wobei insbesondere die Verbindung zwischen dem ID-Token und dem Lesegerät kontaktbehaftet oder kontaktlos ausgebildet sein kann, letzteres insbesondere gemäß einem NFC- oder RFID-Standard.

Unter Ende-zu-Ende-Verschlüsselung wird hier eine Verschlüsselung übertragener Daten über alle Übertragungsstationen hinweg verstanden. Die zu übertragenden Daten werden auf Senderseite ver- und erst beim Empfänger wieder entschlüsselt. Zwischenstationen können die übertragenen Inhalte nicht entschlüsseln.

In einem Aspekt betrifft die Erfindung ein Verfahren zum Lesen von Attributen aus einem ID-Token, der einem Nutzer zugeordnet ist. Der ID-Token weist einen nichtflüchtigen elektronischen Speicher mit einem geschützten Speicherbereich auf, in dem Attribute gespeichert sind. Ein Zugriff auf den geschützten Speicherbereich ist nur über einen Prozessor des ID-Tokens möglich. Der ID-Token weist eine Kommunikationsschnittstelle zur Kommunikation mit einem Lesegerät eines Nutzer-Computersystems auf. Das Verfahren umfasst folgende Schritte:
- Senden einer Dienstanforderung des Nutzers von dem Nutzer-Computersystem über ein Netzwerk an ein Dienst-Computersystem, welches mit einem ID-Provider-Modul gekoppelt ist;
- in Antwort auf den Empfang der Dienstanforderung, Senden einer ersten Attributspezifikation von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt;
- gegenseitige Authentifizierung des ID-Provider-Moduls und des ID-Tokens;
- Durchführung eines Schreibzugriffs des ID-Provider-Moduls auf den ID-Token zum Schreiben der ersten Attributspezifikation in einen geschützten Speicherbereich des ID-Tokens; Der Schreibzugriff erfolgt vorzugsweise nur nach erfolgreicher gegenseitiger Authentifizierung über einen geschützten Übertragungskanal mit Ende-zu-Ende-Verschlüsselung zwischen dem ID-Token und dem ID-Provider-Modul;
- Senden von einem oder mehreren Klassenidentifikatoren an ein Attribut-Provider-Verzeichnis-Computersystem, wobei jeder der Klassenidentifikatoren eine Attributklasse identifiziert, welcher ein oder mehrere der in der ersten Attributspezifikation spezifizierten Attribute angehören, wobei das Attribut-Provider-Verzeichnis-Computersystem weder zum Lesen der ersten Attributspezifikation von dem ID-Token noch zum Schreiben von Attributen auf das ID-Token berechtigt ist. Je nach Ausführungsform sind die Attributklassen disjunkt oder überlappend.
- für jeden der gesendeten Klassenidentifikatoren, Empfang von ein oder mehreren Identifikatoren durch das Nutzer-Computersystem, wobei jeder der Identifikatoren ein Attribut-Provider-Computersystem identifiziert, welches dazu ausgebildet ist, nutzerbezogene Attribute der durch den Klassenidentifikator identifizierten Attributklasse bereitzustellen; Je nach Ausführungsform können die Identifikatoren durch das Nutzer-CS direkt von dem Attribut-Provider-Verzeichnis-Computersystem empfangen werden oder durch das Nutzer-Computersystem von dem Dienst-Computersystem empfangen werden, welches die Identifikatoren zuvor von dem Attribut-Provider-Verzeichnis-Computersystem angefordert und empfangen hat; Die "Identifikatoren", auch als "AP-Identifikatoren" bezeichnet, identifizieren also jeweils ein Attribut-Provider-Computersystem. Ein Identifikator kann z.B. aus einer URL oder einer IP-Adresse eines Attribut-Provider-Computersystems bestehen;
- in Antwort auf den Empfang der Identifikatoren, Verwenden eines ersten der Identifikatoren durch das Nutzercomputersystem, um eine Adresse eines ersten der Attribut-Provider-Computersysteme zu identifizieren; und Senden eines ersten Triggersignals von dem Nutzer-Computersystem an die identifizierte Adresse des ersten Attribut-Provider-Computersystems; das erste Triggersignal ist frei von der ersten Attributspezifikation und frei von Teilen der ersten Attributspezifikation und beinhaltet eine Adresse des ID-Tokens;
- in Antwort auf Empfang des ersten Triggersignals, Initialisierung einer gegenseitigen Authentifizierung des ersten Attribut-Provider-Computersystems und des ID-Tokens durch das erste Attribut-Provider-Computersystem unter Verwendung der Adresse des ID-Tokens;
- nach gegenseitiger Authentifizierung des ersten Attribut-Provider-Computersystems und des ID-Tokens, Lesezugriff des ersten Attribut-Provider-Computersystems auf den geschützten Speicherbereich des ID-Tokens zum Auslesen und/oder Generieren einer zweiten Attributspezifikation, wobei die zweite Attributspezifikation eine Menge derjenigen Attribute der ersten Attributspezifikation spezifiziert, welche der Attributklasse angehören, zu deren Bereitstellung das erste Attribut-Provider-Computersystem ausgebildet ist; die zweite Attributspezifikation kann bereits in dem ID-Token gespeichert vorliegen oder durch das erste Attribut-Provider-CS generiert werden, z.B. dadurch, dass das AP1 die erste Attributspezifikation AR vollständig liest und erst danach die zweite Attributspezifikation AR1 als die relevante Teilmenge der ersten Attributspezifikation bestimmt.
- Ermittlung einer ersten Menge von Attributen, wobei die erste Menge aus Attributen besteht, die in der zweiten Attributspezifikation spezifiziert sind;
- Durchführung eines Schreibzugriffs durch das erste Attribut-Provider-Computersystem auf den geschützten Speicherbereich des ID-Tokens zur Speicherung der ersten Attributmenge in dem ID-Token; in manchen Ausführungsformen erlaubt das ID-Token den Schreibzugriff nur nach vorhergehender Prüfung, ob das zugreifende Attribut-Provider-Computersystem auch entsprechende Rechte zum Schreiben von Daten auf den geschützten Bereich beinhaltet. Beispielsweise kann dies mithilfe von Berechtigungszertifikaten geschehen, mittels welchen sich ein Attribut-Provider-Computersystem gegenüber dem ID-Token authentifizieren kann;
- Senden eines ersten Bestätigungssignals von dem ersten Attribut-Provider-Computersystem an das Nutzercomputersystem, wobei das erste Bestätigungssignal angibt, ob die in der zweiten Attributspezifikation spezifizierten Attribute vollständig ermittelt und in dem ID-Token gespeichert wurden;
- Durchführung eines Lesezugriffs des ID-Provider-Moduls zum Lesen der in dem ID-Token gespeicherten Attribute durch das ID-Provider-Modul und Weiterleitung der gelesenen Attribute an das Dienst-Computersystem. Beispielsweise kann der Lesezugriff auf Veranlassung des Nutzer-Computersystems erfolgen. Beispielsweise sendet das ID-Token, wenn alle von dem Dienst angeforderten Attribute in dem ID-Token gespeichert sind, ein Bestätigungssignal an das Nutzer-Computersystem, welches wiederum eine Nachricht an das ID-Provider-Modul sendet und dieses zum Auslesen der in dem ID-Token gespeicherten Attribute und zur Übertragung der ausgelesenen Attribute an das Dienst-Computersystem veranlasst.

Dieses Verfahren kann aus mehreren Gründen vorteilhaft sein:
Das beschriebene Kommunikationsprotokoll ermöglicht es dem Nutzer-Computersystem mittels Bestätigungs- und Trigger-Signalen, den Datenaustausch mit einem Attribut-Provider-Computersystem und dem ID-Token zu koordinieren, ohne dass das Nutzer-Computersystem hierfür Einblick in die kommunizierten Attribute oder die vom Dienst in der ersten Attributspezifikation angeforderten Attribute haben muss. Dies erhöht die Sicherheit der übertragenen und oftmals sensiblen Daten erheblich, denn das Nutzer-Computersystem, z.B. ein Notebook oder Smartphone einer Person, kann einer Vielzahl von Angriffen ausgesetzt sein, z.B. in Form von Trojanern, Viren oder direkten Hackerangriffen. Das Nutzer-Computersystem ist oftmals ein privat genutzter Rechner einer Person, der nicht in ähnlicher Weise gesichert werden kann wie beispielsweise Rechner in größeren Firmen oder Rechenzentren. Dadurch, dass das Nutzer-Computersystem zwar die Kommunikation koordiniert, nicht jedoch selbst auf sensible Daten zugreift, wird die Sicherheit der Daten erheblich erhöht.

In einem weiteren vorteilhaften Aspekt wird ein komplexes Kommunikationsprotokoll, das den Datenaustausch zwischen einem ID-Provider-Modul, einem ID-Token und zumindest einem Attribut-Provider-Computersystem auch für ID-Token ermöglicht, bereitgestellt, welches auch durchführbar ist, wenn das ID-Token aufgrund sicherheitstechnischer Beschränkungen oder aufgrund von Beschränkter Rechenleistung der Token-Hardware nicht zur Durchführung eines komplexen Protokolls in der Lage wäre. Die Verarbeitung der Trigger- und Bestätigungssignale, die Initialisierung gegenseitiger Authentifizierungsschritte und Lese- und Schreibzugriffe durch das Attribut-Provider-Computersystem wird von einem - in der Regel hinreichend leistungsfähigen - Nutzer-Computersystem durchgeführt, nicht von dem ID-Token, welches im Besitzt der zu schützenden Daten (Attributspezifikation und später auch der angefragten Attribute) ist. Somit wird ein Verfahren zum Auslesen von Attributen mit einer vorteilhaften Aufgabenteilung bereitgestellt, bei welchem das Nutzer-Computersystem sich für die Koordination der beteiligten Kommunikationspartner (ID-Token, Dienst-Computersystem, ggf. auch Attribut-Provider-Verzeichnis-Computersystem, ein oder mehrere Attribut-Provider-Computersysteme, ID-Provider-Modul) kümmert, wohingegen auf die sensiblen Daten (Attributspezifikationen und Attribute) möglichst immer nur derjenige Kommunikationspartner lesend oder schreibend Zugriff hat, der diese ohnehin schon kennt oder der notwendigerweise in diese Einblick erhalten muss um dem Dienst die angefragten Attribute bereitzustellen. Letzterer Effekt wird an späterer Stelle bei der Beschreibung einzelner Ausführungsformen noch im Detail erläutert.

In einem weiteren Aspekt muss das Nutzer-Computersystem bzw. der ID-Token somit nicht für jede mögliche Attributspezifikation eines Dienstes einen geeigneten Attribut-Provider kennen oder diesen interaktiv vom Nutzer erfragen, der die benötigte Information in der Regel auch nicht besitzen dürfte, da nicht davon auszugehen ist, dass ein Nutzer von SmartCards den Anbietermarkt von Attribut-Providern gut kennt. Somit wird ein vollautomatisches und flexibles Verfahren zum Lesen von Attributen aus einem ID-Token unter Einbeziehung eines oder mehrerer geeigneter, automatisch ermittelter Attribut-Provider-Computersysteme bereitgestellt.

Nach Ausführungsformen erfolgt nach erfolgreicher gegenseitiger Authentifizierung von ID-Provider-Modul und ID-Token ein Aufbau eines ersten geschützten Übertragungskanals mit Ende-zu-Ende-Verschlüsselung zwischen dem ID-Token und dem ID-Provider-Modul über das Netzwerk.

Nach manchen Ausführungsformen wird die Ermittlung der Klassenidentifikatoren durch das Dienst-Computersystem oder durch das ID-Provider-Modul durchgeführt. Die ermittelten Klassenidentifikatoren werden von dem die Ermittlung durchführenden Computersystem an das Nutzer-Computersystem weitergeleitet. So kann das Dienst-Computersystem die Klassenidentifikatoren beispielsweise direkt oder indirekt über das ID-Provider-Modul an das Nutzer-Computersystem kommunizieren. Das Nutzer-Computersystem sendet die übermittelten Klassenidentifikatoren an das Attribut-Provider-Verzeichnis-Computersystem und empfängt in Antwort darauf die Identifikatoren von dem Dienst-Computersystem. Die Adresse des Attribut-Provider-Verzeichnis-Computersystems kann z.B. in dem Nutzer-Computersystem gespeichert und nutzereditierbar sein. Dies kann vorteilhaft sein, da dem Nutzer so die Möglichkeit gegeben wird, einen anderen Attribut-Provider-Verzeichnisdienst auszuwählen.

Nach alternativen Ausführungsformen erfolgt die Ermittlung der Klassenidentifikatoren ebenfalls durch das Dienst-Computersystem oder durch das ID-Provider-Modul. Anstatt die Klassenidentifikatoren jedoch an das Nutzer-Computersystem zu übermitteln, sendet das die Klassenidentifikatoren ermittelnde Computersystem die ermittelten Klassenidentifikatoren an das Attribut-Provider-Verzeichnis-Computersystem, empfängt in Antwort darauf die Identifikatoren der Attribut-Provider-Computersystem von dem Attribut-Provider-Verzeichnis-Computersystem, und übermittelt die ermittelten Identifikatoren (anstatt der Klassenidentifikatoren) an das Nutzer-Computersystem. Dies kann vorteilhaft sein, da das Nutzer-Computersystem somit von der Aufgabe entlastet wird, eine aktuelle Kontaktadresse des Attribut-Provider-Verzeichnis-Computersystems vorzuhalten.

Die Ermittlung der Klassenidentifikatoren durch das Dienst- oder das ID-Provider-Modul kann z.B. durch Analyse der empfangenen ersten Attributspezifikation und Abgleich mit einer vordefinierten Taxonomie der Attributklassen erfolgen.

Nach Ausführungsformen ist ein Applikationsprogramm, das auf dem Nutzer-Computersystem installiert ist, verantwortlich für die Koordination des Aufbaus gesicherter Übertragungskanäle zwischen dem ID-Token und den jeweiligen Attribut-Provider-Computersystemen und dem ID-Provider-Modul, z.B. mittels Protokollumsetzung. Vorzugsweise hat das Nutzer-Computersystem und die auf diesem installierten Applikationsprogramme keinen Zugriff auf die in dem ID-Token gespeicherten ersten und weiteren Attributspezifikationen und hat auch bei der Übertragung einer Attributspezifikation von dem ID-Provider-Modul und/oder bei der Übertragung einer dynamisch ermittelten Attributspezifikation von den einzelnen Attribut-Provider-Computersystemen an das ID-Provider-Modul keinen lesenden oder schreibenden Zugriff auf die Attributspezifikationen, da die Übertragung der Attributspezifikationen jeweils in einem gesicherten Kanal erfolgt. Der geschützte Übertragungskanal kann z.B. als Ende-zu-Ende Übertragungskanal zwischen ID-Token und Attribut-Provider-Computersystem oder als Ende-zu-Ende Übertragungskanal zwischen ID-Token und ID-Provider-Modul ausgebildet sein.

Das Nutzer-Computersystem kann zwar die Wahl des aktuellen Übertragungskanals allein oder in Zusammenarbeit mit dem ID-Token bestimmen, die in dem Kanal übertragenen Daten (Attributspezifikationen und Attribute) sind jedoch vor dem Zugriff durch das Nutzer-Computersystem geschützt. Dies kann die Sicherheit der übertragenen Daten erheblich erhöhen, da auch ein unberechtigter Dritter, der sich Zugang zu dem Nutzer-Computersystem verschafft hat, die übertragenen Attribute und Attributspezifikationen nicht mitlesen kann.

Erfindungsgemäß wird somit auch ermöglicht, dass ein passives ID-Token, welches über einen schwachen Prozessor und eine reduzierte Programmlogik verfügt, dennoch mit einer Vielzahl von dynamisch ermittelten Attribut-Provider-Computersystemen Daten austauschen kann, ohne dass die vom Dienst angefragte Attributspezifikation bzw. die entsprechenden Attribute automatisch allen beteiligten Attribut-Provider-Computersystemen oder dem Nutzer-Computersystem bekannt werden: die Koordination des Datenaustausches zwischen Attribut-Provider-Computersystem und dem ID-Token wird von dem Nutzer-Computersystem durchgeführt, welches allerdings keinen Lese- oder Schreibzugriff auf die übertragenen Attribute oder Attributspezifikation(en) besitzt.

Nach Ausführungsformen verwendet das Nutzer-Computersystem in Antwort auf den Empfang der Identifikatoren einen der empfangenen Identifikatoren, hier als "zweiten Identifikator" bezeichnet, um eine Adresse eines zweiten der Attribut-Provider-Computersysteme zu identifizieren. Das Nutzer-Computersystem sendet ein zweites Triggersignal an die identifizierte Adresse des zweiten Attribut-Provider-Computersystems. Das zweite Triggersignal enthält die zweite Attributspezifikation nicht und auch keine Teile dieser Attributspezifikation oder irgendeiner anderen in dem ID-Token gespeicherten Attributspezifikation.

Dies kann vorteilhaft sein, da es somit nicht erforderlich ist, dass das Nutzer-Computersystem selbst die zweite Attributspezifikation oder Teile davon zu kommunizieren. Vielmehr liest das jeweilige Attribut-Provider-Computersystem die Attributspezifikation über einen geschützten Übertragungskanal aus dem ID-Token aus. Der Aufbau des gesicherten Kanals und das Auslesen erfolgen vorzugsweise nach gegenseitiger Authentifizierung des ID-Tokens und des Attribut-Provider-Computersystems.

Die Adresse des ID-Tokens, die in dem Trigger-Signal enthalten ist, kann z.B. die IP-Adresse des Nutzer-Computersystems, die Adresse des von diesem verwendeten Smartcard-Readers und ggf. ein Slot sein. Damit kann der Attribut-Provider den ID-Token finden. Optional kann die Adresse zudem eine ID eines logischen Kanals des ID-Tokens beinhalten. Der ID-Token entscheidet über den Zugriff auf der Basis der Rechte (nachgewiesen z.B. über Berechtigungszertifikate), die der Attribut-Provider beim Verbindungsaufbau vorweisen kann. Der jeweilige geschützte Kanal zwischen ID-Token und Attribut-Provider-Computersystem wird vorzugsweise vom jeweiligen Attribut-Provider-Computersystem aufgebaut bzw. der Aufbau initialisiert.

In Antwort auf Empfang des zweiten Triggersignals initialisiert das zweite Attribut-Provider-Computersystem unter Verwendung der Adresse des ID-Tokens eine gegenseitige Authentifizierung des zweiten Attribut-Provider-Computersystems und des ID-Tokens. Nach gegenseitiger Authentifizierung des zweiten Attribut-Provider-Computersystems und des ID-Tokens, führt das zweite Attribut-Provider-Computersystem einen Lesezugriff auf den geschützten Speicherbereich des ID-Tokens zum Auslesen und/oder Generieren einer dritten Attributspezifikation durch. Die dritte Attributspezifikation spezifiziert eine Menge derjenigen Attribute der ersten Attributspezifikation, welcher der Attributklasse angehören, zu deren Bereitstellung das zweite Attribut-Provider-Computersystem ausgebildet ist.

In einer beispielhaften Ausführungsform ist es möglich, dass das Dienst-Computersystem oder das ID-Provider-Modul die erste Attributspezifikation entsprechend der darin enthaltenen Attributklassen automatisch in mehrere klassenspezifische Teilspezifikationen aufteilt, die ggf. an das ID-Provider-Modul übermittelt werden und von diesem in dem ID-Token gespeichert werden. Die Speicherung kann z.B. zusammen mit der Speicherung der ersten Attributspezifikation erfolgen, oder die erste Attributspezifikation kann von vorneherein in Form mehrerer Teilspezifikationen (also einer zweiten, dritten, vierten, usw. Attributspezifikation) in dem ID-Token gespeichert werden. In diesem Fall muss die für ein Attribut-Provider-Computersystem relevante Teilspezifikation (für das zweite Attribut-Provider-Computersystem also die dritte Attributspezifikation) nur noch ausgelesen werden.

In einer anderen beispielhaften Ausführungsform wird die zweite Attributspezifikation (und analog auch die dritte und weitere Attributspezifikationen) erst beim oder nach dem Lesezugriff auf das ID-Token durch das jeweilige Attribut-Provider-Computersystem generiert. Die Generierung kann z.B. so erfolgen, dass zunächst die zweite Attributspezifikation gelesen wird und innerhalb dieser selektiv die Attribute durch das zweite Attribut-Provider-Computersystem ermittelt werden, die zu der Klasse von Attributen gehören, die das zweite Attribut-Provider-Computersystem bereitstellen kann. Die Generierung kann z.B. auch so erfolgen, dass zunächst die zweite Attributspezifikation gelesen wird und innerhalb dieser selektiv die Attribute durch das zweite Attribut-Provider-Computersystem ermittelt werden, die zu der Klasse von Attributen gehören, die das zweite Attribut-Provider-Computersystem bereitstellen kann und für die bisher noch von keinem zuvor angefragten Attribut-Provider-Computersystem ein entsprechendes Attribut ermittelt werden konnte. Es ist z.B. möglich, dass mehrere Attribut-Provider-Computersysteme, die dieselben Klasse(n) von Attributen bereitstellen, sequentiell so lange angefragt werden bis alle in einer bestimmten Attributspezifikation spezifizierten Attribute bereitgestellt wurden. Beispielsweise kann bei einer solchen sequentiellen Bereitstellung diejenige Teilmenge der Attributspezifikation, die bisher von keinem angefragten Attribut-Provider-Computersystem bereitgestellt werden konnte, die Teil-Attributspezifikation darstellen, für welche das im nächsten Schritt angefragte Attribut-Provider-Computersystem die darin spezifizierten Attribute ermitteln soll.

Die zweite Attributspezifikation kann je nach Ausführungsform in analoger Weise direkt vom ID-Token gelesen oder als Teilmenge der ersten Attributspezifikation durch das erste Attribut-Provider-Computersystem generiert werden.

In manchen Ausführungsvarianten kann dann die so generierte dritte Attributspezifikation auf das Token geschrieben werden falls das AP2 über entsprechende Schreibrechte verfügt.

Nach Ausführungsformen umfasst das Verfahren ferner:
- Ermittlung einer zweiten Menge von Attributen, wobei die zweite Menge aus Attributen besteht, die in der dritten Attributspezifikation spezifiziert sind;
- Durchführung eines Schreibzugriffs durch das zweite Attribut-Provider-Computersystem auf den geschützten Speicherbereich des ID-Tokens zur Speicherung der zweiten Attributmenge in dem ID-Token;
- Senden eines zweiten Bestätigungssignals von dem zweiten Attribut-Provider-Computersystem an das Nutzercomputersystem, wobei das zweite Bestätigungssignal angibt, ob die in der dritten Attributspezifikation spezifizierten Attribute vollständig ermittelt und in dem ID-Token gespeichert wurden.

Nach Ausführungsformen umfasst das Verfahren ferner:
- Zugriff des ID-Provider-Moduls auf den geschützten Speicherbereich des ID-Tokens zur Ermittlung von Attributen, die in der ersten Attributspezifikation spezifiziert sind und die bereits in dem ID-Token gespeichert vorliegen;
- Ermitteln einer Differenzattributspezifikation, die selektiv diejenigen Attribute der ersten Attributspezifikation spezifiziert, die nicht bereits in dem ID-Token gespeichert sind;
- Verwenden der Differenzattributspezifikation als die erste Attributspezifikation bei der Speicherung der ersten Attributspezifikation in dem ID-Token; und
- Ausgabe der ermittelten, in dem ID-Token gespeicherten Attribute an das Dienst-Computersystem. Die Ausgabe dieser Attribute kann z.B. zusammen mit oder separat von der Ausgabe der ersten und zweiten Attributmengen erfolgen.

Dies kann vorteilhaft sein, da in dem Fall, dass das ID-Token bereits einige Attribute gespeichert hat, diese nicht noch einmal von einem Attribut-Provider-Computersystem angefragt werden müssen. Somit kann das Verfahren beschleunigt und die zu übertragende Datenmenge reduziert werden.

Nach Ausführungsformen ist das Attribut-Provider-Verzeichnis-Computersystem (APV) dazu ausgebildet, mehrere erste Attribut-Provider-Computersysteme in Antwort auf einen Empfang des ersten Klassenidentifikators zu identifizieren. Das Nutzer-Computersystem empfängt für jedes der mehreren identifizierten ersten Attribut-Provider-Computersysteme einen ersten Identifikator, der das jeweilige erste Attribut-Provider-Computersystem identifiziert.

Das Senden des ersten Triggersignals erfolgt selektiv an dasjenige der identifizierten ersten Attribut-Provider-Computersysteme, welches hinsichtlich eines der folgenden Kriterien einen höheren Wert als die anderen identifizierten ersten Attribut-Provider-Computersysteme aufweist:
- Anzahl der in der zweiten Attributspezifikation spezifizierten Attribute, die bereitgestellt werden können;
- gewährtes Vertrauensniveau der bereitgestellten Attribute,
- Menge aktuell verfügbarer Datenverarbeitungsressourcen, z.B. Anzahl und Leistung verfügbarer CPUs, Menge des verfügbaren Arbeitsspeichers etc.
- Grad der bisher beobachteten Zuverlässigkeit und Verfügbarkeit des identifizierten ersten Attribut-Provider-Computersystems.

In analoger weise kann das Attribut-Provider-Verzeichnis-Computersystem auch mehrere zweite Attribut-Provider-Computersysteme identifizieren, die alle im Prinzip in der Lage sind, alle oder einige der Attribute einer bestimmten Attributklasse bereitzustellen. Das Nutzer-Computersystem empfängt für jedes der mehreren identifizierten zweiten Attribut-Provider-Computersysteme einen zweiten Identifikator, der das jeweilige zweite Attribut-Provider-Computersystem identifiziert. Das Senden des zweiten Triggersignals erfolgt selektiv an dasjenige der identifizierten zweiten Attribut-Provider-Computersysteme, welches hinsichtlich eines der zuvor genannten Kriterien (Vertrauensniveau, verfügbare Ressourcen, etc.) einen höheren Wert als die anderen identifizierten zweiten Attribut-Provider-Computersysteme aufweist.

Dies kann vorteilhaft sein, da die benötigte Zeit zur Bereitstellung sämtlicher Attribute, die der Dienst benötigt, dadurch deutlich verringert werden kann. Außerdem können Belastungsspitzen einzelner Attribut-Provider-Computersysteme vermieden oder reduziert werden, die erforderliche Vertrauenswürdigkeit der Attribute kann spezifisch an die Bedürfnisse eines bestimmten Dienstes angepasst werden und auch eine automatische Berücksichtigung der bisherigen Zuverlässigkeit oder Antwortzeit von angefragten Attribut-Provider-Computersystemen ist möglich.

Nach Ausführungsformen kann jedes der identifizierten ersten Attribut-Provider-Computersysteme lediglich einen Teil der in der zweiten Attributspezifikation spezifizierten Attribute bereitstellen. Das Nutzer-Computersystem veranlasst in mehreren Iterationen jeweils eines der identifizierten ersten Attribut-Provider-Computersysteme dazu, möglichst viele der in der zweiten Attributspezifikation spezifizierten Attribute bereitzustellen und in dem ID-Token zu speichern. Die zeitliche Rangfolge dieser Veranlassung kann z.B. entsprechend der oben genannten Auswahlkriterien erfolgen, sodass z.B. dasjenige Attribut-Provider-Computersystem mit der geringsten Auslastung, höchsten bisherigen Zuverlässigkeit und/oder dem höchsten Vertrauensniveau bezüglich der bereitgestellten Attribute vorrangig zur Bereitstellung von Attributen veranlasst werden. Das Nutzer-Computersystem veranlasst zudem jeweils eines der identifizierten ersten Attribut-Provider-Computersysteme dazu, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden. Beispielsweise können die Iterationen bei Erfüllung einer Abbruchbedingung auch automatisch beendet werden. Die Abbruchbedingung kann z.B. die Bereitstellung sämtlicher in der zweiten (bzw. der jeweils aktuellen) Attributspezifikation spezifizierten Attribute, Zeitüberschreitung oder Überschreitung einer Maximalzahl an Iterationen bzw. kontaktierten Attribut-Provider-Computersystemen bestehen.

Auch die Bereitstellung der in der dritten Attributspezifikation spezifizierten Attribute kann in analoger Weise iterativ mithilfe mehrerer zweiten Attribut-Provider-Computersystemen erfolgen.

Beispielsweise kann der Lesezugriff auf die erste Attributspezifikation selektiv nur durch das erste Attribut-Provider-Computersystem möglich sein, sofern dieses über die entsprechenden Leserechte bezüglich des geschützten Speicherbereichs des Tokens hat, wobei die Leserechte auch spezifisch für die Attributspezifikationen bezüglich bestimmter Attributklassen definiert sein können. Beispielsweise kann das erste Attribut-Provider-Computersystem ein Leserecht bezüglich der ersten Attributspezifikation haben, nicht jedoch bezüglich einer zweiten Attributspezifikation, sofern diese sich überhaupt schon in dem Speicher des ID-Tokens befindet.

Die Identifikation und Einbeziehung mehrerer erster und/oder zweiter Attribut-Provider-Computersysteme kann mehrere Vorteile beinhalten: zum einen wird dadurch die Ausfallsicherheit erhöht, falls z.B. eines der Attribut-Provider-Systeme aus technischen oder anderen Gründen aktuell nicht verfügbar ist, die Attribute aber von einem anderen Attribut-Provider-Computersystem bezogen werden können. Eine parallele Anforderung von Attributen bei mehreren Attribut-Provider-Computersystemen gleichzeitig hat den Vorteil, dass die Geschwindigkeit der Attributermittlung erhöht werden kann, insbesondere, wenn die jeweils angeforderten Attributmengen disjunkt sind. Eine sequentielle, iterative Anforderung von Attributen bei mehreren Attribut-Provider-Computersystemen so lange, bis alle Attribute einer bestimmten Klasse oder alle in der ersten Attributspezifikation spezifizierten Attribute ermittelt und in dem ID-Token gespeichert sind, kann vorteilhaft sein, da durch Einbeziehung einer Vielzahl von Attribut-Provider-Computersystemen eine sehr breite Palette an Attributen bereitgestellt werden kann. Dies dient auch dem Datenschutz, denn es ist nun möglich, dass einzelne Attribut-Provider nur einen sehr kleinen Ausschnitt der Attribute einer Person kennen. Beispielsweise verfügt ein Attribut-Provider-Computersystem einer Bank nur über kontobezogene Attribute, dasjenige eines Arztes des Nutzers nur über gesundheitsbezogene Attribute und ein Autoverleih nur über Attribute bezüglich Wohnort, Alter und das Vorliegen einer Fahrerlaubnis für den Nutzer. Es ist also nicht erforderlich, all diese Attribute zentral zu speichern, um dennoch Dienste anfordern zu können, die Auskunft bezüglich einer Vielzahl von Attributen unterschiedlicher Klassen verlangen (Anbieter von Leasing-Verträgen wertvoller Fahrzeugen könnten z.B. Attribute sowohl bezüglich der Fahrerlaubnis als auch bezüglich der Kreditwürdigkeit bzw. Finanzkraft einer Person verlangen).

Nach Ausführungsformen umfasst das Verfahren eine Generierung des ersten Triggersignals, z.B. durch das Nutzer-Computersystem. Die Generierung des Trigger-Signals umfasst:
- Generierung einer URL, die einen Zugriff auf das ID-Token über das Netzwerk mittels eines an das Nutzer-Computersystem gekoppeltes Lesegeräts ermöglicht, wobei die URL die Adresse des ID-Tokens beinhaltet; Beispielsweise kann die URL gemäß der PC/SC Spezifikation - "Personal Computer/Smart Card" generiert und spezifiziert werden;
- Generierung eines Requests, der an eine Anfrageschnittstelle des ersten Attributprovider-Computersystems gerichtet ist und die URL enthält; Beispielsweise kann der erste Identifikator, z.B. eine URL des ersten Attribut-Provider-Computersystems, durch das Nutzer-Computersystem dazu verwendet werden, den Request an die Anfrageschnittstelle des ersten Attributprovider-Computersystems zu adressieren und zu senden;
- Senden des Request als das erste Triggersignal an die Anfrageschnittstelle (z.B. Webservice Schnittstelle, eine remote-procedure-call Schnittstelle oder dergleichen) des ersten Attribut-Provider-Computersystem.

Beispielsweise kann das erste Attribut-Provider-Computersystem die URL in dem Request nutzen, um sich gegenüber dem in der URL spezifizierten ID-Token zu authentifizieren und nach erfolgreicher Authentifizierung die zweite Attributspezifikation aus dem ID-Token auszulesen oder durch Lesezugriff auf die erste Attributspezifikation und optional auf weitere Daten (z.B. bereits auf dem ID-Token gespeicherte Attribute oder Attribut-Metadaten) die zweite Attributspezifikation lesen oder generieren. Die URL kann genutzt werden um das Nutzer-CS zu finden, das mit einem ID-Token verbunden ist, mit welchem ein geschützter Übertragungskanal zwischen dem ersten Attribut-Provider-Computersystem und dem ID-Token aufgebaut werden kann. Dieser geschützte Übertragungskanal kann sodann dafür verwendet werden um darüber die für die zweite Attributspezifikation ermittelte Attributmenge auf dem ID-Token zu speichern.

Nach Ausführungsformen überträgt das erste Attribut-Provider-Computersystem eine erste Signaturanfrage an das ID-Token um eine digitale Signatur der zweiten Attributspezifikation zu erzeugen. Die Übertragung erfolgt über einen geschützten Datenübertragungskanal. Das ID-Token erzeugt die digitale Signatur der zweiten Attributspezifikation. Vorzugsweise handelt es sich hierbei um eine pseudonyme Signatur, was den Vorteil beinhaltet, dass die Karte nicht identifizierbar ist.

Nach manchen Ausführungsformen prüft das ID-Token, ob das erste Attribut-Provider Computersystem berechtigt ist, eine Signatur anzufordern und/oder berechtigt ist, die Durchführung der Signaturfunktion durch den Prozessor des Tokens zu triggern, und signiert die zweite (bzw. die angefragte) Attributspezifikation nur bei Vorliegen einer entsprechenden Berechtigung.

Das ID-Token übermittelt die erzeugte digitale Signatur, vorzugsweise über einen geschützten Übertragungskanal, an das erste Attribut-Provider-Computersystem. Das erste Attribut-Provider-Computersystem prüft die Signatur mit einem öffentlichen Signaturprüfschlüssel. Die Ermittlung der ersten Menge Attribute gemäß der zweiten Attributspezifikation durch das erste Attribut-Provider-Computersystem und die Speicherung der ersten Menge Attribute in dem ID-Token erfolgt nur, wenn die Prüfung ergibt, dass die digitale Signatur valide ist.

Dies kann vorteilhaft sein, wenn das Attribut-Provider-Computersystem zur Erstellung der Attribute oder für spätere Nachweise der korrekten Attributerstellung gegenüber Dritten nachweisen muss, dass wirklich eine Anfrage eines ID-Tokens vorliegt oder vorgelegen hat. Damit wird der Situation vorgebeugt, dass ein Attribut-Provider-Computersysteme unberechtigterweise Daten in Form von Attributen sammelt, die nicht von ID-Tokens erfragt wurden. Da allerdings bei diesem Vorgehen die Anonymität der Attribute leidet, wird dieses Verfahren vorzugsweise nur dann eingesetzt, wenn der Schutz vor unberechtigten Anfragen bezüglich nutzerspezifischer Attribute wichtiger ist als völlige Anonymität der Attribute.

In analoger weise kann das zweite Attribut-Provider-Computersystem eine zweite Signaturanfrage an den ID-Token übertragen um eine digitale Signatur der dritten Attributspezifikation zu erzeugen. Nach manchen Ausführungsformen prüft das ID-Token, ob das zweite Attribut-Provider Computersystem berechtigt ist, eine Signatur anzufordern und/oder berechtigt ist, die Durchführung der Signaturfunktion durch den Prozessor des Tokens zu triggern, und signiert die dritte (bzw. die angefragte) Attributspezifikation nur bei Vorliegen einer entsprechenden Berechtigung.

Das ID-Token übermittelt die erzeugte digitale Signatur an das zweite Attribut-Provider-Computersystem. Das zweite Attribut-Provider-Computersystem prüft die Signatur mit einem öffentlichen Signaturprüfschlüssel. Die Ermittlung der zweiten Menge Attribute gemäß der dritten Attributspezifikation durch das zweite Attribut-Provider-Computersystem und die Speicherung der zweiten Menge Attribute in dem ID-Token erfolgt nur, wenn die Prüfung ergibt, dass die digitale Signatur valide ist.

Nach manchen Ausführungsformen ist in dem geschützten Speicherbereich des ID-Tokens für jedes der Attribut-Provider-Computersysteme ein eigener privater Signierschlüssel gespeichert, der einem der Attribut-Provider-Computersysteme zugeordnet ist. Jedes der Attribut-Provider-Computersysteme hat Zugriff auf einen öffentlichen Signaturprüfschlüssel, welcher mit dem privaten Signierschlüssel, der dem Attributprovider-Computersystem zugeordnet ist, ein asymmetrisches kryptographisches Schlüsselpaar ausbildet. Der öffentliche Signaturprüfschlüssel ist dazu ausgebildet, eine von dem korrespondierenden privaten Signierschlüssel generierte digitale Signatur auf deren Validität hin zu überprüfen.

Nach Ausführungsformen ist die Kommunikationsschnittstelle des ID-Token zur drahtlosen Kommunikation und zur drahtlosen Einkopplung von Energie in den ID-Token durch das Lesegerät ausgebildet, um den ID-Token mit der für seinen Betrieb erforderlichen elektrischen Energie zu versorgen. Der ID-Token weist einen flüchtigen elektronischen Speicher auf, in dem die zweite und dritte Attributspezifikation gespeichert werden, sodass die zweiten Attributspezifikationen aus dem flüchtigen elektronischen Speicher gelöscht werden, wenn der ID-Token aus der Reichweite des Lesegeräts entfernt wird. Nach Ausführungsformen werden sämtliche im Zuge einer Dienstanforderung von dem Dienst bezüglich des Nutzers generierten (ersten, zweiten, dritten, etc.) Attributspezifikationen ausschließlich in dem flüchtigen Speicher des ID-Token gespeichert.

Ein neuer Protokollablauf ist in diesem Fall zu starten falls das Token vor Bereitstellung aller angeforderten Attribute aus der Reichweite des Lesegeräts entfernt wird. Hierdurch wird vermieden, dass sich der ID-Token in einem undefinierten Zustand befindet, wenn zum Beispiel das Token nach Speicherung der zweiten Attributspezifikation aus der Reichweite des Lesegeräts entfernt wird, um eventuelle Missbrauchsmöglichkeiten hierdurch zu unterbinden.

Die aufgrund des Schreibzugriffs der ersten und zweiten Attribut-Provider-Computersysteme in dem ID-Token gespeicherten ersten und zweiten Mengen der Attribute werden in dem nichtflüchtigen elektronischen Speicher gespeichert, sodass auf diese durch einen nachfolgenden weiteren Lesezugriff aufgrund einer weiteren Dienstanforderung zugegriffen werden kann.

Alternativ dazu werden die zweiten und dritten Attributspezifikationen und die erste und zweite Menge der Attribute in dem nicht-flüchtigen Speicher gespeichert. Wird die zweite Attributspezifikation in den nicht-flüchtigen elektronischen Speicher geschrieben, bleibt auch nach Entfernung des ID-Tokens aus der Reichweite des Lesegeräts die zweite Attributspezifikation im Speicher erhalten.

Nach Ausführungsformen erstellt das ID-Token Signaturen über Attributspezifikationen nur dann, wenn der Nutzer dieser Signatur durch eine PIN-Eingabe zugestimmt hat. In diesem Fall fordert das Lesegerät oder das Nutzer-Computersystem den Nutzer zur Eingabe einer Signatur-PIN für die Freischaltung einer Signaturfunktion des ID-Tokens für die Erzeugung einer digitalen Signatur der zweiten Attributspezifikation und/oder dritten Attributspezifikation auf.

Nach Ausführungsformen erfolgt die Aufforderung zur Eingabe einer Signatur-PIN aufgrund einer ersten Anfrage zur PIN-Eingabe, die das erste Attribut-Provider-Computersystem an den ID-Token (über den geschützten Übertragungskanal) übertragen hat.

In analoger weise kann gemäß manchen Ausführungsformen der Erfindung das zweite Attribut-Provider-Computersystem eine zweite Anfrage zur PIN-Eingabe an das ID-Token übertragen.

Nach Ausführungsformen umfasst das Verfahren ferner einen Aufbau einer ersten Session zwischen dem Nutzer-Computersystem und dem ersten Attribut-Provider-Computersystem. Diese erste Session wird z.B. für die Übertragung des ersten Triggers (beinhaltend die Adressdaten des ID-Tokens) vom Nutzer-Computersystem an das erste Attribut-Provider-Computersystem verwendet. In analoger Weise kann das Verfahren ferner einen Aufbau einer zweiten Session zwischen dem Nutzer-Computersystem und dem zweiten Attribut-Provider-Computersystem beinhalten. Diese zweite Session wird z.B. für die Übertragung des zweiten Triggers (beinhaltend die Adressdaten des ID-Tokens) vom Nutzer-Computersystem an das zweite Attribut-Provider-Computersystem verwendet.

Die Übermittlung der Trigger zur Übertragung der Token-Adressdaten an die jeweiligen Attribut-Provider-Computersysteme kann z.B. parallel erfolgen, was die Geschwindigkeit des Verfahrens erhöht. In analoger Weise kann das Auslesen (oder Generieren) der zweiten und dritten Attributspezifikation durch das erste und zweite Attribut-Provider-Computersystem parallel erfolgen. Dies kann insbesondere dann vorteilhaft sein, wenn die zweite und dritte Attributspezifikation disjunkte Attributmengen spezifizieren.

Die Übermittlung der Trigger (und/oder das Auslesen bzw. Generieren der zweiten und dritten Attributspezifikation) kann in anderen Ausführungsformen jedoch auch sequenziell erfolgen, was insbesondere dann von Vorteil sein kann, wenn die dritte (bzw. zuletzt erstellte) Attributspezifikation nur noch diejenigen Attribute spezifiziert, die in der zweiten (bzw. der im vorhergehenden Auslesezyklus erstellten) Attributspezifikation spezifiziert sind aber von dem ersten Attribut-Provider-Computersystem (bzw. allen zuvor angefragten Attribut-Provider-Computersystemen) nicht bereitgestellt werden konnten. Dies ermöglicht ggf. ein automatisches Beenden der sequentiellen Bereitstellung von Attributen durch die Attribut-Provider-Computersysteme, sobald alle in der ersten Attributspezifikation spezifizierten Attribute auf dem ID-Token gespeichert wurden.

Beispielsweise empfängt das erste Attribut-Provider-Computersystem ein erstes Bestätigungssignal, z.B. über den geschützten Übertragungskanal zwischen dem ersten Attribut-Provider-Computersystem und dem Nutzer-Computersystem im Kontext der ersten Session. Das erste Bestätigungssignal signalisiert das Einverständnis des Nutzers mit der Weiterleitung der signierten oder unsignierten zweiten Attributspezifikation an das erste Attribut-Provider-Computersystem. Zusätzlich oder alternativ dazu empfängt das zweite Attribut-Provider-Computersystem (z.B. über den geschützten Übertragungskanal zwischen dem zweiten Attribut-Provider-Computersystem und dem Nutzer-Computersystem im Kontext der zweiten Session) ein zweites Bestätigungssignal, welches das Einverständnis des Nutzers mit der Weiterleitung der signierten oder unsignierten dritten Attributspezifikation an das zweite Attribut-Provider-Computersystem signalisiert.

Dies kann vorteilhaft sein, da der Benutzer für jede einzelne der Attributspezifikationen bzw. für jedes der ermittelten Attribut-Provider-Computersysteme individuell entscheiden kann, ob die Attributspezifikation wirklich an das aktuell ermittelte Attribut-Provider-Computersystem weitergeleitet werden soll. Dies erhöht den Datenschutz, da bereits eine Attributspezifikation, z.B. eine Spezifikation, dass eine Schufa-Auskunft eingeholt werden soll, eine sehr sensible Information darstellen kann, auch wenn das Attribut selbst (also das Ergebnis der Schufa-Auskunft) gar nicht übertragen wird.

Nach Ausführungsformen wird das Auslesen der zweiten Attributspezifikation durch das erste Attribut-Provider-Computersystem durch die Durchführung eines von zwei Verfahren a) oder b) ermöglicht.

### Verfahren a) umfasst:

- Aufteilung der ersten Attributspezifikation durch das Dienst-Computersystem in mehrere weitere Attributspezifikationen, die jeweils nur diejenigen Attribute der ersten Attributspezifikation spezifizieren, die einer gemeinsamen Attributklasse angehören; und
- Senden der weiteren Attributspezifikation von dem Dienst-Computersystem an das ID-Provider-Modul, wobei die Durchführung des Schreibzugriffs des ID-Provider-Moduls auf den ID-Token ein Schreiben der weiteren Attributspezifikationen in dem geschützten Speicherbereich des ID-Tokens umfasst. Die weiteren Attributspezifikationen können z.B. die zweite und dritte Attributspezifikation beinhalten.

Dies hat den Vorteil, dass das Attribut-Provider-Computersystem die jeweils relevante Attributspezifikation sofort aus dem ID-Token auslesen kann. Dies kann das Verfahren beschleunigen, insbesondere falls die maximal mögliche Lesegeschwindigkeit von auf dem ID-Token gespeicherten Daten oder die Prozessorkapazität des Attribut-Provider-Computersystems gering ist.

### Verfahren b) umfasst:

- Im Zuge des Lesezugriffs des ersten Attribut-Provider-Computersystems auf den geschützten Speicherbereich des ID-Tokens, Auswertung des in dem ID-Token gespeicherten ersten Attributspezifikation durch das erste Attribut-Provider Computersystem um diejenigen in der ersten Attributspezifikation spezifizierten Attribute zu identifizieren, welche einer Attributklasse angehören, zu deren Bereitstellung das erste Attribut-Provider-Computersystem ausgebildet ist;
- Generierung einer zweiten Attributspezifikation durch das erste Attribut-Provider-Computersystem, wobei die zweite Attributspezifikation selektiv die identifizierten Attribute spezifiziert;
- Schreiben der generierten zweiten Attributspezifikation auf den geschützten Speicherbereich des ID-Tokens durch das erste Attribut-Provider-Computersystem.

Dies kann insbesondere dann vorteilhaft sein, wenn die Attributmengen verschiedener Attributklassen überlappend sind und/oder wenn das Verfahren iterativ unter Einbeziehung mehrerer Attribut-Provider-Computersysteme für die gleiche Attributklasse erfolgt. Um hier eine Doppel-Bereitstellung von Attributen zu vermeiden, kann es vorteilhaft zu sein, diejenigen Attribute zu ermitteln, die nicht bereits von zuvor angefragten Attribut-Provider-Computersystemen bereitgestellt werden konnten.

Optional kann in beiden Verfahren a) und b) zusätzlich die Speicherung der zweiten Attributspezifikation in dem geschützten Speicherbereich des ID-Tokens erfolgen. Falls die in der zweiten Attributspezifikation spezifizierten Attribute in einem iterativen Verfahren durch mehrere erste Attribut-Provider-Computersysteme ermittelt werden, wird in jeder Iteration eine neue Version der zweiten Attributspezifikation, die selektiv diejenigen Attribute der vorhergehenden Version der zweiten Attributspezifikation beinhaltet, die nicht ermittelt wurden, in dem ID-Token gespeichert.

Die Authentifizierung des ID-Provider-Moduls gegenüber dem ID-Token kann z.B. mithilfe eines Berechtigungszertifikats des ID-Provider-Moduls erfolgen. In dem Berechtigungszertifikat können Leserechte des ID-Provider-Moduls zum Lesen von Attributen aus dem ID-Token spezifiziert sein. Der ID-Token führt für die Lesezugriffe des ID-Provider-Moduls eine Prüfung der Leseberechtigung des ID-Provider-Moduls mithilfe des Berechtigungszertifikats durch.

Zusätzlich können in dem Berechtigungszertifikat Schreibrechte des ID-Provider-Moduls zum Schreiben der ersten, zweiten und/oder dritten Attributspezifikation in dem ID-Token spezifiziert sein. Der ID-Token führt für Schreibzugriffe des ID-Provider-Moduls eine Prüfung der Schreibberechtigung des ID-Provider-Moduls mithilfe des Berechtigungszertifikats durch.

Dies kann vorteilhaft sein, da somit sichergestellt werden kann, dass nur vertrauenswürdige und berechtigte ID-Provider-Module schreibend auf den Speicher zugreifen darf um diejenigen Attribute zu spezifizieren, die letztlich an den Dienst kommuniziert werden.

Nach Ausführungsformen erfolgt die Authentifizierung des ersten Attribut-Provider-Computersystems gegenüber dem ID-Token mithilfe eines Berechtigungszertifikats des ersten Attribut-Provider-Computersystems. In dem Berechtigungszertifikat sind Leserechte des ersten Attribut-Provider-Computersystems zum Lesen der ersten und/oder zweiten Attributspezifikation aus dem ID-Token spezifiziert. Der ID-Token führt für den Lesezugriff des ersten Attribut-Provider-Computersystems eine Prüfung der Leseberechtigung des ersten Attribut-Provider-Computersystems mithilfe des Berechtigungszertifikats durch.

In dem Berechtigungszertifikat sind auch Schreibrechte des ersten Attribut-Provider-Computersystems zum Schreiben der ersten Menge der Attribute in dem ID-Token spezifiziert. Der ID-Token führt für den Schreibzugriff des ID ersten Attribut-Provider-Computersystems eine Prüfung der Schreibberechtigung des ersten Attribut-Provider-Computersystems mithilfe des Berechtigungszertifikats durch.

In manchen Ausführungsformen hat das erste Attribut-Provider-Computersystem Leserechte zum Lesen der ersten Attributspezifikation, um daraus die zweite Attributspezifikation (also eine Spezifikation derjenigen Attribute, die es selbst bereitstellen kann oder zu einer bestimmten Attributklasse gehören) und/oder einer dritten Attributspezifikation (z.B. eine Spezifikation aller noch fehlenden und von dem ersten Attribut-Provider-Computersystem nicht bereitstellbaren Attribute) zu generieren und Schreibrechte zum Schreiben der zweiten und ggf. weiterer Attributspezifikationen in dem geschützten Speicherbereich des ID-Tokens. Es hat auch Rechte zum Schreiben von Attributen die in der zweiten Attributspezifikation spezifiziert sind, hat aber z.B. keine Rechte zum Lesen von anderen in dem ID-Token gespeicherten Attributen.

In manchen Ausführungsformen besitzt kein Attribut-Provider-Computersystem Rechte zum Lesen von nutzerbezogenen Attributen aus dem ID-Token. Es kann lediglich (manche oder alle) Attributspezifikationen lesen und die selbst bereitgestellten Attribute in den ID-Token schreiben. Dies kann den Datenschutz erhöhen. In anderen Ausführungsformen haben Attribut-Provider-Computersysteme durchaus Leserechte für auf dem ID-Token gespeicherte Attribute, z.B. um noch nicht ermittelte Attribute einer Attributspezifikation identifizieren zu können.

Die Prüfung von Lese- und Schreibrechten kann z.B. attributklassenspezifisch erfolgen. Jeder ermittelten Attributklasse kann z.B. ein Bereich, auch "Sektor" genannt, auf dem geschützten Speicherbereich des ID-Tokens zugewiesen sein. Das Berechtigungszertifikat kann das Attribut-Provider-Computersystem beispielsweise selektiv zum Schreiben von Attributen einer bestimmten Attributklasse auf einen bestimmten, attributklassenspezifischen Sektor des Speicherbereichs des ID-Tokens berechtigen, wohingegen die Attributspezifikationen in einem anderen Sektor gespeichert werden, auf welchen alle Attribut-Provider-Computersysteme lesend zugreifen können. Alternativ dazu können beispielsweise auch klassenspezifische Attributspezifikationen selektiv auf einem der klassenspezifischen Sektoren gespeichert sein, sodass Attribut-Provider-Computersysteme nur die Attributspezifikationen einsehen und lesen können, die zu einer bestimmten Attributklasse gehören, die von diesem Attribut-Provider-Computersystem auch bereitgestellt werden kann. Dies hat den Vorteil des erhöhten Datenschutzes.

Nach Ausführungsformen enthält der geschützte Speicherbereich des ID-Token mehrere Unterbereiche. Jeder der Unterbereich ist einer der Attributklassen spezifisch zugeordnet. Der ID-Token ermöglicht einen lesenden und/oder schreibenden Zugriff des ersten Attribut-Provider-Computersystems auf einen der Unterbereiche nur dann, wenn das Berechtigungszertifikat des ersten Attribut-Provider-Computersystems einen Nachweis einer Lese- und/oder Schreibberechtigung für diesen Unterbereich beinhaltet. Das Berechtigungszertifikat des ersten Attribut-Provider-Computersystems räumt dem ersten Attribut-Provider-Computersystem eine Berechtigung zum Lesen und/oder Schreiben nur auf denjenigen der Unterbereiche ein, welchem diejenige Attributklasse zugewiesen ist, zu deren Bereitstellung der erste Attribut-Provider ausgebildet ist. Der ID-Token ermöglicht einen schreibenden Zugriff des ersten Attribut-Provider-Computersystems auf den einen Speicherbereich zur Speicherung der ersten Attributmenge nur dann, wenn das Berechtigungszertifikat des ersten Attribut-Provider-Computersystems einen Nachweis einer Schreibberechtigung für diesen Speicherbereich beinhaltet.

Das Berechtigungszertifikat wird beispielsweise von einem (ersten oder zweiten) Attribut-Provider-Computersystem an das ID-Token übermittelt, z.B. im Zuge der Authentifizierung des Attribut-Provider-Computersystems gegenüber dem ID-Token. Das Berechtigungszertifikat kann als CVC Zertifikat (card verifiable certificate) ausgebildet sein. Das Attribut-Provider-Computersystem kann nach Ausführungsformen auf alle Speicherbereiche zugreifen um "seine" (z.B. die zweite oder dritte) Attributspezifikation zu lesen, es kann aber nur auf "seinen" Sektor schreiben um neue Versionen der Attributspezifikation und/oder die ermittelten Attribute zu schreiben.

Nach anderen Ausführungsformen besitzt das Attribut-Provider-Computersystem keine Leserechte auf die Attribut-Spezifikationen anderer Attribut-Provider-Computersysteme.

Nach Ausführungsformen werden vor der Speicherung von Attributen in dem ID-Token die zu schreibenden Attribute auf einem Display des ID-Tokens, des Lesegeräts oder des Nutzer-Computersystems angezeigt. Die zu schreibenden Attribute werden vorzugsweise erst nach Eingabe einer Bestätigung durch den Nutzer durch Betätigung eines Bedienelements des ID-Tokens, des Lesegeräts bzw. des Nutzer-Computersystems in den nichtflüchtigen elektronischen Speicher geschrieben werden. Das Bedienelement kann z.B. ein mechanischer Schalter oder ein auswählbares graphisches Element einer graphischen Benutzerschnittstelle, z.B. ein Button oder Link, sein.

Bei dem ID-Token kann es sich z.B. um ein Wert- oder Sicherheitsdokument handelt, insbesondere ein Ausweisdokument, das heißt ein ID-Dokument, insbesondere einen elektronischen Personalausweis, Reisepass, Führerschein,
Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.

Nach Ausführungsformen wird die erste Attributspezifikation von dem ID-Provider-Modul an das ID-Token über einen ersten geschützten Übertragungskanal übertragen. Die erste Attributmenge und/oder die zweite Attributspezifikation werden zwischen dem ersten Attribut-Provider-Computersystem und dem ID-Token über einen zweiten geschützten Übertragungskanal kommuniziert. Die zweite Attributmenge und/oder die dritte Attributspezifikation werden zwischen dem zweiten Attribut-Provider-Computersystem und dem ID-Token über einen dritten geschützten Übertragungskanal kommuniziert. Das Nutzer-Computersystem die Kommunikation zwischen dem ID-Token und dem ID-Provider-Modul, dem ersten und den zweiten Attribut-Provider-Computersystem koordiniert. Dies kann z.B. dadurch erfolgen, dass das Nutzer-Computersystem anhand der Bestätigungssignale feststellt, ob und wann ein aktuell angefragtes Attribut-Provider-Computersystem alle von diesem angefragten Attribute erfolgreich auf dem ID-Token gespeichert hat. In diesem Fall kann der geschützte Übertragungskanal zu diesem Attribut-Provider-Computersystem geschlossen oder inaktiv gesetzt werden und eine gegenseitige Authentifizierung eines weiteren Attribut-Provider-Computersystems mit dem ID-Token sowie im Anschluss daran ein Aufbau eines geschützten Übertragungskanals zwischen dem weiteren Attribut-Provider-Computersystem und dem ID-Token initialisiert werden. Daten, die über den ersten, zweiten oder dritten geschützten Übertragungskanal übertragen werden, sind hierbei vor dem Zugriff des Nutzer-Computersystems geschützt.

In einem weiteren Aspekt betrifft die Erfindung ein ID-Token. Der ID-Token kann einem Nutzer zugeordnet sein. Der ID-Token weist einen elektronischen Speicher mit einem geschützten Speicherbereich auf, in dem Attribute gespeichert sind, wobei ein Zugriff auf den geschützten Speicherbereich nur über einen Prozessor des ID-Tokens möglich ist. Der ID-Token weist eine Kommunikationsschnittstelle zur Kommunikation mit einem Lesegerät eines Nutzer-Computersystems auf, wobei das Nutzer-Computersystem an ein ID-Provider-Modul über ein Netzwerk gekoppelt ist. Wobei der ID-Token zur Durchführung der folgenden Schritte konfiguriert ist:
- gegenseitige Authentifizierung des ID-Provider-Moduls und des ID-Tokens in Interoperation mit dem ID-Provider-Modul;
- Aufbau eines ersten geschützten Übertragungskanals mit Ende-zu-Ende-Verschlüsselung zwischen dem ID-Token und dem ID-Provider-Modul über das Netzwerk;
- Empfang einer ersten Attributspezifikation von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
- gegenseitige Authentifizierung des ersten Attribut-Provider-Computersystems und des ID-Tokens;
- nach gegenseitiger Authentifizierung des ersten Attribut-Provider-Computersystems und des ID-Tokens, Prüfung eines Attribut-Provider-Computersystem-spezifischen Berechtigungszertifikats des ersten Attribut-Provider-Computersystems um festzustellen, ob das erste Attribut-Provider-Computersystem zum Lesezugriff auf den geschützten Speicherbereich zum Lesen einer zweiten Attributspezifikation berechtigt ist; eine Berechtigung zu diesem Lesezugriff kann eine Berechtigung zum Auslesen der gespeicherten zweiten Attributspezifikation beinhalten oder ein Lesen der ersten Attributspezifikation zur dynamischen Generierung der zweiten Attributspezifikation;
- Falls das erste Attribut-Provider-Computersystem zum Lesen einer Attributspezifikation berechtigt ist, Erlaubnis des Lesezugriffs des ersten Attribut-Provider-Computersystems auf den geschützten Speicherbereich des ID-Tokens zum Auslesen und/oder Generierung der zweiten Attributspezifikation, wobei die zweite Attributspezifikation eine Menge derjenigen Attribute der ersten Attributspezifikation spezifiziert, welche einer Attributklasse angehören, zu deren Bereitstellung das erste Attribut-Provider-Computersystem ausgebildet ist;
- Falls das erste Attribut-Provider-Computersystem zum Schreiben von Attributen in den geschützten Speicherbereich des ID-Tokens berechtigt ist, Erlaubnis des Schreibzugriffs des ersten Attribut-Provider-Computersystems auf den geschützten Speicherbereich zur Speicherung einer ersten Attributmenge in dem ID-Token, wobei die erste Menge aus Attributen besteht, die in der zweiten Attributspezifikation spezifiziert sind und von dem ersten Attribut-Provider-Computersystem ermittelt wurden.

Die Verwendung eines Attribut-Provider-Computersystem-spezifischen Berechtigungszertifikats kann vorteilhaft sein, da eine Vielzahl von Attributen über ein vereinheitlichtes Verfahren bereitgestellt werden können, die nicht durch einen einzigen Attributprovider zentral vorgehalten werden müssen, sondern vielmehr von einer Vielzahl unterschiedlicher Attribut-Provider unabhängig voneinander verwaltet und bereitgestellt werden können. Dies reduziert die Probleme, die bei der Verwendung eines einzelnen zentralen Attribut-Provider-Systems häufig auftreten, nämlich das Problem, dass die zentral gespeicherten Attribute oftmals veraltet sind, weil die Übermittlung aktualisierter Attribute (Änderungen der Kreditwürdigkeit, der Wohnadresse, der Erlaubnis zum Führen eines Fahrzeugs etc.) oftmals nur zeitverzögert, unvollständig oder aus Datenschutzgründen überhaupt nicht von behördlichen Zweigstellen oder privaten Stellen an einen zentralen Server übermittelt werden. Erfindungsgemäß wird gar nicht erst der Versuch gemacht, alle Attribute eines Nutzers, die für Dienste möglicherweise relevant sind, zentral zu speichern. Vielmehr wird ein einheitliches Verfahren bereitgestellt, dass die Bereitstellung dezentral und verteilt gespeicherter Attribute an einen Dienst ermöglicht, und das in einer möglichst effizienten Weise, die dem Nutzer möglichst hohen Schutz bezüglich der Anonymität seiner Daten bzw. bezüglich des angefragten Dienstes bietet.

Nach Ausführungsformen ist der ID-Token dazu ausgebildet, sich mit einer Vielzahl von Attribut-Provider-Computersystemen, die jeweils zur Bereitstellung von Attributen einer bestimmten Attributklasse ausgebildet sind, gegenseitig zu authentifizieren. Der ID-Token empfängt hierbei von dem sich authentifizierenden Attribut-Provider-Computersystemen ein Attribut-Provider-Computersystemen-spezifisches Berechtigungszertifikat. Der ID-Token ist dazu konfiguriert, einen Lesezugriff zum Lesen einer Attributspezifikation von dem geschützten Speicherbereich und/oder einen Schreibzugriff zum Schreiben von Attributen in den geschützten Speicherbereich nur dann zu erlauben, falls das Berechtigungszertifikat diesen Lese- und /oder Schreibzugriff erlaubt.

Vorzugsweise ist die Kommunikationsschnittstelle des ID-Token zur drahtlosen Kommunikation und zur drahtlosen Einkopplung von Energie in den ID-Token durch das Lesegerät ausgebildet, um den ID-Token mit der für seinen Betrieb erforderlichen elektrischen Energie zu versorgen. Der ID-Token weist einen flüchtigen elektronischen Speicher auf.

Der ID-Token ist so konfiguriert, dass die zweite Attributspezifikation in dem flüchtigen elektronischen Speicher gespeichert wird, sodass die zweite Attributspezifikation aus dem flüchtigen elektronischen Speicher gelöscht wird, wenn der ID-Token aus der Reichweite des Lesegeräts entfernt wird. Die aufgrund des Schreibzugriffs des ersten Attribut-Provider-Computersystems in dem ID-Token gespeicherten Attribute werden in dem nichtflüchtigen elektronischen Speicher gespeichert, sodass auf diese durch einen nachfolgenden weiteren ersten Lesezugriff aufgrund einer weiteren Dienstanforderung zugegriffen werden kann.

In einem weiteren Aspekt betrifft die Erfindung ein Attribut-Provider-Computersystem mit einer Netzwerk-Schnittstelle (138) zum Zugriff auf einen ID-Token über ein Netzwerk. Das Attribut-Provider-Computersystem ist zur Durchführung der folgenden Schritte konfiguriert:
- Empfang eines ersten Triggersignals T1 von einem Nutzer-Computersystem, wobei das erste Triggersignal frei ist von einer ersten Attributspezifikation und frei ist von Teilen der ersten Attributspezifikation, wobei die erste Attributspezifikation diejenigen Attribute spezifiziert, die ein Dienst-Computersystem zur Erbringung eines von dem Nutzer-Computersystem angeforderten Dienstes benötigt, wobei das erste Triggersignal eine Adresse des ID-Tokens beinhaltet;
- in Antwort auf Empfang des ersten Triggersignals, Initialisierung einer gegenseitigen Authentifizierung des ersten Attribut-Provider-Computersystems und des ID-Tokens durch das erste Attribut-Provider-Computersystem unter Verwendung der Adresse des ID-Tokens;
- nach gegenseitiger Authentifizierung des ersten Attribut-Provider-Computersystems und des ID-Tokens, Lesezugriff des ersten Attribut-Provider-Computersystems auf den geschützten Speicherbereich des ID-Tokens zum Auslesen und/oder Generierung einer zweiten Attributspezifikation (AR1), wobei die zweite Attributspezifikation eine Menge derjenigen Attribute der ersten Attributspezifikation spezifiziert, welche der Attributklasse angehören, zu deren Bereitstellung das erste Attribut-Provider-Computersystem ausgebildet ist;
- Ermittlung einer ersten Menge von Attributen, wobei die erste Menge aus Attributen besteht, die in der zweiten Attributspezifikation spezifiziert sind;
- Durchführung eines Schreibzugriffs durch das erste Attribut-Provider-Computersystem auf den geschützten Speicherbereich des ID-Tokens zur Speicherung der ersten Attributmenge in dem ID-Token;
- Senden eines ersten Bestätigungssignals von dem ersten Attribut-Provider-Computersystem an das Nutzercomputersystem, wobei das erste Bestätigungssignal angibt, ob die in der zweiten Attributspezifikation spezifizierten Attribute vollständig ermittelt und in dem ID-Token gespeichert wurden.

Das Attribut-Provider-Computersystem kann ferner zur Durchführung der folgenden Schritte konfiguriert sein:
- Übertragung einer Signaturanfrage an den ID-Token, die zweite Attributspezifikation digital zu signieren,
- wobei das Auslesen oder Generieren der zweiten Attributspezifikation ein Lesen einer Signatur der zweiten Attributspezifikation umfasst;
- Durchführung einer Signaturprüfung der Signatur der zweiten Attributspezifikation;
- wobei die in der gelesenen oder generierten zweiten Attributspezifikation spezifizierten Attribute nur dann von dem ersten Attribut-Provider-Computersystem ermittelt und in dem ID-Token gespeichert werden, wenn die Signaturprüfung ergibt, dass die Signatur der zweiten Attributspezifikation valide ist. Validität kann hier bedeuten, dass ein Nachweis erbracht wurde, dass die zweite Attributspezifikation von einem bestimmten Dienst auch tatsächlich angefordert wurde (zum Zwecke der Beweisführung gegenüber Dritten).

Nach Ausführungsformen besitzt das Attribut-Provider-Computersystem ein Berechtigungszertifikat zur Authentifizierung gegenüber dem ID-Token. In dem Berechtigungszertifikat sind Rechte des Attribut-Provider-Computersystems zum Lesen der zweiten Attributspezifikation aus dem ID-Token und zum Schreiben von Attributen in den ID-Token spezifiziert.
- wobei das Berechtigungszertifikat optional Rechte des Attribut-Provider-Computersystems zum Schreiben von weiteren Versionen der Attributspezifikation beinhaltet;
- wobei vorzugsweise die Lese- und oder Schreibberechtigung sich selektiv nur auf einen Unterbereich des Speicherbereichs des ID-Tokens bezieht, der einer Attributklasse zugewiesen ist, zu deren Bereitstellung das Attribut-Provider-Computersystem ausgebildet ist; und/oder
- vorzugsweise das Attribut-Provider-Computersystem nicht zum Lesen von Attributen aus dem ID-Token berechtigt ist; und/oder
- wobei vorzugsweise die Lese- und oder Schreibberechtigung sich selektiv nur auf einen Unterbereich des Speicherbereichs des ID-Tokens bezieht, der einer Attributklasse zugewiesen ist, zu deren Bereitstellung das Attribut-Provider-Computersystem ausgebildet ist.

In einem weiteren Aspekt betrifft die Erfindung ein Nutzer-Computersystem, das mit einem ID-Provider-Modul und mit einem Dienst-Computersystem über ein Netzwerk verbunden ist. Das Nutzer-Computersystem beinhaltet ein Lesegerät zum Zugriff auf einen geschützten Speicherbereich eines ID-Tokens. Ein Zugriff auf den geschützten Speicherbereich ist nur über einen Prozessor des ID-Tokens möglich. Der ID-Token weist eine Kommunikationsschnittstelle zur Kommunikation mit dem Lesegerät auf. Das ID-Token ist dazu konfiguriert, einen ersten geschützten Übertragungskanal mit dem ID-Provider-Modul auszubilden. Das Nutzer-Computersystem ist zur Durchführung der folgenden Schritte ausgebildet:
- Senden einer Dienstanforderung des Nutzers von dem Nutzer-Computersystem über ein Netzwerk an ein Dienst-Computersystem, welches mit einem ID-Provider-Modul gekoppelt ist;
- In Antwort auf das Senden der Dienstanforderung:
   ∘ Einleiten einer gegenseitigen Authentisierung des Dienst-Computersystems und des ID-Tokens unter Aufbau eines geschützten Übertragungskanals zur Ermöglichung der Speicherung einer ersten Attributspezifikation durch das Dienst-Computersystem in dem ID-Token über den geschützten Übertragungskanal, wobei die erste Attributspezifikation diejenigen Attribute spezifiziert, die das Dienst-Computersystem zur Erbringung des mit der Dienstanforderung angeforderten Dienstes benötigt;
   ∘ Empfang der Klassenidentifikatoren von dem Dienst-Computersystem;
   ∘ Senden der empfangenen Klassenidentifikatoren an ein Attribut-Provider-Verzeichnis-Computersystem, und
   ∘ Empfang von ein oder mehreren Identifikatoren für jeden der gesendeten Klassenidentifikatoren, wobei jeder der Identifikatoren ein Attribut-Provider-Computersystem identifiziert, welches dazu ausgebildet ist, nutzerbezogene Attribute der durch den Klassenidentifikator identifizierten Attributklasse bereitzustellen;
- in Antwort auf den Empfang der Identifikatoren, Verwenden eines ersten der Identifikatoren, um eine Adresse eines ersten der Attribut-Provider-Computersysteme zu identifizieren; und Senden eines ersten Triggersignals von dem Nutzer-Computersystem an die identifizierte Adresse des ersten Attribut-Provider-Computersystems, wobei das erste Triggersignal frei ist von der ersten Attributspezifikation und frei ist von Teilen der ersten Attributspezifikation, wobei das erste Triggersignal eine Adresse des ID-Tokens beinhaltet;
- Empfang eines ersten Bestätigungssignals von dem ersten Attribut-Provider-Computersystem durch das Nutzercomputersystem, wobei das erste Bestätigungssignal angibt, ob die in der zweiten Attributspezifikation spezifizierten Attribute vollständig von dem ersten Attribut-Provider-Computersystem ermittelt und in dem ID-Token gespeichert wurden. In Abhängigkeit vom Inhalt dieses Signals können weitere Schritte ausgeführt werden, z.B. das Senden einer Nachricht an das ID-Provider-Modul, dass gemäß aller erhaltenen Bestätigungssignale nun alle in der ersten Attributspezifikation spezifizierten Attribute in dem ID-Token gespeichert sind und von dem ID-Provider-Modul ausgelesen werden können.

Nach Ausführungsformen ist der ID-Token frei von einer software- oder hardwarebasierten Programmlogik, die dazu ausgebildet ist, in Abhängigkeit vom Inhalt des geschützten Speicherbereiches den Aufbau neuer oder die Aktivierung bestehender Kommunikationskanäle zu dem Nutzer-Computersystem, dem ID-Provider-Modul, dem APV-Computersystem und/oder einem AP-Computersystem zu initiieren. Dennoch können auch diese ID-Token verwendet werden, da die Protokollumsetzung wie beschrieben durch die Interaktion anderer Komponenten (Nutzer-CS, Dienst-CS, AP, APV ermöglicht wird).

In einem weiteren Aspekt betrifft die Erfindung ein Computersystem mit einem ID-Token gemäß einer der hier beschriebenen Ausführungsformen, mit einem ersten und einem zweiten Attribut-Provider-Computersystem gemäß einer der hier beschriebenen Ausführungsformen, mit einem Nutzer-Computersystem gemäß einer der hier beschriebenen Ausführungsformen und mit einem ID-Provider-Modul.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2A: ein Blockdiagramm einer Ausführungsform eines erfindungsgemäßen Computersystems unter Berücksichtigung der ausgetauschten Daten,
- Figur 2B: ein Blockdiagramm einer alternativen Ausführungsform eines erfindungsgemäßen Computersystems,
- Figur 3: ein Flussdiagramm einer Ausführungsform eines erfindungsgemäßen Verfahrens mit zumindest einem Attribut-Provider-Computersystem,
- Figur 4: ein UML-Diagramm einer Ausführungsform eines erfindungsgemäßen Verfahrens.

Elemente der nachfolgenden Ausführungsformen, die einander gleichen oder einander entsprechen, sind jeweils mit identischen Bezugszeichen gekennzeichnet.

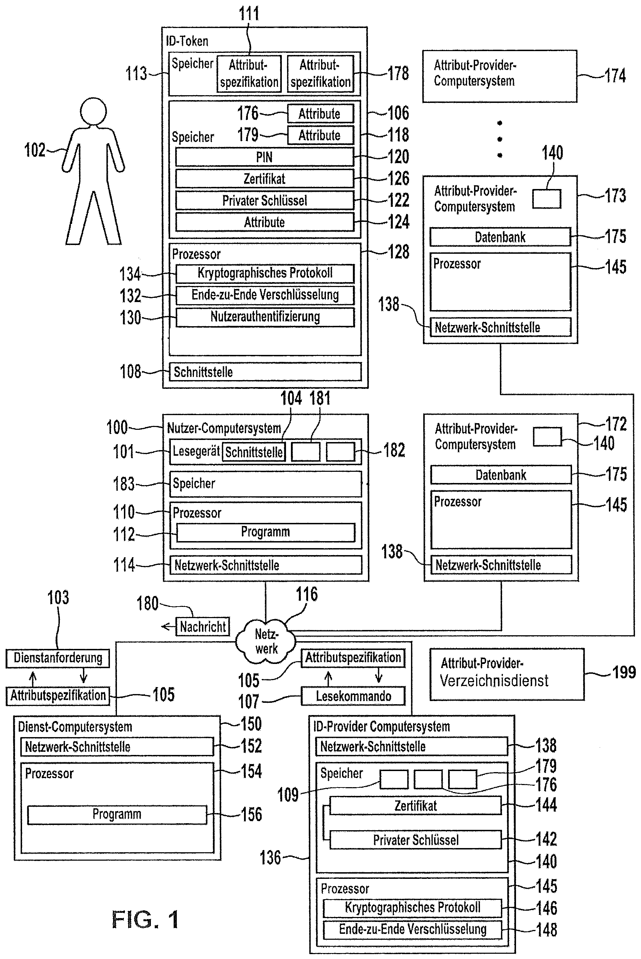

Die **Figur 1** zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat ein Lesegerät 101 mit einer Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient z.B. zur Speicherung eines privaten Schlüssels und der geschützte Speicherbereich 124 dient z.B. zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer. Die Adressdaten des Nutzers können beispielsweise einer anderen Attributklasse angehören als die Attribute, die den ID-Token näher spezifizieren.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung ein, beispielsweise in das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Moduls 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Modul 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Modul 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Modul 136 übertragenen Daten, zumindest aber der von dem ID-Provider-Modul 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Modul 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Modul 136 hat eine Netzwerk-Schnittstelle 138 zur Kommunikation über das Netzwerk 116. Das ID-Provider-Modul 136 hat ferner einen Speicher 140, in dem ein privater Schlüssel 142 des ID-Provider-Moduls 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Modul 136 hat ferner zumindest einen Prozessor 145 zur Ausführung von Programminstruktionen 146 und 148. Durch Ausführung der Programminstruktionen 146 werden die das ID-Provider-Modul 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Moduls 136 implementiert.

Die Programminstruktionen 148 dienen zur Implementierung der Ende-zu-Ende-Verschlüsselung auf Seiten des ID-Provider-Moduls 136, beispielsweise basierend auf dem symmetrischen Schlüssel, der anlässlich der Ausführung des kryptographischen Protokolls zwischen dem ID-Token 106 und dem ID-Provider-Modul 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Modul 136 befindet sich vorzugsweise in einer besonders geschützten Umgebung, insbesondere in einem so genannten Trust-Center, sodass das ID-Provider-Modul 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten oder als Behördenserver für eine eGovernment Anwendung.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamisehe HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall können für die Erbringung des Dienstes weitere Attribute erforderlich sein, die in dem ID-Token zunächst nicht vorhanden sind. Hierzu kann das in der Figur 1 gezeigte Computersystem Attribut-Provider-Computersysteme 172 und 173 aufweisen. Diese können prinzipiell gleich aufgebaut sein wie das ID-Provider-Modul und verfügen über zusätzliche Funktionalitäten zum Lesen oder Ermitteln von Attributspezifikationen sowie zum Lesen, Generieren und/oder Schreiben von Attributen und Attributspezifikationen in den ID-Token.

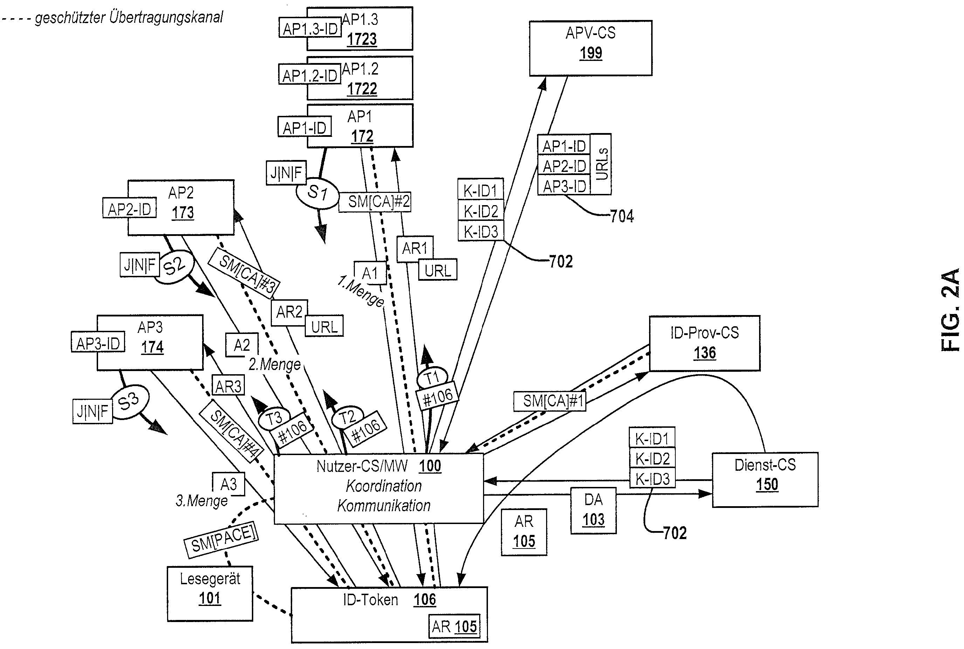

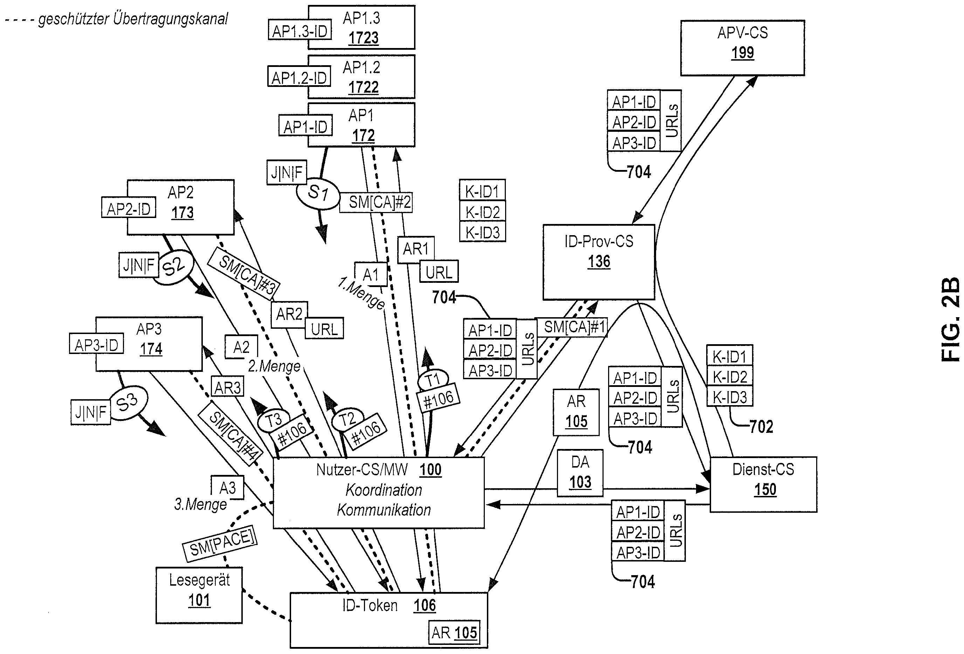

Zur Inanspruchnahme eines von dem Dienst-Computersystem 150 zur Verfügung gestellten Dienstes wird beispielsweise wie folgt vorgegangen:
a) Der Nutzer 102 baut mithilfe seines Nutzer-Computersystems 100 eine Internetsession über das Netzwerk 116 zu dem Dienst-Computersystem 150 auf. Über diese Internetsession wird eine Dienstanforderung 103 von dem Nutzer-Computersystem 100 an das Dienst-Computersystem 150 übertragen, womit der Nutzer 102 die Erbringung eines Dienstes des Dienst-Computersystems 150 anfordert. Das Dienst-Computersystem 150 reagiert auf diese Dienstanforderung 103 mit dem Aufbau eines geschützten Übertragungskanals vom ID-Provider-Modul des Dienst-Computersystems zum ID-Token und dem Schreiben einer ersten Attributspezifikation 105, die diejenigen Attribute spezifiziert, die für die Erbringung des mit der Dienstanforderung 103 angeforderten Dienstes zu erfüllen sind, in den ID-Token. Die erste Attributspezifikation 105 wird von dem Dienst-Computersystem an das ID-Provider-Modul über einen geschützten Übertragungskanal übermittelt. Das ID-Provider-Modul wiederum speichert die erste Attributspezifikation nach erfolgreicher gegenseitiger Authentifizierung von ID-Provider-Modul und ID-Token im geschützten Speicher 183 des ID-Tokens. Diese erste Attributspezifikation spezifiziert beispielsweise M Attribute einer ersten Attributklasse, N Attribute einer zweiten Attributklasse, und O Attribute einer dritten Attributklasse, wobei M, N und O positive natürliche Zahlen sind. Die erste Attributklasse kann sich auf Adressdaten des Nutzers, die zweite Attributklasse auf dessen Berechtigung zum Führe eines Kraftfahrzeugs und die dritte Attributklasse auf die Kontodaten des Nutzers 102 beziehen.
   Um den oben genannten geschützten Übertragungskanal vom Dienst-Computersystem zum ID-Token aufzubauen, können mehrere Schritte notwendig sein. So kann das Nutzer-Computersystem 100 den Nutzer 102 dazu auffordern, sich gegenüber dem ID-Token 106 zu authentifizieren. Hierzu gibt der Nutzer 102 seine PIN zum Beispiel über das Lesegerät 101 oder eine Tastatur des Nutzer-Computersystems 100 ein. Zur Verifikation der PIN wird zwischen dem Nutzer-Computersystem 100, das heißt dessen Lesegerät 101, und dem ID-Token 106 ein lokaler gesicherter Übertragungskanal SM[PACE] aufgebaut, beispielsweise mithilfe eines Diffie-Hellman Schlüsselaustausches, insbesondere nach dem vom Bundesamt für Sicherheit in der Informationsverarbeitung (BSI) spezifizierten PACE-Protokoll. Über das Nutzer-Computersystem 100 baut der ID-Provider-Modul 136 einen geschützten Übertragungskanal SM[CA]#1 über das Netzwerk 116 auf, über den sich das ID-Provider-Modul 136 gegenüber dem ID-Token 106 authentifiziert, und zwar unter Verwendung des Zertifikats 144.
b) Wie in **Figur 2A** im Einzelnen dargestellt, kann das Dienst-Computersystem die erste Attributspezifikation analysieren und dabei feststellen, dass diese Attribute der oben genannten 3 Klassen enthält. Die 3 Klassen können in dem Dienst-Computersystem aber auch von vornherein bekannt bzw. spezifiziert sein. Das Dienst-Computersystem 150 ermittelt für jede der 3 Klassen einen Klassenidentifikator, zum Beispiel K-ID1 für die erste Attributklasse, K-ID2 für die zweite Attributklasse und K-ID3 für die dritte Attributklasse. Die Klassenidentifikatoren werden von dem Dienst-Computersystem 150 an das Nutzer-Computersystem 100 übermittelt. Die Klassenidentifikatoren der ermittelten Attributklassen werden von dem Dienst-Computersystem oder von dem ID-Provider-Modul an das Nutzer-Computersystem übermittelt. Da es sich bei den Klassenidentifikatoren in der Regel um keine überaus schützenswerten Informationen handelt, kann die Übermittlung der Attributklassen auf sicherem oder auch unsicherem, also unverschlüsseltem, Wege erfolgen. Das Nutzer-Computersystem 100 sendet die Klassen-Identifikatoren 702 an ein Attribut-Provider-Verzeichnis-Computersystem 199, welches für jeden der übermittelten 3 Klassenidentifikatoren ein oder mehrere Attribut-Provider-Computersysteme identifiziert, die dazu in der Lage sind, Attribute der identifizierten Klasse bereitzustellen. Identifikatoren 704 dieser identifizierten Attribut-Provider-Computersysteme 172, 173, 174, die zum Beispiel aus URLs der betreffenden Attribut-Provider-Computersysteme bestehen können, werden an das Nutzer-Computersystem zurück-übermittelt. Die Liste der Attribut-Provider-Computersysteme wird von dem Nutzer-Computersystem fortan verwendet, um den Datenaustausch zwischen den einzelnen Attribut-Provider-Computersystemen und dem IT-Token 106 zu koordinieren, einschließlich des Aufbaus und des Umschaltens zwischen geschützten Übertragungskanälen SM[CA]#2 - SM[CA]#4.
c) Ein zu dem System in Figur 2A alternatives System ist in **Figur 2B** dargestellt. Hier ist es das Dienst-Computersystem 150, welches die Klassen-Identifikatoren 702 durch Analyse der ersten Attributspezifikation 105 ermittelt und diese zudem an das Attribut-Provider-Verzeichnis-Computersystem 199 sendet. In Antwort darauf empfängt es die oben beschriebene Liste 704 der Identifikatoren der besagten Attribut-Provider-Computersysteme 172,173,174. Das Dienst-Computersystem 150 übermittelt die Liste 704 der Identifikatoren an das Nutzer-Computersystem 100, um diesem die Koordination der Kommunikation zwischen Attribut-Providern und dem ID-Token zu ermöglichen.
d) Optional kann das ID-Provider-Modul 136 zunächst versuchen, sämtliche Attribute, die in der ersten Attributspezifikation spezifiziert sind und die bereits in dem ID-Token gespeichert vorliegen, auszulesen und an das Dienst-Computersystem zu übertragen und die erste Attributspezifikation durch eine neue Version zu ersetzen, welche die bereits ausgelesenen Attribute nicht mehr spezifiziert. Die ausgelesenen Attribute werden hierbei über den ersten geschützten Übertragungskanal SM[CA]#1 übertragen.
e) Optional kann das ID-Provider-Modul die erste Attributspezifikation in mehrere Teilspezifikationen, z.B. eine zweite und dritte Attributspezifikation unterteilen, die z.B. jeweils nur Attribute einer bestimmten Attributklasse spezifizieren. Diese Teilspezifikationen können anstelle der ersten Attributspezifikation oder zusammen mit der ersten Attributspezifikation in dem ID-Token unter Verwendung über einen geschützten Übertragungskanal SM[CA]#1 geschützt gespeichert werden.
f) Vorzugsweise erfolgt eine gegenseitige Authentifizierung des IT-Tokens 106 und des ID-Provider-Moduls 136 bzw. des jeweiligen Attribut-Provider-Computersystems unter Verwendung von Zertifikaten, das heißt es erfolgt eine sogenannte CA und eine TA. Hierbei wird auch ein Session Key vereinbart, mit dem der erste geschützte Übertragungskanal mit Ende-zu-Ende-Verschlüsselung zwischen dem ID-Token 106 und dem ID-Provider-Modul über das Nutzer-Computersystem 100 und das Netzwerk 116 aufgebaut wird, wobei der lokale geschützte Übertragungskanal SM[PACE] bestehen bleibt.
   Bei dem ID-Provider-Modul des Dienst-CS kann es sich um eine integrale Komponente des Dienst-Computersystems oder eine externe Komponente handeln die mit dem Dienst-CS interoperabel ist. Nach Ausführungsformen verwendet jedes der Attribut-Provider-Computersysteme ebenfalls jeweils ein ID-Provider-Modul (das als interne oder externe Komponente des Attribut-Provider-Computersystems ausgebildet sein kann), zum Datenaustausch mit dem ID-Token. Dabei verwenden die Attribut-Provider-Computersysteme jeweils andere ID-Provider-Module als das Dienst-CS um den Datenschutz der ausgetauschten Attribute und Attributspezifikationen zu gewährleisten.
g) Das Nutzer-Computersystem erhält von dem Dienst-Computersystem, dem ID-Provider-Modul oder dem ID-Token ein Signal, dass eine erste Attributspezifikation in dem ID-Token gespeichert wurde.
h) Daraufhin verwendet das Nutzer-Computersystem 100 einen ersten Identifikator AP1-ID, um ein Triggersignal T1 an die Adresse eines ersten Attribut-Provider-Computersystems 172 zu senden. Das Triggersignal T1 beinhaltet eine Adresse #106 des ID-Tokens.
i) In Reaktion auf den Empfang des ersten Triggersignals T1 initialisiert das erste Attribut-Provider-Computersystem 172 die gegenseitige Authentifizierung des ersten Attribut-Provider-Computersystems 172 und des ID-Tokens 106. Hierbei wird die Adresse #106 des ID-Tokens, zum Beispiel eine URL mit Portangabe, verwendet. Nach erfolgreicher gegenseitiger Authentifizierung wird ein geschützter Übertragungskanal SM[CA]#2 zwischen dem Attribut-Provider-Computersystem 172 und dem Token 106 aufgebaut. Das erste Attribut-Provider-Computersystem führt einen Lesezugriff auf den geschützten Speicherbereich des ID-Tokens 106 aus. Entweder wird im Zuge dieses Lesezugriffs eine bereits dort gespeicherte zweite Attributspezifikation AR1, die selektiv nur diejenigen Attribute der ersten Attributspezifikation 105 spezifiziert, die von dem ersten Attribut-Provider-Computersystem auch bereitgestellt werden können, spezifiziert, gelesen und über den geschützten Übertragungskanal an das erste Attribut-Provider-Computersystem 172 übertragen. Oder das erste Attribut-Provider-Computersystem 172 greift lesend auf die im ID-Token gespeicherte erste Attributspezifikation 105 zu, um die zweite Attributspezifikation AR1 automatisch als diejenige Teilmenge der ersten Attributspezifikation zu bestimmen, welche selektiv nur diejenigen der Attribute spezifiziert, die von dem ersten Attribut-Provider-Computersystem bereitgestellt werden können. Optional kann das erste Attribut-Provider-Computersystem nach manchen Ausführungen auch auf bereits existierende Attribute in dem ID-Token zugreifen um zu ermitteln, ob ein bestimmtes Attribut in dem Token bereits vorhanden ist oder nicht. Attribute, die bereits in dem ID-Token gespeichert sind, und welche vorzugsweise ein vordefinierte Maximalalter nicht überschreiten, werden nicht in der zweiten Attributspezifikation AR1 spezifiziert.
j) Das erste Attribut-Provider-Computersysteme 172 versucht nun, sämtliche in der zweiten Attributspezifikation spezifizierten Attribute zu ermitteln. Dies kann zum Beispiel bedeuten, Attribute aus einer Datenbank 175 zu lesen und/oder Attribute von externen Servern über ein Netzwerk zu empfangen und/oder Attribute durch Ausführung eines Datenverarbeitungsschrittes dynamisch neu zu berechnen. Beispielsweise kann ein aktuelles Alter des Nutzers anhand eines in einer Datenbank gespeicherten Geburtsdatums und dem aktuellen Datum dynamisch berechnet und als Attribut für den Nutzer zurückgegeben werden.
k) Das erste Attribut-Provider-Computersystem 172 führt nun einen Schreibzugriff auf den geschützten Speicher des ID-Tokens 106 aus. Im Zuge dieses Schreibzugriffs werden sämtliche für die zweite Attributspezifikation AR1 ermittelten Attribute in dem geschützten Speicherbereich des ID-Tokens gespeichert. Die Attribute, in Figuren 2A und 2B auch als erste Attributmenge A1 bezeichnet, werden über den geschützten Übertragungskanal SM[CA]#2 übertragen. Da der geschützte Übertragungskanal SM[CA]#2 vor dem Zugriff des Nutzer-Computersystems und sonstiger dritter Computersysteme geschützt ist, werden die sensiblen Daten nämlich die erste Attributmenge und die zweite Attributspezifikation auf besonders sichere Weise übertragen.
l) Allerdings hat die sichere Übertragungsweise den Nachteil, dass das Nutzer-Computersystem nicht weiß, ob und wann die in der zweiten Attributspezifikation AR1 spezifizierten Attribute erfolgreich ermittelt und in dem ID-Token gespeichert wurden. Dies wird dadurch gelöst, dass das erste Attribut-Provider-Computersystem ein erstes Bestätigungssignal S1 an das Nutzer-Computersystem 100 sendet, sobald die erste Menge Attribute A1 erfolgreich in das ID-Token 106 geschrieben wurde oder sobald ein Fehler auftrat. Der Fehler kann auch in der Überschreitung einer maximalen Zeit für den Schreibzugriff liegen. Das Bestätigungssignal S1 zeigt dem Nutzer-Computersystem an, ob sämtliche in der zweiten Attributspezifikation AR1 spezifizierten Attribute erfolgreich ermittelt und in dem ID-Token geschrieben wurden. Optional kann das Bestätigungssignal weitere Informationen, zum Beispiel Fehlercodes oder ähnliches enthalten, die einen Rückschluss auf Fehlerursachen zulassen.
m) Nach Erhalt des Bestätigungssignals S1 prüft das Nutzer-Computersystem 100, ob von sämtlichen Attribut-Provider-Computersystemen 172, 173, 174, die in der Liste 704 der Identifikatoren spezifiziert sind, auch ein Bestätigungssignal S1, S2, S3 empfangen wurde, welches jeweils anzeigt, dass die in der zweiten AR1 bzw. dritten AR2 bzw. vierten AR3 Attributspezifikation spezifizierten Attribute erfolgreich in dem ID-Token gespeichert wurden.
n) Falls von einem der identifizierten Attribut-Provider-Computersysteme noch kein Bestätigungssignal empfangen wurde, zum Beispiel vom zweiten Attribut-Provider-Computersystem 173, sendet das Nutzer-Computersystem ein Triggersignal T2 mit der Adresse des ID-Tokens 106 an dieses eine Attribut-Provider-Computersystem um dieses zu veranlassen, wie oben beschrieben, eine gegenseitige Authentifizierung zwischen diesem einen Attribut-Provider-Computersystem und dem ID-Token 106 zu initiieren (das heißt eine CA und eine TA), eine entsprechende Attributspezifikation auszulesen oder zu ermitteln, und die gemäß dieser Attributspezifikation ermittelten Attribute in das ID-Token zu schreiben.
o) Falls von einem der identifizierten Attribut-Provider-Computersysteme ein Bestätigungssignal mit einer Fehlermeldung empfangen wurde, kann das Nutzer-Computersystem das gesamte Verfahren mit einer Fehlermeldung an das Dienst-Computersystem abbrechen. Alternativ dazu kann es ein Triggersignal an ein Ersatz-Attribut-Provider-Computersystem senden, welches ebenfalls dazu in der Lage ist, die Attribute bereitzustellen, die ursprünglich das fehlerbehaftete Attribut-Provider-Computersystem liefern sollte.
p) Falls von allen der identifizierten Attribut-Provider-Computersysteme der Liste 704 ein Bestätigungssignal empfangen wurde, das eine erfolgreiche Ermittlung und Speicherung der jeweils angeforderten Attribute anzeigt, sendet das Nutzer-Computersystem 100 eine Nachricht an das Dienst-Computersystem 150, um das ID-Provider-Modul zu veranlassen, sämtliche Attribute, die der Dienst gemäß seiner ersten Attributspezifikation 105 angefordert hatte, und welche nun dem ID-Token gespeichert vorliegen, auszulesen und an das Dienst-Computersystem 150 zu übermitteln.

Gemäß einer Ausführungsform ist der geschützte Speicher des ID-Tokens in verschiedene Sektoren untergliedert, wobei jeder Sektor einer bestimmten Attributklasse zugeordnet ist und wobei die Lese-und Schreibrechte für die einzelnen Attribut-Provider-Computersysteme auf einzelne Sektoren beschränkt sind. Vorzugsweise speichert das ID-Provider-Modul die zweite AR1, dritte AR2 und vierte AR3 Attributspezifikation selektiv jeweils in einem Sektor, welcher der gleichen Klasse zugeordnet ist wie die jeweilige Attributspezifikation. Ein Attribut-Provider-Computersystem, das Attribute einer bestimmten Attributklasse bereitstellt, kann in diesem Fall vorzugsweise nur auf die Attributspezifikation(en) zugreifen, die in dem Sektor des Speichers des ID-Tokens gespeichert sind, welcher der gleichen Attributklasse zugewiesen ist.

Die Kommunikation zwischen dem Nutzer-Computersystem 100 und dem ID-Token 106 erfolgt vorzugsweise über den lokalen Übertragungskanal SM[PACE]. Die Kommunikation zwischen dem ID-Token und dem ID-Provider-Modul 136 erfolgt über einen ersten geschützten Übertragungskanal SM[CA]#1. Die Kommunikation zwischen dem ID-Token und jeweils einem der Attribut-Provider-Computersysteme 172, 173, 174 erfolgt jeweils über einen entsprechenden zweiten SM[CA]#2, dritten SM[CA]#3 und vierten SM[CA]#4 geschützten Übertragungskanal.

In manchen Ausführungsformen ist es möglich, dass das Nutzer-Computersystem nach Erhalt eines Bestätigung-Signals von einem der Attribut-Provider-Computersysteme zunächst den ersten geschützten Übertragungskanal SM[CA]#1 aktiviert, um dem ID-Provider-Modul 136 ein sofortiges Auslesen der von diesem einen Attribut-Provider-Computersysteme ermittelten Attribute zur Übertragung an das Dienst-Computersystem zu ermöglichen. Nach einem erfolgreichen auslesen einer Teilmenge A1, A2, A3 der Attribute sendet das ID-Provider-Modul jeweils ein Umschaltbindesignal an das Nutzer-Computersystem. Daraufhin initialisiert das Nutzer-Computersystem die gegenseitige Authentifizierung von ID-Token und einem der Attribut-Provider-Computersysteme, die bisher noch nicht angefragt wurden. Nach erfolgreicher gegenseitiger Authentifizierung wird für dieses Attribut-Provider-Computersystem ein geschützter Übertragungskanal SM[CA]#2, SM[CA]#3 SM[CA]#4 aufgebaut wie zuvor beschrieben. Dieser geschützte Übertragungskanal wird zum aktiven Kanal, der erste sichere SM[CA]#1 zu dem ID-Provider-Modul wird dadurch zu einem inaktiven Übertragungskanal. Ein inaktiver Übertragungskanal ist ein Kanal, für welchen eine Sitzung und eine gesicherte, zum Beispiel verschlüsselte Verbindung aufrechterhalten wird, obwohl dieser Kanal nicht aktuell zur Datenübertragung genutzt wird. Ein aktiver Kanal ist ein Kanal, der aktuell für die Datenübertragung genutzt wird. Der Übertragungskanal kann also durch ein Umschaltkommando sehr schnell und ressourcenschonend wieder aktiviert werden, ohne dass neue Sitzungsschlüssel ausgehandelt werden müssen. Bei diesem sequenziellen bereitstellen von Attributmengen A1, A2, A3 und dem sofortigen auslesen dieser Attributmengen unmittelbar nach deren Bereitstellung durch das ID-Provider-Modul aktiviert und deaktiviert das Nutzer-Computersystem den ersten sicheren Kanal zu dem ID-Provider-Modul in Abhängigkeit vom Empfang von Umschaltsignalen von dem ID-Provider-Modul und in Abhängigkeit vom Empfang von Bestätigungs-Signalen S1, S2, S3 von den jeweiligen Attribut-Provider-Computersystemen. Dies beschleunigt das Verfahren, da keine neuen Sitzungsschlüssel zur Etablierung des ersten geschützten Übertragungskanals zwischen IT-Token und ID-Provider-Modul ausgehandelt werden müssen, was insbesondere angesichts der begrenzten Prozessorleistung vieler ID-Token von großem Vorteil sein kann.

In manchen Ausführungsformen generiert das erste Attribut-Provider-Computersystem 172 eine Signaturanfrage zur Erzeugung einer digitalen Signatur der zweiten Attributspezifikation AR1 und sendet diese Signaturanfrage an das Nutzer-Computersystem 100. Dies kann über die bestehende sichere Verbindung SM[CA]#2 erfolgen. Zusätzlich kann das erste Attribut-Provider-Computersystem optional zuvor bei dem Nutzer über das Nutzer-Computersystem anfragen, ob der Nutzer 102 die Signaturanforderung genehmigt. Falls dies der Fall ist, erfolgt neben der Versendung der Signaturanfrage von dem ersten Attribut-Provider-Computersystem 172 an den ID-Token das Nutzer-Computersystem 100 nach einer Zustimmung zur Signatur.

Das Nutzer-Computersystem 100 leitet die Signaturanfrage des ersten Attribut-Provider-Computersystems über den lokalen geschützten Übertragungskanal, auf welchen der ID-Token 106 zuvor aufgrund des zweiten Umschaltkommandos umgeschaltet hatte, weiter, sodass der ID-Token 106 anschließend die digitale Signatur der dritten Attributspezifikation 178 erzeugt, und zwar durch Ausführung von Programminstruktionen 135 durch den Prozessor 128 des ID-Tokens 106, welcher einen Generator zur Erzeugung digitalen Signaturen bilden, wobei dies unter Verwendung zum Beispiel des privaten Schlüssels 122 erfolgt. Optional wird zuvor von dem Nutzer 102 die Signatur-PIN abgefragt, um die Ausführung der Programminstruktionen 135 freizuschalten. Dies kann zum Beispiel über eine Nutzerschnittstelle, wie zum Beispiel eine Tastatur des Nutzer-Computersystems 100 oder des Lesegeräts 101 erfolgen. Zur Freischaltung der Ausführung der Programminstruktionen 135 prüft der ID-Token 106, ob die von dem Nutzer 102 eingegebene Kennung mit dem in dem Speicher 118 gespeicherten Referenzwert für die Signatur-PIN (SPIN), der in dem geschützten Speicherbereich 121 gespeichert ist, übereinstimmt.

Der ID-Token 106 sendet die signierte zweite Attributspezifikation an das erste Attribut-Provider-Computersystem 172. Das erste Attribut-Provider-Computersystem 172 prüft die Validität der Signatur und ermittelt die darin spezifizierten Attribute nur dann, wenn die Prüfung ergibt, dass die Signatur valide ist.

In analoger Weise können auch die weiteren Attribut-Provider-Computersysteme eine Signatur der jeweils gelesenen Attributspezifikationen erfordern.

Das ID-Provider-Modul 136 verfügt nach einer erfolgreichen Durchführung der oben genannten Verfahrensschritte in seinem Speicher 140 über sämtliche der Attribute, die mit der ersten Attributspezifikation 105 angefordert worden sind. Das ID-Provider-Modul 136 generiert daraufhin eine Nachricht 180, die diese Attribute beinhaltet, signiert diese Nachricht und sendet sie über das Netzwerk 116 an das Dienst-Computersystem 150, wobei dies über das Nutzer-Computersystem 100 erfolgen kann. Das Dienst-Computersystem 150 kann dann gegebenenfalls mithilfe der in der Nachricht 180 beinhalteten Attribute den mit der Dienstanforderung 103 angeforderten Dienst erbringen. Alternativ dazu kann die Nachricht auch über einen System-Bus eines Dienst-Computersystems übermittelt werden, z.B. falls das ID-Provider-Modul integraler Bestandteil des Dienst-Computersystems ist.

Die Attribut-Provider-Computersysteme 172, 173 ... können analog zu dem ID-Provider-Modul 136 aufgebaut sein, das heißt sie verfügen jeweils über eine Netzwerk-Schnittstelle 138, einen Prozessor 145 zur Ausführung von Programminstruktionen 146, 148 und einen Speicher 140, in dem ein Zertifikat und ein privater Schlüssel gespeichert sind. Bei dem Zertifikat handelt es sich vorzugsweise um ein Berechtigungszertifikat, in dem jeweils eine Berechtigung für Lese- und Schreibzugriffe auf den ID-Token 106 spezifiziert ist.

Nach einer Ausführungsform der Erfindung werden die Attribute der Mengen 176 und 179 erst dann in dem Speicher 118 gespeichert, nachdem diese der Nutzer 102 zur Kenntnis nehmen konnte. Hierzu werden diese Attribute auf einem Display 181 angezeigt, welches zum Beispiel zu dem Lesegerät 101 gehört. Ferner kann beispielsweise auf dem Lesegerät 101 ein Bedienelement 182 vorhanden sein, über welches der Nutzer 102 eine Eingabe tätigen muss, um die Speicherung der in den Antworten 176 bzw. 179 beinhalteten Attribute in dem Speicher 118 zu genehmigen. Hierdurch erhält der Nutzer 102 eine Kontrollmöglichkeit bezüglich der möglicherweise seine Person betreffenden zusätzlichen Attribute in dem Speicher 118.

**Figur 2A** zeigt eine Ausführungsform eines verteilten Systems, welches im Wesentlichen die bereits in Figur 1 beschriebenen Komponenten und Computersysteme beinhaltet. Die durch Ende-zu-Ende Verschlüsslung geschützten Übertragungskanäle zwischen dem ID-Token und den jeweiligen Kommunikationspartnern (ID-Provider-Modul, diverse Attribut-Provider-Computersysteme, Nutzer-Computersystem) sind durch gestrichelte Linien dargestellt. Das Nutzer-Computersystem kann z.B. mittels Protokollumsetzung eine Funktion als Relais-Station wahrnehmen und den Aufbau der einzelnen Kanäle initiiere, es ist jedoch nicht Endpunkt in den Ende-zu-Ende verschlüsselten Kommunikationsverbindungen.

Das Nutzer-Computersystem bzw. die auf diesem installierte Middleware (MW) empfängt eine Liste von Klassenidentifikatoren 702 von dem Dienst-Computersystem 150. Beispielsweise können die Klassenidentifikatoren 702 in dem Dienst-Computersystem bereits gespeichert vorliegen und bei Anfrage eines entsprechenden Dienstes automatisch bereitgestellt werden. Es ist auch möglich, dass das Dienst-Computersystem 150 die erste Attributspezifikation AR, die ebenfalls vom Dienst-Computersystem bereitgestellt wird, zur Laufzeit analysiert und die Klassenidentifikatoren 702 als Analyseergebnis in Antwort auf eine Dienstanfrage 103 an das Nutzer-Computersystem zurückgibt. Alternativ dazu (hier nicht dargestellt) ist es auch möglich, dass das Dienst-Computersystem die erste Attributspezifikation 105 an das ID-Provider-Modul 136 übermittelt und dass das ID-Provider-Computer-System die erste Attributspezifikation 105 analysiert, um die Klassenidentifikatoren 702 dynamisch zu ermitteln. In diesem Fall überträgt das ID-Provider-Modul die Klassenidentifikatoren 702 an das Nutzer-Computersystem.

Nach Erhalt der Klassenidentifikatoren 702 für ein oder mehrere Klassen von Attributen sendet das Nutzer-Computersystem 100 die Klassenidentifikatoren 702 an ein Attribut-Provider-Verzeichnis-Computersystem (APV-CS) 199. Die Adresse des APV-CS 199 kann zum Beispiel in dem Nutzer-Computersystem vorgespeichert vorliegen. Das Senden der Klassenidentifikatoren kann über ein Netzwerk 116, zum Beispiel das Internet, erfolgen. Das APV-CS ermittelt, wie bereits beschrieben wurde, entsprechende Identifikatoren 704 von Attribut-Provider-Computersystemen 172, 173, 174, 1722, 1723, die dazu ausgebildet sind, die Attribute der in der Liste 702 spezifizierten Klassen bezüglich des Nutzers 102 bereitzustellen. Nach Erhalt der Liste 704 von Identifikatoren initiiert das Nutzer-Computersystem 100 mittels mehrerer Triggersignale T1, T2, T3, vorzugsweise in sequenzieller Reihenfolge, eine gegenseitige Authentifizierung der identifizierten Attribut-Provider-Computersysteme mit dem ID-Token 106, sodass jeweils zwischen dem ID-Token und dem betreffenden Attribut-Provider-Computersystem ein gesicherter Übertragungskanal SM[CA]#2, SM[CA]#3, SM[CA]#4 ausgebildet wird. Über diesen gesicherten Kanal werden diejenigen Teile AR1, AR2, AR3 der ersten Attributspezifikation, sofern sie bereits auf dem ID-Token vorliegen, von dem Attribut-Provider-Computersystem ausgelesen, für welches das betreffende Attribut-Provider-Computersystem die notwendigen Leserechte aufweist. Typischerweise besitzt ein Attribut-Provider-Computersystem nur Leserechte bezüglich bestimmter Sektoren des geschützten Speichers des ID-Tokens 106, in welchem selektiv diejenigen Teile der ersten Attributspezifikation gespeichert sind, die eine Attributklasse betreffen, die das berechtigte Attribut-Provider-Computersystem auch bereitstellen kann. Alternativ dazu ist es jedoch auch möglich, dass die einzelnen Attribut-Provider-Computersysteme auf die gesamte erste Attributspezifikation in dem ID-Token lesend zugreifen dürfen um dynamisch eine Attribut-Teilspezifikation zu erstellen, die selektiv nur Attribute derjenigen Klasse spezifiziert, die von diesem Attribut-Provider-Computersystem auch bereitgestellt werden können. Beispielsweise könnte in diesem Fall also das Attribut-Provider-Computersystem 172 die erste Attributspezifikation 105 analysieren um die zweite Attributspezifikation AR1 aus dieser zu extrahieren, wobei AR 1 nur diejenigen Attribute spezifiziert, die einer Klasse angehören, die von dem Attribut-Provider-Computersystem 172 bereitgestellt werden kann.

Die erste Attributspezifikation gelangt dadurch in den geschützten Speicher des ID-Tokens 106, dass das Dienst-Computersystem 150 die erste Attributspezifikation an das ID-Provider-Modul 136 weiterleitet. Dieses speichert die erste Attributspezifikation über den ersten geschützten Übertragungskanal SM[CA]#1 in den geschützten Speicher des ID-Tokens. Nach manchen Ausführungsformen kann das ID-Provider-Modul zusätzlich oder alternativ dazu auch Teilmengen der ersten Attributspezifikation über den ersten geschützten Übertragungskanal in dem ID-Token speichern, zum Beispiel eine zweite Attributspezifikation AR 1, eine dritte Attributspezifikation AR2 oder eine vierte Attributspezifikation AR3. Diese spezifizieren jeweils nur Attribute einer bestimmten Attributklasse. Da das Nutzer-Computersystem 100 die in den gesicherten Kanälen übertragenen Daten nicht lesen oder verändern kann, hat es keine Kenntnis davon, welche Attribute von dem Dienst angefordert wurden oder gar von den Attributen selbst. In einem besonders vorteilhaften Aspekt wird also ein Verfahren bereitgestellt, in welchem die Koordination der Kommunikation mit einer Vielzahl von Attributprovidern technisch getrennt wird von der Übermittlung der sensiblen Daten selbst. Auch für den Fall, dass das Nutzer-Computersystem durch Viren oder trojanische Pferde kompromittiert wird, ist die Sicherheit der übertragenen Daten dennoch gewährleistet, da das Nutzer-Computersystem die über die geschützten Übertragungskanäle kommunizierten Daten nicht einsehen kann.

In Ausführungsformen, in welchen die Attribut-Provider-Computersysteme lesend nur auf die erste, zweite und oder dritte Attributspezifikation zugreifen darf, nicht jedoch auf die bereits in dem ID-Token gespeicherten Attribute, sind die personenbezogenen Attribute also vom Zugriff der Attributprovider geschützt. Ein Attribut Provider-für Adressdaten kennt zwar die Adressdaten eines bestimmten Nutzers, kann jedoch nicht die gesundheitsbezogenen oder Bankkonto-bezogenen Attribute dieses Nutzers aus dem ID-Token lesen. Nur der Dienst empfängt gegebenenfalls alle angeforderten Attribute in ihrer Gesamtheit.

In Ausführungsformen, in welchem ein Attribut-Provider die für ihn relevante Attributspezifikation dynamisch generiert, erhält das Attribut-Provider-Computersystem vorzugsweise Leserechte bezüglich Attributspezifikationen, die auf Attribute einer bestimmten Klasse, die der Attributprovider bereitstellen kann, beschränkt sind. Somit kann der Attributprovider dynamisch ermitteln, welche Attribute einer Klasse noch bereitgestellt werden müssen, kann dies jedoch nicht für Attribute tun, die einer anderen Klasse angehören.

Die Attribut-Provider-Computersysteme 172, 163, 104 und 70, 1722, 1723 haben Schreibrechte zum Schreiben der von ihnen jeweils bereitgestellten Attribute in dem geschützten Speicherbereich des IT Tokens 106. Die Schreibrechte können auch sektorenspezifisch vergeben sein.

In manchen Ausführungsformen haben die Attribut-Provider-Computersysteme darüber hinaus Schreibberechtigung im Hinblick auf Attributspezifikationen, die in dem ID-Token gespeichert sind. Dies kann insbesondere bei iterativer Bereitstellung von Attributen vorteilhaft sein, wenn bei jeder Iteration eine bestimmte Attributspezifikation durch eine neue Version ersetzt wird, die nur noch diejenigen Attribute spezifiziert, die bisher noch nicht bereitgestellt werden konnten.

Das APV-Computersystem 199 hat weder Lese-noch Schreibrechte bezüglich der Attributspezifikationen und der Attribute des ID-Tokens.

Vorzugsweise hat auch das Nutzer-Computersystem 100 weder Lese-noch Schreibrechte bezüglich der Attributspezifikationen und der Attribute des ID-Tokens.

Zusätzlich zu dem ersten Attribut-Provider-Computersystem 172, welches Attribute einer bestimmten Klasse, zum Beispiel Adressdaten, bereitstellen kann, umfasst das verteilte System noch weitere Attribut-Provider-Computersysteme 1723, 1722, die ebenfalls dazu ausgebildet sind, Attribute der gleichen Klasse bereitzustellen wie das erste Attribut-Provider-Computersystem 172. Falls beispielsweise das Attribut-Provider-Computersystem 172 nicht dazu in der Lage ist, sämtliche in der zweiten Attributspezifikation AR1 spezifizierten Attribute bereitzustellen, generiert das Attribut-Provider-Computersystem 172 eine neue Version der zweiten Attributspezifikation AR1', welche nur noch diejenigen Attribute der ursprünglichen zweiten Attributspezifikation AR1 spezifiziert, welche nicht durch das Attribut-Provider-Computersystem 172 bereitgestellt werden konnten. Das Nutzer-Computersystem 100 bzw. die darauf installierte Middleware (MW) koordiniert daraufhin die Bereitstellung der noch fehlenden Attribute dieser Attributklasse durch die zusätzlichen Attribut-Provider-Computersysteme 1722 und, ggf. auch 1723. Bei jeder Iteration wird die aktuelle Version der zweiten Attributspezifikation, wie sie in dem ID-Token 106 gespeichert ist, durch eine noch aktuellere Version ersetzt, die nur noch eine Teilmenge der in der Vorversion spezifizierten Attribute spezifiziert, die noch nicht bereitgestellt werden konnten.

**Figur 2B** zeigt eine Ausführungsform eines verteilten Systems, welches im Wesentlichen die bereits in Figur 1 beschriebenen Komponenten und Computersysteme beinhaltet, und welches eine Alternative zu dem in Figur 2A dargestellten System darstellt. Der Unterschied zu dem System in Figur 1A besteht im Wesentlichen darin, dass in ihr das ID-Provider-Modul 136 mit dem APV-CS 199 kommuniziert, nicht das Nutzer-Computersystem 100. Die erste Attributspezifikation 105 wird von dem Dienst-Computersystem 150 an das ID-Provider, Computersystem 136 übermittelt. Das ID-Provider-Modul speichert, nach gegenseitiger Authentifizierung zwischen ID-Provider-Modul 136 und ID-Token 106 und nach dem Aufbau des geschützten Übertragungskanals SM[CA]#1 die erste Attributspezifikation unter Verwendung des ersten geschützten Übertragungskanals in dem ID-Token 106. Außerdem analysiert das ID-Provider-Modul die erste Attributspezifikation 105, um die Attributklassen zu identifizieren, deren Attribute in der ersten Attributspezifikation spezifiziert werden. Die dadurch ermittelte Liste der Klassenidentifikatoren 702 wird von dem ID-Provider-Modul 136 an das APV-CS 199 übermittelt. Wie zuvor bereits beschrieben ermittelt das APV-CS 199 eine entsprechende Liste 704 von Identifikatoren von Attribut-Provider-Computersystemen und sendet diese an das ID-Provider-Modul 136 zurück. Das ID-Provider-Modul wiederum leitet die Liste 704 der Identifikatoren an das Nutzer-Computersystem 100 weiter.

Alternativ dazu (hier nicht dargestellt) ist es auch möglich, dass das Dienst-Computersystem 150 die Liste 702 der Klassenidentifikatoren gespeichert hat oder dynamisch ermittelt und die Liste 702 an das APV-CS 199 sendet. Das Dienst-Computersystem erhält in Antwort darauf die Liste 704 der Identifikatoren und leitet diese an das Nutzer-Computersystem 100 weiter. Somit stellt entweder das ID-Provider-Modul oder das Dienst-Computersystem dem Nutzer-Computersystem die Liste 704 der Identifikatoren bereit, sodass das Nutzer -Computersystem 100 dadurch in die Lage versetzt ist, die Kommunikation zwischen ID-Token 106 und den einzelnen Attribut Providersystemen zu koordinieren.

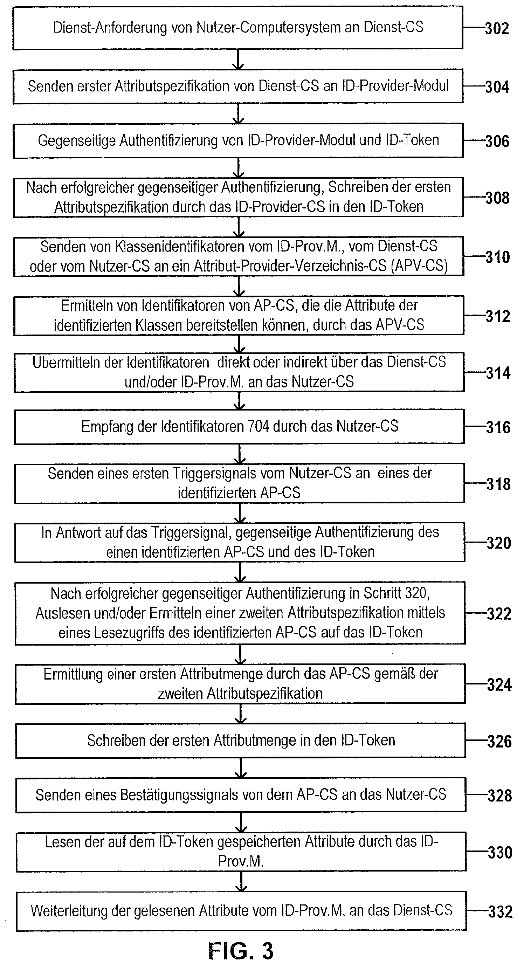

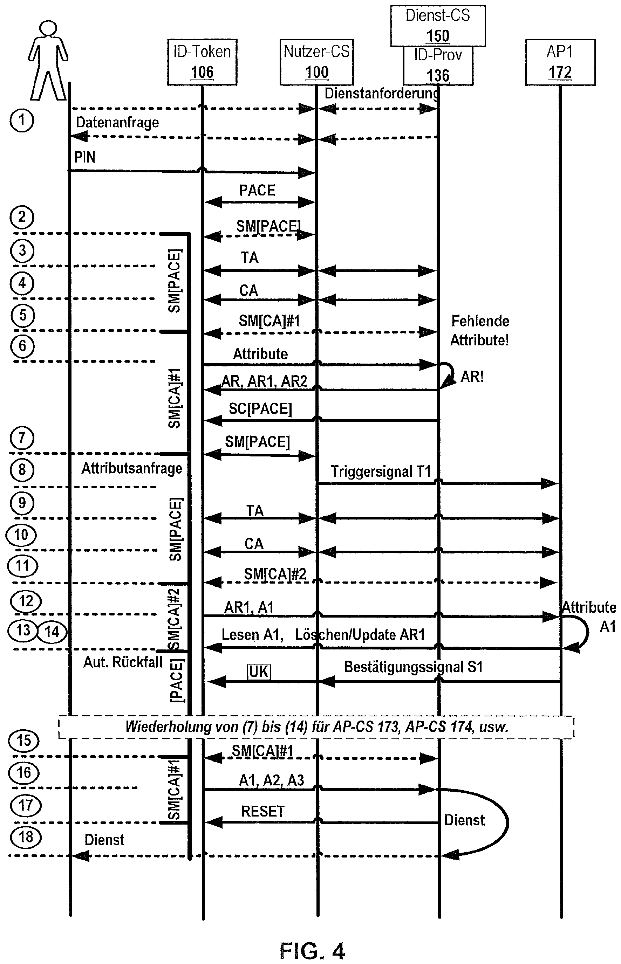

Die **Figuren 3** **und** **4** geben ein Flussdiagramm bzw. UML Diagramm eines Verfahrens gemäß einer Ausführungsform der Erfindung wieder. Im Folgenden wird auf beide Figuren Bezug genommen.

In Schritt 302 sendet das Nutzer-Computersystem 100 eine Dienstanforderung 103 eines Nutzers 102 über ein Netzwerk 116 an ein Dienst-Computersystem 150, das mit einem ID-Provider-Modul 136 gekoppelt ist. Hierzu gibt der Nutzer beispielsweise eine URL in einen Internetbrowser seines Nutzer-Computersystems ein, um eine sogenannte Internetsession mit dem Dienst-Computersystem aufzubauen. Bei dem Dienst-Computersystem kann es sich zum Beispiel um einen Onlineshop oder ein anderes eCommerce-Portal oder einen Behördenserver, der eine eGovernment-Anwendung zur Verfügung stellt, handeln. Bei der Dienstanforderung des Nutzers kann es sich um die Übertragung einer Kaufentscheidung des Nutzers handeln, die der Nutzer zum Beispiel durch Anklicken eines virtuellen Bedienelements auf der Webseite des Dienst-Computersystems, wie zum Beispiel "Kaufen" oder "buy now" eingibt, wobei diese Dienstanforderung zum Beispiel als http-Request oder https-Request über die Internetsession an das Dienst-Computersystem übertragen werden kann. Bei einer eGovernment-Anwendung kann es sich analog dazu bei der Dienstanforderung um die Übertragung einer Anforderung des Nutzers eines behördlichen Vorgangs, wie zum Beispiel die Ausstellung einer Meldebescheinigung, die Anmeldung eines Kraftfahrzeugs oder die Meldung einer Wohnortänderung oder dergleichen handeln.

Das Dienst-Computersystem benötigt für die Erbringung des mit der Dienstanforderung angeforderten Dienstes Attribute des Nutzers und -je nach Anwendungsfall - auch Attribute des ID-Tokens selbst. Diese können vom Dienst-Computersystem in einer ersten Attributspezifikation 105 ("AR") spezifiziert sein. Beispielsweise kann die erste Attributspezifikation die Attribute Name, Geburtsdatum, Anschrift des Nutzers, Kontonummer des Nutzers, Kreditwürdigkeit des Nutzers sowie Gültigkeitsdauer des ID-Token beinhalten. Die Attribute gemäß dieser ersten Attributspezifikation benötigt das Dienst-Computersystem also zur Erbringung des Dienstes für den Nutzer.

In Antwort auf den Empfang der Dienstanforderung sendet das Dienstcomputersystem 150 in Schritt 304 die erste Attributspezifikation 105 an das ID-Provider-Modul 136. Die erste Attributspezifikation spezifiziert diejenigen Attribute, die das Dienst-Computersystem zur Erbringung des angeforderten Dienstes benötigt. Die Übertragung kann über das Netzwerk erfolgen. Alternativ ist das ID-Provider-Modul ein integraler Bestandteil des Dienst-Computersystems, sodass das Senden der ersten Attributspezifikation zum Beispiel über einen internen Datenbus oder eine LAN-Verbindung erfolgt.

In einem weiteren Schritt (nicht dargestellt) authentifiziert sich der Nutzer 102 gegenüber dem ID-Token. Hierzu gibt der Nutzer eine geheime Kennung, wie zum Beispiel die sogenannte Personal Identification Number (PIN) ein. Dies kann je nach Ausführungsform unmittelbar durch Eingabe in den ID-Token erfolgen, durch Eingabe in das Lesegerät oder durch Eingabe in das Nutzer-Computersystem. Vorzugsweise erfolgt die Authentifizierung des Nutzers gegenüber dem ID-Token mittels einer "Fernüberprüfung", worunter hier jedes Verfahren verstanden wird, bei dem die zu überprüfende Kennung nicht in den ID-Token unmittelbar eingegeben wird, um sie mit der dort gespeicherten Kennung zu vergleichen, sondern bei dem die Überprüfung mittels eines das Lesegerät und den ID-Token involvierenden Protokolls erfolgt, bei dem die Kennung, die in das Lesegerät eingegeben wird, nicht an den ID-Token übertragen werden muss. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE). Das SPEKE-Protokoll ist beispielsweise bekannt aus www.jablon.ora/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus Technical Guideline TR-03110 des Bundesamt für Sicherheit in der Informationstechnik ist das PACE-Protokoll bekannt, welches sich besonders für elliptische Kurven-Kryptographie eignet, vergleiche hierzu auch DE 102007000587 A1 und DE 102013202001 A1.Vorzugsweise authentifiziert sich neben dem Nutzer auch das Nutzer-Computersystem gegenüber dem ID-Token, wobei auch ein lokaler gesicherter Übertragungskanal, das heißt ein sogenannter Secure Messaging-Kanal, zwischen dem ID-Token und dem Nutzer-Computersystem aufgebaut werden kann, beispielsweise indem ein Session Key nach einem Diffie-Hellman-Protokoll zwischen dem ID-Token und dem Nutzer-Computersystem vereinbart wird.

Das ID-Provider-Modul und das ID-Token authentifizieren sich in Schritt 306 gegenseitig. Das ID-Provider-Modul authentifiziert sich gegenüber dem ID-Token beispielsweise über das Netzwerk 116 und weist vorzugsweise auch seine Berechtigung für einen Lesezugriff oder Schreibzugriff nach, indem es beispielsweise sein Berechtigungszertifikat über das Netzwerk an den ID-Token überträgt. Auch der ID-Token authentifiziert sich gegenüber dem ID-Provider-Modul, das heißt, es erfolgt sowohl die sogenannte Terminal Authentication (TA) des ID-Provider-Moduls gegenüber dem ID-Token und die Chip Authentication (CA) des ID-Tokens, das heißt des in dem ID-Token beinhalteten Chips mit dem Prozessor, gegenüber dem ID-Provider-Modul. Die TA und die CA können gemäß BSI TR-03110 durchgeführt werden.

Hierbei kann ein erster gesicherter Übertragungskanal SM[CA]#1 nach einem Secure-Messaging-Verfahren aufgebaut werden, indem bei der TA und/oder der CA ein Session Key zwischen dem ID-Token und dem ID-Provider-Modul für eine Ende-zu-Ende-Verschlüsselung vereinbart wird, wobei der lokale geschützte Übertragungskanal bestehen bleibt.

Nach erfolgreicher gegenseitiger Authentifizierung führt das ID-Provider-Modul in Schritt 308 einen Schreibzugriff auf den ID-Token zum Schreiben der ersten Attributspezifikation 105 in einem geschützten Speicherbereich des ID-Tokens durch. Dabei kann bei Speicherung der AR im nicht-flüchtigen Speicher des ID-Tokens eine aus vorherigen Protokollsitzungen gespeicherte Attributspezifikation ersetzt werden. Das ID-Provider-Modul erzeugt dann ein erstes Umschaltkommando. Das erste Umschaltkommando wird von dem ID-Provider-Modul an den ID-Token über den ersten geschützten Übertragungskanal gesendet. Das Umschaltkommando bewirkt eine Umschaltung von dem ersten geschützten Übertragungskanal SM[CA]#1 auf den lokalen geschützten Übertragungskanal SM[PACE].

Das ID-Provider-Modul führt in manchen Ausführungsformen zunächst einen ersten Lesezugriff aus, um Attribute gemäß der ersten Attributspezifikation aus dem ID-Token auszulesen, soweit diese dort bereits gespeichert vorliegen. Anstatt der ersten Attributspezifikation AR wird in diesem Fall nur eine Teilmenge AR' in dem ID-Token gespeichert, die nur diejenigen Attribute der ersten Attributspezifikation spezifiziert, die nicht bereits auf dem ID-Token gespeichert vorlagen.

Beispielsweise sind in dem ID-Token lediglich der Name, das Geburtsdatum, die Anschrift des Nutzers sowie die Gültigkeitsdauer des ID-Tokens gespeichert, nicht aber die Kontonummer und die Kreditwürdigkeit des Nutzers. In diesem Fall beinhaltet also die neue Version der ersten Attributspezifikation nur die Kontonummer und die Kreditwürdigkeit des Nutzers, da diese nicht in dem ID-Token gespeichert sind. Zusätzlich zu der ersten Attributspezifikation kann das ID-Provider-Modul zweite, dritte und vierte Attributspezifikationen in dem ID-Token speichern, die jeweils Teilmengen der ersten Attributspezifikation darstellen und selektiv nur Attribute einer bestimmten Attributklasse spezifizieren, wobei die Klassen disjunkt oder überlappend sein können.

In Schritt 310 sendet das ID-Provider-Modul, das Dienst-Computersystem oder das Nutzer-Computersystem Klassenidentifikatoren 702 an ein Attribut-Provider-Verzeichnis-Computersystem 199. Da es sich bei den Klassenidentifikatoren nicht um sensible Daten handelt, können diese verschlüsselt oder unverschlüsselt über das Netzwerk 116 gesendet werden.

In Schritt 312 ermittelt das APV-Computersystem 199 Identifikatoren 704 von Attribut-Provider-Computersystemen 172, 173, 174, die dazu in der Lage sind, die in der ersten Attributspezifikation spezifizierten Attribute, deren Klassenidentifikatoren in der Liste 702 enthalten waren, bereitzustellen.

In Schritt 314 übermittelt das APV-CS 199 die Identifikatoren 704 an das Nutzer-Computersystem. Dies kann auf direktem Wege geschehen oder indirekt dadurch, dass das APV-CS die Identifikatoren 704 zunächst an das ID-Provider-Modul oder Dienst-Computersystem, von welchem auch die Klassenidentifikatoren 702 empfangen wurden, sendet. Das ID-Provider-Modul oder Dienst-Computersystem leitet in einem darauf folgenden Schritt die Identifikatoren 704 an das Nutzer-Computersystem weiter.

Das Nutzer-Computersystem empfängt in Schritt 316 also die Identifikatoren 704 auf direktem oder indirektem Wege von dem APV-CS. Jeder der Identifikatoren identifiziert ein Attribut-Provider-Computersystem 172, 1722, 1723, 173, 174, welches dazu ausgebildet ist, nutzerbezogene Attribute der durch den Klassenidentifikator identifizierten Attributklasse bereitzustellen.

Das Nutzer-Computersystem verwendet die empfangenen Identifikatoren 704 um die Adressen der jeweiligen Attribut-Provider-Computersysteme zu identifizieren. In Schritt 318 sendet das Nutzer-Computersystem ein erstes Triggersignal T1 an die identifizierte Adresse eines ersten Attribut-Provider Computersystems 172. Das erste Triggersignal beinhaltet keinerlei Information bezüglich der vom Dienst angeforderten Attribute und beinhaltet somit weder die erste Attributspezifikation noch Teile derselben. Somit ist die Vertraulichkeit der angeforderten Attribute und auch die Art des angeforderten Dienstes gewährleistet falls das Triggersignal von unberechtigten Dritten abgefangen werden sollte. Das Triggersignal T1 beinhaltet jedoch eine Adresse #106 des ID-Tokens 106, zum Beispiel eine URL in Kombination mit einer Portnummer, die es dem ersten Attribut-Provider-Computersystem ermöglicht, mit dem ID-Token in Kontakt zu treten und eine gegenseitige Authentifizierung einzuleiten. Das Attribut-Provider-Computersystem authentifiziert sich gegenüber dem ID-Token über das Netzwerk. Dies kann analog zu der Authentifizierung des ID-Provider-Moduls gegenüber dem ID-Token erfolgen, nämlich mit einer sogenannten TA und einer CA. Hierbei kann ein zweiter gesicherter Übertragungskanal SM[CA]#2 mit Ende-zu-Ende-Verschlüsselung zwischen dem ID-Token und dem ersten Attribut-Provider-Computersystem aufgebaut werden, wobei der erste geschützte Übertragungskanal bestehen bleibt.

Nach einer erfolgreichen gegenseitigen Authentifizierung zwischen dem ersten Attribut-Provider-Computersystem 172 und dem ID-Token 106 in Schritt 320 wird ein gesicherter Übertragungskanal SM[CA]#2 zwischen den beiden Kommunikationspartnern mittels Ende-zu-Ende-Verschlüsselung aufgebaut. Vorzugsweise bleibt dabei der erste geschützte Übertragungskanal SM[CA]#1 bestehen. Im Zuge der gegenseitigen Authentifizierung wird vorzugsweise sowohl eine Terminal-Authentifikation (TA) als auch eine Chip Authentifikation (CA) durchgeführt. Das erste Attribut-Provider-Computersystem liest in Schritt 322 eine zweite Attributspezifikation aus dem ID-Token über den geschützten Übertragungskanal SM[CA]#2 aus oder generiert die zweite Attributspezifikation dynamisch unter Berücksichtigung der in der ersten Attributspezifikation spezifizierten Attribute. Die zweite Attributspezifikation AR1 spezifiziert diejenige Menge von Attributen, welche einer Attributklasse angehören, zu deren Bereitstellung das erste Attribut-Provider-Computersystem 172 ausgebildet ist. Auf diese Weise wird an das erste Attribut-Provider-Computersystem kommuniziert, welche Attribute von dem ersten Attribut-Provider-Computersystem bereitgestellt werden sollen.

In Schritt 324 ermittelt das erste Attribut-Provider-Computersystem 172, zum Beispiel durch Zugriff auf Datenbanken oder externe Dienste, die in der zweiten Attributspezifikation spezifizierten Attribute und schreibt diese Attribute, auch als "erste Attributmenge A1" bezeichnet, in Schritt 326 auf einen geschützten Speicherbereich des IT Tokens 106. Die geschriebenen Attribute werden hierbei über den zweiten geschützten Übertragungskanal SM[CA]#2 an das ID-Token übertragen und sind damit vor unberechtigten Zugriff Dritter und auch vor dem Zugriff des Nutzer-Computersystems geschützt. Außerdem kann das erste Attribut-Provider-Computersystem den zweiten geschützten Übertragungskanal dazu nutzen, die zweite Attributspezifikation zu löschen oder, falls nicht alle der darin spezifizierten Attribute ermittelt werden konnten, die zweite Attributspezifikation durch eine neue Version zu ersetzen, die nur noch die nicht ermittelten Attribute der vorigen Version der zweiten Attributspezifikation spezifiziert.

Außerdem sendet das erste Attribut-Provider-Computersystem 172 in Schritt 328 ein Bestätigungssignal S1 welches angibt, ob sämtliche in der zweiten Attributspezifikation spezifizierten Attribute erfolgreich ermittelt und in dem ID-Token gespeichert werden konnten. Optional kann das Bestätigungssignal auch eine Fehlermeldung enthalten, falls bei der Ermittlung oder beim Schreiben der Attribute ein Fehler auftrat.

Falls das erste Bestätigungssignal angibt, dass alle in der zweiten Attributspezifikation AR1 spezifizierten Attribute erfolgreich in dem ID-Token 106 gespeichert wurden, sendet das Nutzer-Computersystem ein zweites Triggersignal T2 an ein zweites Attribut-Provider-Computersystem 173, sodass dieses einen dritten geschützten Übertragungskanal SM[CA]#3 aufbauen, die dritte Attributspezifikation AR2 nach gegenseitiger Authentifizierung mittels CA und TA aus dem ID-Token über den Kanal SM[CA]#3 auslesen, die darin spezifizierten Attribute bereitstellen und in dem ID-Token unter Verwendung des gesicherten Kanals SM[CA]#3 speichern kann. Die Schritte 318-328 von Figur 3, welche den Schritten 8-40 einschließlich der Übermittlung des Bestätigungssignals S1 der Figur 4 entsprechen, werden nun für jedes der Attribut-Provider-Computersysteme, die in der Liste 704 der Identifikatoren identifiziert sind, durchgeführt. Falls hierbei kein Fehler auftritt, sind in dem ID-Token nach Durchführung dieser Schritte sämtliche Attribute gespeichert, die in der ersten Attributspezifikation spezifiziert waren.

Das Nutzercomputersystem stellt anhand der empfangenen Bestätigungssignale S1 und anhand der empfangenen Liste 704 fest, dass alle kontaktierten Attribut-Provider-Computersysteme erfolgreich ihre jeweiligen Attribute in dem ID-Token gespeichert haben. Daraufhin veranlasst das Nutzer-Computersystem den ID-Provider-Modul, den gesicherten ersten Übertragungskanal SM[CA]#1 zwischen dem ID-Token und dem ID-Provider-Modul wiederherzustellen und die in dem ID-Token gespeicherten Attribute in Schritt 330 über den ersten geschützten Übertragungskanal SM[CA]#1 auszulesen.

Das Umschalten auf den geschützten ersten Übertragungskanal SM[CA]#1 kann z.B. so erfolgen, dass das ID-Token nach dem Schreibzugriff eines Attribut-Provider-Computersystems automatisch auf den lokalen gesicherten Kanal SM[PACE] "zurückfällt". Das Nutzer-Computersystem schaltet nach Erhalt eines Bestätigungssignals von dem zuletzt schreibenden Attribut-Provider-Computersystem auf den gesicherten ersten Übertragungskanal SM[CA]#1 um, indem es ein Umschaltkommando UK über den lokalen Übertragungskanal SM[PACE] an den ID-Token sendet, und den ID-Token dadurch veranlasst, von dem lokalen gesicherten Übertragungskanal auf den ersten gesicherten Übertragungskanal umzuschalten. Das ID-Token ist bei den Umschaltvorgängen also passiv.

In einem weiteren Schritt 332 leitet das ID-Provider-Modul die ausgelesenen Attribute A1, A2, A3, ..., an das Dienst-Computersystem weiter.

Das Dienstcomputersystem verfügt somit über sämtliche angeforderten Attribute. Obwohl eine Vielzahl von Attribut-Provider-Computersystemen involviert waren, musste das Dienst-Computersystem sich nicht um die komplexe Koordination der Datenübertragung kann man und musste auch dem Nutzer-Computersystem, welches sich darum kümmert, keine sensiblen Daten übermitteln.

Mögliche vorteilhafte Ausführungsformen umfassen die folgenden Merkmalskombinationen:
1. Verfahren zum Lesen von Attributen aus einem ID-Token, der einem Nutzer zugeordnet ist, wobei der ID-Token einen nichtflüchtigen elektronischen Speicher mit einem geschützten Speicherbereich aufweist, in dem Attribute gespeichert sind, wobei ein Zugriff auf den geschützten Speicherbereich nur über einen Prozessor des ID-Tokens möglich ist, und wobei der ID-Token eine Kommunikationsschnittstelle zur Kommunikation mit einem Lesegerät eines Nutzer-Computersystems aufweist, mit folgenden Schritten:
   - Senden einer Dienstanforderung des Nutzers von dem Nutzer-Computersystem über ein Netzwerk an ein Dienst-Computersystem, welches mit einem ID-Provider-Modul gekoppelt ist;
   - in Antwort auf den Empfang der Dienstanforderung, Senden einer ersten Attributspezifikation von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt;
   - gegenseitige Authentifizierung des ID-Provider-Moduls und des ID-Tokens;
   - Durchführung eines Schreibzugriffs des ID-Provider-Moduls auf den ID-Token zum Schreiben der ersten Attributspezifikation in einen geschützten Speicherbereich des ID-Tokens;
   - Senden von einem oder mehreren Klassenidentifikatoren an ein Attribut-Provider-Verzeichnis-Computersystem, wobei jeder der Klassenidentifikatoren eine Attributklasse identifiziert, welcher ein oder mehrere der in der ersten Attributspezifikation spezifizierten Attribute angehören;
   - für jeden der gesendeten Klassenidentifikatoren, Empfang von ein oder mehreren Identifikatoren durch das Nutzer-Computersystem, wobei jeder der Identifikatoren ein Attribut-Provider-Computersystem identifiziert, welches dazu ausgebildet ist, nutzerbezogene Attribute der durch den Klassenidentifikator identifizierten Attributklasse bereitzustellen;
   - in Antwort auf den Empfang der Identifikatoren, Verwenden eines ersten der Identifikatoren durch das Nutzercomputersystem, um eine Adresse eines ersten der Attribut-Provider-Computersysteme zu identifizieren; und Senden eines ersten Triggersignals von dem Nutzer-Computersystem an die identifizierte Adresse des ersten Attribut-Provider-Computersystems, wobei das erste Triggersignal frei ist von der ersten Attributspezifikation und frei ist von Teilen der ersten Attributspezifikation, wobei das erste Triggersignal eine Adresse des ID-Tokens beinhaltet;
   - in Antwort auf Empfang des ersten Triggersignals, Initialisierung einer gegenseitigen Authentifizierung des ersten Attribut-Provider-Computersystems und des ID-Tokens durch das erste Attribut-Provider-Computersystem unter Verwendung der Adresse des ID-Tokens;
   - nach gegenseitiger Authentifizierung des ersten Attribut-Provider-Computersystems und des ID-Tokens, Lesezugriff des ersten Attribut-Provider-Computersystems auf den geschützten Speicherbereich des ID-Tokens zum Auslesen und/oder Generieren einer zweiten Attributspezifikation, wobei die zweite Attributspezifikation eine Menge derjenigen Attribute der ersten Attributspezifikation spezifiziert, welche der Attributklasse angehören, zu deren Bereitstellung das erste Attribut-Provider-Computersystem ausgebildet ist;
   - Ermittlung einer ersten Menge von Attributen, wobei die erste Menge aus Attributen besteht, die in der zweiten Attributspezifikation spezifiziert sind;
   - Durchführung eines Schreibzugriffs durch das erste Attribut-Provider-Computersystem auf den geschützten Speicherbereich des ID-Tokens zur Speicherung der ersten Attributmenge in dem ID-Token;
   - Senden eines ersten Bestätigungssignals von dem ersten Attribut-Provider-Computersystem an das Nutzercomputersystem, wobei das erste Bestätigungssignal angibt, ob die in der zweiten Attributspezifikation spezifizierten Attribute vollständig ermittelt und in dem ID-Token gespeichert wurden;
   - Durchführung eines Lesezugriffs des ID-Provider-Moduls zum Lesen der in dem ID-Token gespeicherten Attribute durch das ID-Provider-Modul und Weiterleitung der gelesenen Attribute an das Dienst-Computersystem.
2. Verfahren nach Punkt 1, ferner mit:
   - Ermittlung der Klassenidentifikatoren durch das Dienst-Computersystem oder das ID-Provider-Modul;
   - Übermittlung der ermittelten Klassenidentifikatoren von dem die Ermittlung durchführenden Computersystem an das Nutzer-Computersystem; wobei das Nutzer-Computersystem die übermittelten Klassenidentifikatoren an das Attribut-Provider-Verzeichnis-Computersystem sendet und wobei das Nutzer-Computersystem die Identifikatoren von dem Dienst-Computersystem empfängt.
3. Verfahren nach Punkt 1, ferner mit:
   - Ermittlung der Klassenidentifikatoren durch das Dienst-Computersystem oder das ID-Provider-Modul;
      wobei das die Klassenidentifikatoren ermittelnde Computersystem die ermittelten Klassenidentifikatoren an das Attribut-Provider-Verzeichnis-Computersystem sendet und die Identifikatoren von dem Attribut-Provider-Verzeichnis-Computersystem empfängt;
   - Übermittlung der ermittelten Identifikatoren von dem die Ermittlung durchführenden Computersystem an das Nutzer-Computersystem.
4. Verfahren nach einem der vorhergehenden Punkte, ferner mit:
   - in Antwort auf den Empfang der Identifikatoren, verwenden eines zweiten der Identifikatoren durch das Nutzercomputersystem, um eine Adresse eines zweiten der Attribut-Provider-Computersysteme zu identifizieren; und senden eines zweiten Triggersignals von dem Nutzer-Computersystem an die identifizierte Adresse des zweiten Attribut-Provider-Computersystems, wobei das zweite Triggersignal frei ist von der zweiten Attributspezifikation und frei ist von Teilen der zweiten Attributspezifikation, wobei das zweite Triggersignal die Adresse des ID-Tokens beinhaltet;
   - in Antwort auf Empfang des zweiten Triggersignals, Initialisierung einer gegenseitigen Authentifizierung des zweiten Attribut-Provider-Computersystems und des ID-Tokens durch das zweite Attribut-Provider-Computersystem unter Verwendung der Adresse des ID-Tokens;
   - nach gegenseitiger Authentifizierung des zweiten Attribut-Provider-Computersystems und des ID-Tokens, Lesezugriff des zweiten Attribut-Provider-Computersystems auf den geschützten Speicherbereich des ID-Tokens zum Auslesen und/oder Generieren einer dritten Attributspezifikation, wobei die dritte Attributspezifikation eine Menge derjenigen Attribute der ersten Attributspezifikation spezifiziert, welcher der Attributklasse angehören, zu deren Bereitstellung das zweite Attribut-Provider-Computersystem ausgebildet ist;
   - Ermittlung einer zweiten Menge von Attributen, wobei die zweite Menge aus Attributen besteht, die in der dritten Attributspezifikation spezifiziert sind;
   - Durchführung eines Schreibzugriffs durch das zweite Attribut-Provider-Computersystem auf den geschützten Speicherbereich des ID-Tokens zur Speicherung der zweiten Attributmenge in dem ID-Token;
   - Senden eines zweiten Bestätigungssignals von dem zweiten Attribut-Provider-Computersystem an das Nutzercomputersystem, wobei das zweite Bestätigungssignal angibt, ob die in der dritten Attributspezifikation spezifizierten Attribute vollständig ermittelt und in dem ID-Token gespeichert wurden.
5. Verfahren nach einem der vorigen Punkte, wobei das Verfahren ferner umfasst:
   - Zugriff des ID-Provider-Moduls auf den geschützten Speicherbereich des ID-Tokens zur Ermittlung von Attributen, die in der ersten Attributspezifikation spezifiziert sind und die bereits in dem ID-Token gespeichert vorliegen;
   - Ermitteln einer Differenzattributspezifikation, die selektiv diejenigen Attribute der ersten Attributspezifikation spezifiziert, die nicht bereits in dem ID-Token gespeichert sind;
   - Verwenden der Differenzattributspezifikation als die erste Attributspezifikation bei der Speicherung der ersten Attributspezifikation in dem ID-Token; und
   - Ausgabe der ermittelten, in dem ID-Token gespeicherten Attribute an das Dienst-Computersystem.
6. Verfahren nach einem der vorigen Punkte,
   - wobei das Attribut-Provider-Verzeichnis-Computersystem dazu ausgebildet ist, mehrere erste Attribut-Provider-Computersysteme in Antwort auf einen Empfang des ersten Klassenidentifikators zu identifizieren; und
   - wobei das Nutzer-Computersystem für jedes der mehreren identifizierten ersten Attribut-Provider-Computersysteme einen ersten Identifikator empfängt, der das jeweilige erste Attribut-Provider-Computersystem identifiziert;
   - wobei das Senden des ersten Triggersignals selektiv an dasjenige der identifizierten ersten Attribut-Provider-Computersysteme erfolgt, welches hinsichtlich eines der folgenden Kriterien einen höheren Wert als die anderen identifizierten ersten Attribut-Provider-Computersysteme aufweist:
      ∘ Anzahl der in der zweiten Attributspezifikation spezifizierten Attribute, die bereitgestellt werden können;
      ∘ gewährtes Vertrauensniveau der bereitgestellten Attribute,
      ∘ Menge aktuell verfügbarer Datenverarbeitungsressourcen;
      ∘ Grad der bisher beobachteten Zuverlässigkeit und Verfügbarkeit des identifizierten ersten Attribut-Provider-Computersystems.
7. Verfahren nach Punkt 6,
   - wobei jedes der identifizierten ersten Attribut-Provider-Computersysteme lediglich einen Teil der in der zweiten Attributspezifikation spezifizierten Attribute bereitstellen kann;
   - wobei das Nutzer-Computersystem in mehreren Iterationen jeweils eines der identifizierten ersten Attribut-Provider-Computersysteme dazu veranlasst, möglichst viele der in der zweiten Attributspezifikation spezifizierten Attribute bereitzustellen und in dem ID-Token zu speichern und dazu veranlasst, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden.
8. Verfahren nach einem der vorhergehenden Punkte, ferner umfassend eine Generierung des ersten Triggersignals, wobei die Generierung umfasst:
   - Generierung einer URL, die einen Zugriff auf das ID-Token über das Netzwerk mittels eines an das Nutzer-Computersystem gekoppeltes Lesegeräts ermöglicht, wobei die URL die Adresse des ID-Tokens beinhaltet;
   - Generierung eines Requests, der an eine Anfrageschnittstelle des ersten Attributprovider-Computersystems gerichtet ist und die URL enthält; und
   - Senden des Request als das erste Triggersignal an die Anfrageschnittstelle des ersten Attribut-Provider-Computersystem.
9. Verfahren nach einem der vorigen Punkte, ferner umfassend:
   - Übertragung einer ersten Signaturanfrage von dem ersten Attribut-Provider-Computersystem an den Token zur Erzeugung einer digitalen Signatur der zweiten Attributspezifikation;
   - Erzeugung der digitalen Signatur der zweiten Attributspezifikation durch den ID-Token;
   - Übermittlung der erzeugten digitalen Signatur an das erste Attribut-Provider-Computersystem;
   - Prüfung der übermittelten digitalen Signatur durch das erste Attribut-Provider-Computersystem mit einem öffentlichen Signaturprüfschlüssel, wobei die Ermittlung der ersten Menge Attribute gemäß der zweiten Attributspezifikation durch das erste Attribut-Provider-Computersystem und die Speicherung der ersten Menge Attribute in dem ID-Token nur dann erfolgt, wenn die Prüfung ergibt, dass die digitale Signatur valide ist.
10. Verfahren nach Punkt 9, wobei in dem geschützten Speicherbereich des ID-Tokens für jedes der Attribut-Provider-Computersysteme ein eigener privater Signierschlüssel gespeichert ist, der einem der Attribut-Provider-Computersysteme zugeordnet ist, wobei jedes der Attribut-Provider-Computersysteme Zugriff auf einen öffentlichen Signaturprüfschlüssel hat, welcher mit dem privaten Signierschlüssel, der dem Attributprovider-Computersystem zugeordnet ist, ein asymmetrisches kryptographisches Schlüsselpaar ausbildet, wobei der öffentliche Signaturprüfschlüssel dazu ausgebildet ist, eine von dem korrespondierenden privaten Signierschlüssels generierte digitale Signatur auf deren Validität hin zu überprüfen.
11. Verfahren nach einem der vorigen Punkte,
   - wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen,
   - wobei der ID-Token einen flüchtigen elektronischen Speicher aufweist, in dem die zweite und dritten Attributspezifikationen gespeichert werden, sodass die zweiten Attributspezifikationen aus dem flüchtigen elektronischen Speicher gelöscht werden, wenn der ID-Token aus der Reichweite des Lesegeräts entfernt wird, und wobei die aufgrund des Schreibzugriffs der ersten und zweiten Attribut-Provider-Computersysteme in dem ID-Token gespeicherten ersten und zweiten Mengen der Attribute in dem nichtflüchtigen elektronischen Speicher gespeichert werden, sodass auf diese durch einen nachfolgenden weiteren Lesezugriff aufgrund einer weiteren Dienstanforderung zugegriffen werden kann; oder
   - wobei alternativ die zweiten und dritten Attributspezifikationen und die erste und zweite Menge der Attribute in dem nicht-flüchtigen Speicher gespeichert werden.
12. Verfahren nach einem der vorigen Punkte, mit: Aufforderung des Nutzers zur Eingabe einer Signatur-PIN für die Freischaltung einer Signaturfunktion des ID-Tokens für die Erzeugung einer digitalen Signatur der zweiten Attributspezifikation und/oder dritten Attributspezifikation durch das Lesegerät oder das Nutzer-Computersystem.
13. Verfahren nach einem der vorhergehenden Punkte, ferner mit:
   - Senden einer ersten Anforderung zur PIN-Eingabe von dem ersten Attribut-Provider-Computersystem über den zweiten geschützten Übertragungskanal an das ID-Token;
   - Erlauben, durch das ID-Token, des Auslesens der zweiten Attributspezifikation nur im Fall der erfolgten Eingabe der gültigen PIN in Antwort auf die erste Anforderung zur PIN-Eingabe; und/oder
   - Senden einer zweiten Anforderung zur PIN-Eingabe von dem zweiten Attribut-Provider-Computersystem über den dritten geschützten Übertragungskanal an das ID-Token; und
   - Erlauben, durch das ID-Token, des Auslesens der dritten Attributspezifikation nur im Fall der erfolgten Eingabe der gültigen PIN in Antwort auf die zweite Anforderung zur PIN-Eingabe.
14. Verfahren nach einem der vorhergehenden Punkte, wobei das Auslesen der zweiten Attributspezifikation durch das erste Attribut-Provider-Computersystem durch die Durchführung eines Verfahrens nach a) oder b) ermöglicht wird,
   wobei Verfahren a) umfasst:
   - Aufteilung der ersten Attributspezifikation durch das Dienst-Computersystem in mehrere weitere Attributspezifikationen, die jeweils nur diejenigen Attribute der ersten Attributspezifikation spezifizieren, die einer gemeinsamen Attributklasse angehören;
   - Senden der weiteren Attributspezifikation von dem Dienst-Computersystem an das ID-Provider-Modul, wobei die Durchführung des Schreibzugriffs des ID-Provider-Moduls auf den ID-Token ein Schreiben der weiteren Attributspezifikationen in dem geschützten Speicherbereich des ID-Tokens umfasst;
   wobei Verfahren b) umfasst:
   - Im Zuge des Lesezugriffs des ersten Attribut-Provider-Computersystems auf den geschützten Speicherbereich des ID-Tokens, Auswertung der in dem ID-Token gespeicherten ersten Attributspezifikation durch das erste Attribut-Provider Computersystem um diejenigen in der ersten Attributspezifikation spezifizierten Attribute zu identifizieren, welche einer Attributklasse angehören, zu deren Bereitstellung das erste Attribut-Provider-Computersystem ausgebildet ist;
   - Generierung einer zweiten Attributspezifikation durch das erste Attribut-Provider-Computersystem, wobei die zweite Attributspezifikation selektiv die identifizierten Attribute spezifiziert;
   - Schreiben der generierten zweiten Attributspezifikation auf den geschützten Speicherbereich des ID-Tokens durch das erste Attribut-Provider-Computersystems.
15. Verfahren nach einem der vorhergehenden Punkte,
   - wobei die Authentifizierung des ID-Provider-Moduls gegenüber dem ID-Token mithilfe eines Berechtigungszertifikats des ID-Provider-Moduls erfolgt, in dem Leserechte des ID-Provider-Moduls zum Lesen von Attributen aus dem ID-Token spezifiziert sind, wobei der ID-Token für die Lesezugriffe des ID-Provider-Moduls eine Prüfung der Leseberechtigung des ID-Provider-Moduls mithilfe des Berechtigungszertifikats durchführt; und
   - wobei in dem Berechtigungszertifikat Schreibrechte des ID-Provider-Moduls zum Schreiben der ersten, zweiten und/oder dritten Attributspezifikation in dem ID-Token spezifiziert sind, wobei der ID-Token für die Schreibzugriffe des ID-Provider-Moduls eine Prüfung der Schreibberechtigung des ID-Provider-Moduls mithilfe des Berechtigungszertifikats durchführt.
16. Verfahren nach einem der vorhergehenden Punkte,
   - wobei die Authentifizierung des ersten Attribut-Provider-Computersystems gegenüber dem ID-Token mithilfe eines Berechtigungszertifikats des ersten Attribut-Provider-Computersystems erfolgt, wobei in dem Berechtigungszertifikat Leserechte des ersten Attribut-Provider-Computersystems zum Lesen der ersten und/oder zweiten Attributspezifikation aus dem ID-Token spezifiziert sind, wobei der ID-Token für den Lesezugriff des ersten Attribut-Provider-Computersystems eine Prüfung der Leseberechtigung des ersten Attribut-Provider-Computersystems mithilfe des Berechtigungszertifikats durchführt; und
   - wobei in dem Berechtigungszertifikat Schreibrechte des ersten Attribut-Provider-Computersystems zum Schreiben der ersten Menge der Attribute in dem ID-Token spezifiziert sind, wobei der ID-Token für den Schreibzugriff des ersten Attribut-Provider-Computersystems eine Prüfung der Schreibberechtigung des ersten Attribut-Provider-Computersystems mithilfe des Berechtigungszertifikats durchführt.
17. Verfahren nach Punkt 16,
   - wobei der geschützte Speicherbereich des ID-Token mehrere Unterbereiche enthält;
   - wobei jeder der Unterbereich einer der Attributklassen spezifisch zugeordnet ist,
   - wobei der ID-Token einen lesenden und/oder schreibenden Zugriff des ersten Attribut-Provider-Computersystems auf einen der Unterbereiche nur ermöglicht, wenn das Berechtigungszertifikat des ersten Attribut-Provider-Computersystems einen Nachweis einer Lese- und/oder Schreibberechtigung für diesen Unterbereich beinhaltet; und
   - wobei das Berechtigungszertifikat des ersten Attribut-Provider-Computersystems dem ersten Attribut-Provider-Computersystem eine Berechtigung zum Lesen und/oder Schreiben nur auf denjenigen der Unterbereiche einräumt, welchem diejenige Attributklasse zugewiesen ist, zu deren Bereitstellung der erste Attribut-Provider ausgebildet ist;
   - wobei der ID-Token einen schreibenden Zugriff des ersten Attribut-Provider-Computersystems auf den einen Speicherbereich zur Speicherung der ersten Attributmenge nur ermöglicht, wenn das Berechtigungszertifikat des ersten Attribut-Provider-Computersystems einen Nachweis einer Schreibberechtigung für diesen Speicherbereich beinhaltet.
18. Verfahren nach einem der vorhergehenden Punkte, wobei vor der Speicherung von Attributen in dem ID-Token aufgrund eines Schreibzugriffs die zu schreibenden Attribute auf einem Display des ID-Tokens, des Lesegeräts oder des Nutzer-Computersystems angezeigt werden, und die zu schreibenden Attribute vorzugsweise erst nach Eingabe einer Bestätigung durch den Nutzer durch Betätigung eines Bedienelements des ID-Tokens, des Lesegeräts bzw. des Nutzer-Computersystems in den nichtflüchtigen elektronischen Speicher geschrieben werden.
19. Verfahren nach einem der vorhergehenden Punkte, wobei es sich bei dem ID-Token um ein Wert- oder Sicherheitsdokument handelt, insbesondere ein Ausweisdokument, das heißt ein ID-Dokument, insbesondere einen elektronischen Personalausweis, Reisepass, Führerschein,
   Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle.
20. Verfahren nach einem der vorhergehenden Punkte,
   wobei die erste Attributspezifikation von dem ID-Provider-Modul an das ID-Token über einen ersten geschützten Übertragungskanal übertragen wird;
   wobei die erste Attributmenge und/oder die zweite Attributspezifikation zwischen dem ersten Attribut-Provider-Computersystem und dem ID-Token über einen zweiten geschützten Übertragungskanal kommuniziert wird;
   wobei die zweite Attributmenge und/oder die dritte Attributspezifikation zwischen dem zweiten Attribut-Provider-Computersystem und dem ID-Token über einen dritten geschützten Übertragungskanal kommuniziert wird;
   wobei das Nutzer-Computersystem die Kommunikation zwischen dem ID-Token und dem ID-Provider-Modul, dem ersten und den zweiten Attribut-Provider-Computersystem koordiniert; und
   wobei Daten, die über den ersten, zweiten oder dritten geschützten Übertragungskanal übertragen werden, vor dem Zugriff des Nutzer-Computersystems geschützt sind.
21. ID-Token, der einem Nutzer zugeordnet ist, wobei der ID-Token einen elektronischen Speicher mit einem geschützten Speicherbereich aufweist, in dem Attribute gespeichert sind, wobei ein Zugriff auf den geschützten Speicherbereich nur über einen Prozessor des ID-Tokens möglich ist, wobei der ID-Token eine Kommunikationsschnittstelle zur Kommunikation mit einem Lesegerät eines Nutzer-Computersystems aufweist, wobei das Nutzer-Computersystem an ein ID-Provider-Modul über ein Netzwerk gekoppelt ist, und wobei der ID-Token zur Durchführung der folgenden Schritte konfiguriert ist:
   - gegenseitige Authentifizierung des ID-Provider-Moduls und des ID-Tokens in Interoperation mit dem ID-Provider-Modul;
   - Aufbau eines ersten geschützten Übertragungskanals mit Ende-zu-Ende-Verschlüsselung zwischen dem ID-Token und dem ID-Provider-Modul über das Netzwerk;
   - Empfang einer ersten Attributspezifikation von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
   - gegenseitige Authentifizierung des ersten Attribut-Provider-Computersystems und des ID-Tokens;
   - nach gegenseitiger Authentifizierung des ersten Attribut-Provider-Computersystems und des ID-Tokens, Prüfung eines Attribut-Provider-Computersystem-spezifischen Berechtigungszertifikats des ersten Attribut-Provider-Computersystems um festzustellen, ob das erste Attribut-Provider-Computersystem zum Lesezugriff auf den geschützten Speicherbereich zum Lesen eines zweiten Attributspezifikation berechtigt ist; Falls das erste Attribut-Provider-Computersystem zum Lesen einer Attributspezifikation berechtigt ist, Erlaubnis des Lesezugriffs des ersten Attribut-Provider-Computersystems auf den geschützten Speicherbereich des ID-Tokens zum Auslesen und/oder Generieren einer zweiten Attributspezifikation, wobei die zweite Attributspezifikation eine Menge derjenigen Attribute der ersten Attributspezifikation spezifiziert, welche einer Attributklasse angehören, zu deren Bereitstellung das erste Attribut-Provider-Computersystem ausgebildet ist;
   - Falls das erste Attribut-Provider-Computersystem zum Schreiben von Attributen in den geschützten Speicherbereich des ID-Tokens berechtigt ist, Erlaubnis des Schreibzugriffs des ersten Attribut-Provider-Computersystems auf den geschützten Speicherbereich zur Speicherung einer ersten Attributmenge in dem ID-Token, wobei die erste Menge aus Attributen besteht, die in der zweiten Attributspezifikation spezifiziert sind und von dem ersten Attribut-Provider-Computersystem ermittelt wurden.
22. ID-Token nach Punkt 21, wobei der ID-Token dazu ausgebildet ist, sich mit einer Vielzahl von Attribut-Provider-Computersystemen, die jeweils zur Bereitstellung von Attributen einer bestimmten Attributklasse ausgebildet sind, gegenseitig zu authentifizieren, wobei das ID-Token hierbei von dem sich authentifizierenden Attribut-Provider-Computersystemen ein Attribut-Provider-Computersystemen-spezifisches Berechtigungszertifikat empfängt und zur Durchführung der folgenden Schritte konfiguriert ist:
   - Erlaubnis eines Lesezugriffs zum Lesen einer Attributspezifikation von dem geschützten Speicherbereich und/oder Erlaubnis zum Schreiben von Attributen in den geschützten Speicherbereich nur dann, falls das Berechtigungszertifikat diesen Lese- und /oder Schreibzugriff erlaubt.
23. ID-Token nach Punkt 21 oder 22, wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen, wobei der ID-Token einen flüchtigen elektronischen Speicher aufweist, und der ID-Token so konfiguriert ist, dass die zweite Attributspezifikation in dem flüchtigen elektronischen Speicher gespeichert wird, sodass die zweite Attributspezifikation aus dem flüchtigen elektronischen Speicher gelöscht wird, wenn der ID-Token aus der Reichweite des Lesegeräts entfernt wird, und wobei die aufgrund des Schreibzugriffs des ersten Attribut-Provider-Computersystems in dem ID-Token gespeicherten Attribute in dem nichtflüchtigen elektronischen Speicher gespeichert werden, sodass auf diese durch einen nachfolgenden weiteren ersten Lesezugriff aufgrund einer weiteren Dienstanforderung zugegriffen werden kann.
24. Attribut-Provider-Computersystem mit einer Netzwerk-Schnittstelle zum Zugriff auf einen ID-Token über ein Netzwerk, wobei das Attribut-Provider-Computersystem zur Durchführung der folgenden Schritte konfiguriert ist:
   - Empfang eines ersten Triggersignals von einem Nutzer-Computersystem, wobei das erste Triggersignal frei ist von einer ersten Attributspezifikation und frei ist von Teilen der ersten Attributspezifikation, wobei die erste Attributspezifikation diejenigen Attribute spezifiziert, die ein Dienst-Computersystem zur Erbringung eines von dem Nutzer-Computersystem angeforderten Dienstes benötigt, wobei das erste Triggersignal eine Adresse des ID-Tokens beinhaltet;
   - in Antwort auf Empfang des ersten Triggersignals, Initialisierung einer gegenseitigen Authentifizierung des ersten Attribut-Provider-Computersystems und des ID-Tokens durch das erste Attribut-Provider-Computersystem unter Verwendung der Adresse des ID-Tokens;
   - nach gegenseitiger Authentifizierung des ersten Attribut-Provider-Computersystems und des ID-Tokens, Lesezugriff des ersten Attribut-Provider-Computersystems auf den geschützten Speicherbereich des ID-Tokens zum Auslesen und/oder Generieren einer zweiten Attributspezifikation, wobei die zweite Attributspezifikation eine Menge derjenigen Attribute der ersten Attributspezifikation spezifiziert, welche der Attributklasse angehören, zu deren Bereitstellung das erste Attribut-Provider-Computersystem ausgebildet ist;
   - Ermittlung einer ersten Menge von Attributen, wobei die erste Menge aus Attributen besteht, die in der zweiten Attributspezifikation spezifiziert sind;
   - Durchführung eines Schreibzugriffs durch das erste Attribut-Provider-Computersystem auf den geschützten Speicherbereich des ID-Tokens zur Speicherung der ersten Attributmenge in dem ID-Token;
   - Senden eines ersten Bestätigungssignals von dem ersten Attribut-Provider-Computersystem an das Nutzercomputersystem, wobei das erste Bestätigungssignal angibt, ob die in der zweiten Attributspezifikation spezifizierten Attribute vollständig ermittelt und in dem ID-Token gespeichert wurden.
25. Attribut-Provider-Computersystem nach Punkt 24, wobei das Attribut-Provider-Computersystem zur Durchführung der folgenden Schritte konfiguriert ist:
   - Übertragung einer Signaturanfrage an das Nutzer-Computersystem zur Veranlassung des ID-Tokens, die zweite Attributspezifikation digital zu signieren,
   - wobei das Lesen der zweiten Attributspezifikation ein Lesen der signierten zweiten Attributspezifikation umfasst;
   - Durchführung einer Signaturprüfung der signierten zweiten Attributspezifikation;
   - wobei die in der gelesenen zweiten Attributspezifikation spezifizierten Attribute nur dann von dem ersten Attribut-Provider-Computersystem ermittelt und in dem ID-Token gespeichert werden, wenn die Signaturprüfung ergibt, dass die Signatur der zweiten Attributspezifikation valide ist.
26. Attribut-Provider-Computersystem nach Punkt 24 oder 25, mit einem Berechtigungszertifikat zur Authentifizierung gegenüber dem ID-Token,
   - wobei in dem Berechtigungszertifikat Rechte des Attribut-Provider-Computersystems zum Lesen der zweiten Attributspezifikation aus dem ID-Token und zum Schreiben von Attributen in den ID-Token spezifiziert sind,
   - wobei das Berechtigungszertifikat optional Rechte des Attribut-Provider-Computersystems zum Schreiben von weiteren Versionen der Attributspezifikation beinhaltet;
   - wobei vorzugsweise die Lese- und/oder Schreibberechtigung sich selektiv nur auf einen Unterbereich des Speicherbereichs des ID-Tokens bezieht, der einer Attributklasse zugewiesen ist, zu deren Bereitstellung das Attribut-Provider-Computersystem ausgebildet ist; und/oder
   - vorzugsweise das Attribut-Provider-Computersystem nicht zum Lesen von Attributen aus dem ID-Token berechtigt ist.
27. Nutzer-Computersystem, das mit einem ID-Provider-Modul und mit einem Dienst-Computersystem über ein Netzwerk verbunden ist, wobei das Nutzer-Computersystem ein Lesegerät zum Zugriff auf einen geschützten Speicherbereich eines ID-Tokens beinhaltet, wobei ein Zugriff auf den geschützten Speicherbereich nur über einen Prozessor des ID-Tokens möglich ist, und wobei der ID-Token eine Kommunikationsschnittstelle zur Kommunikation mit dem Lesegerät aufweist, wobei das ID-Token dazu konfiguriert ist, einen ersten geschützten Übertragungskanal mit dem ID-Provider-Modul auszubilden, wobei das Nutzer-Computersystem zur Durchführung der folgenden Schritte ausgebildet ist:
   - Senden einer Dienstanforderung des Nutzers von dem Nutzer-Computersystem über ein Netzwerk an ein Dienst-Computersystem, welches mit einem ID-Provider-Modul gekoppelt ist;
   - In Antwort auf das Senden der Dienstanforderung:
      ∘ Einleiten einer gegenseitigen Authentisierung des Dienst-Computersystems und des ID-Tokens unter Aufbau eines geschützten Übertragungskanals zur Ermöglichung der Speicherung einer ersten Attributspezifikation durch das Dienst-Computersystem in dem ID-Token über den geschützten Übertragungskanal, wobei die erste Attributspezifikation diejenigen Attribute spezifiziert, die das Dienst-Computersystem zur Erbringung des mit der Dienstanforderung angeforderten Dienstes benötigt;
      ∘ Empfang von Klassenidentifikatoren von dem Dienst-Computersystem, wobei jeder der Klassenidentifikatoren eine Attributklasse identifiziert, welcher ein oder mehrere der in der ersten Attributspezifikation spezifizierten Attribute angehören;
      ∘ Senden der empfangenen Klassenidentifikatoren an ein Attribut-Provider-Verzeichnis-Computersystem, und
      ∘ Empfang von ein oder mehreren Identifikatoren für jeden der gesendeten Klassenidentifikatoren, wobei jeder der Identifikatoren ein Attribut-Provider-Computersystem identifiziert, welches dazu ausgebildet ist, nutzerbezogene Attribute der durch den Klassenidentifikator identifizierten Attributklasse bereitzustellen;
   - in Antwort auf den Empfang der Identifikatoren, Verwenden eines ersten der Identifikatoren, um eine Adresse eines ersten der Attribut-Provider-Computersysteme zu identifizieren; und Senden eines ersten Triggersignals von dem Nutzer-Computersystem an die identifizierte Adresse des ersten Attribut-Provider-Computersystems, wobei das erste Triggersignal frei ist von der ersten Attributspezifikation und frei ist von Teilen der ersten Attributspezifikation, wobei das erste Triggersignal eine Adresse des ID-Tokens beinhaltet;
   - Empfang eines ersten Bestätigungssignals von dem ersten Attribut-Provider-Computersystem durch das Nutzercomputersystem, wobei das erste Bestätigungssignal angibt, ob die in der zweiten Attributspezifikation spezifizierten Attribute vollständig von dem ersten Attribut-Provider-Computersystem ermittelt und in dem ID-Token gespeichert wurden.
28. Computersystem mit.
   - einem ID-Token nach einem der vorhergehenden Punkte 21-23,
   - mit einem ersten und einem zweiten Attribut-Provider-Computersystem gemäß einem der Punkte 24-26,
   - einem Nutzer-Computersystem gemäß Punkt 27, und
   - einem ID-Provider-Modul, wobei das ID-Provider-Modul Bestandteil des Dienst-Computersystems ist oder an das Dienst-Computersystem über ein Netzwerk operativ gekoppelt ist.

### Bezugszeichenliste

- 100: Nutzer-Computersystem
- 101: Lesegerät
- 102: Nutzer
- 103: Dienstanforderung
- 104: Schnittstelle
- 105, AR: erste Attributspezifikation
- 106: ID-Token
- 107: Lesekommando
- 108: Schnittstelle
- 109: Antwort
- 110: Prozessor
- 111, AR1: zweite Attributspezifikation
- 112: Programminstruktionen
- 113: flüchtiger Speicher
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 131: Programminstruktionen
- 132: Programminstruktionen
- 134: Programminstruktionen
- 135: Programminstruktionen
- 136: ID-Provider-Modul
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 172: Attribut-Provider-Computersystem
- 173: Attribut-Provider-Computersystem
- 174: Attribut-Provider-Computersystem
- 175: Datenbank
- 176: erste Attributmenge
- 177: Lesekommando
- 178, AR2: dritte Attributspezifikation
- 179: zweite Attributmenge
- 180: Nachricht
- 181: Display
- 182: Bedienelement
- 183: Speicher
- 199: Attribut-Provider-Verzeichnis-Computersystem
- 302-332: Schritte
- AR3: vierte Attributspezifikation
- S1-S3: Bestätigungssignal
- A1: erste Menge Attribute gemäß AR1
- A2: zweite Menge Attribute gemäß AR2
- A3: dritte Menge Attribute gemäß AR3
- AP1-ID: Identifikator von 172
- AP2-ID: Identifikator von 173
- AP3-ID: Identifikator von 174
- T1-T3: Triggersignale
- 702: Identifikatoren von Attributklassen
- 704: Identifikatoren von Attribut-Provider-CSs
- SM[CA]#LOCAL: lokaler Übertragungskanal
- SM[CA]#1: erster geschützter Übertragungskanal
- SM[CA]#2: zweiter geschützter Übertragungskanal
- SM[CA]#3: dritter geschützter Übertragungskanal
- #106: Adresse ID-Token 106

## Patentansprüche

1. Verfahren zum Lesen von Attributen aus einem ID-Token (106), der einem Nutzer (102) zugeordnet ist, wobei der ID-Token einen nichtflüchtigen elektronischen Speicher (118) mit einem geschützten Speicherbereich (124) aufweist, in dem Attribute gespeichert sind, wobei ein Zugriff auf den geschützten Speicherbereich nur über einen Prozessor (128) des ID-Tokens möglich ist, und wobei der ID-Token eine Kommunikationsschnittstelle (108) zur Kommunikation mit einem Lesegerät (101) eines Nutzer-Computersystems (100) aufweist, mit folgenden Schritten:
- Senden (302) einer Dienstanforderung (103) des Nutzers von dem Nutzer-Computersystem (100) über ein Netzwerk an ein Dienst-Computersystem (150), welches mit einem ID-Provider-Modul (136) gekoppelt ist;
- in Antwort auf den Empfang der Dienstanforderung, Senden (304) einer ersten Attributspezifikation (105) von dem Dienst-Computersystem an das ID-Provider-Modul, wobei die erste Attributspezifikation diejenigen Attribute spezifiziert, die das Dienst-Computersystem zur Erbringung des mit der Dienstanforderung angeforderten Dienstes benötigt;
- gegenseitige Authentifizierung (306) des ID-Provider-Moduls und des ID-Tokens;
- Durchführung eines Schreibzugriffs (308) des ID-Provider-Moduls auf den ID-Token zum Schreiben der ersten Attributspezifikation (105) in einen geschützten Speicherbereich des ID-Tokens;
- Senden (310) von einem oder mehreren Klassenidentifikatoren (702) an ein Attribut-Provider-Verzeichnis-Computersystem (199), wobei jeder der Klassenidentifikatoren eine Attributklasse identifiziert, welcher ein oder mehrere der in der ersten Attributspezifikation (105) spezifizierten Attribute angehören;
- für jeden der gesendeten Klassenidentifikatoren, Empfang (316) von ein oder mehreren Identifikatoren (704) durch das Nutzer-Computersystem (100), wobei jeder der Identifikatoren (704) ein Attribut-Provider-Computersystem (172, 1722, 1723, 173, 174) identifiziert, welches dazu ausgebildet ist, nutzerbezogene Attribute der durch den Klassenidentifikator identifizierten Attributklasse bereitzustellen;
- in Antwort auf den Empfang der Identifikatoren (704), Verwenden eines ersten (AP1-ID) der Identifikatoren durch das Nutzercomputersystem, um eine Adresse eines ersten (172) der Attribut-Provider-Computersysteme zu identifizieren; und Senden (318) eines ersten Triggersignals (T1) von dem Nutzer-Computersystem an die identifizierte Adresse des ersten Attribut-Provider-Computersystems (172), wobei das erste Triggersignal frei ist von der ersten Attributspezifikation (105) und frei ist von Teilen der ersten Attributspezifikation, wobei das erste Triggersignal eine Adresse (#106) des ID-Tokens (106) beinhaltet;
- in Antwort auf Empfang des ersten Triggersignals, Initialisierung einer gegenseitigen Authentifizierung (320) des ersten Attribut-Provider-Computersystems und des ID-Tokens durch das erste Attribut-Provider-Computersystem unter Verwendung der Adresse des ID-Tokens;
- nach gegenseitiger Authentifizierung des ersten Attribut-Provider-Computersystems und des ID-Tokens, Lesezugriff (322) des ersten Attribut-Provider-Computersystems auf den geschützten Speicherbereich des ID-Tokens zum Auslesen und/oder Generieren einer zweiten Attributspezifikation (AR1), wobei die zweite Attributspezifikation eine Menge derjenigen Attribute der ersten Attributspezifikation (105) spezifiziert, welche der Attributklasse angehören, zu deren Bereitstellung das erste Attribut-Provider-Computersystem (172) ausgebildet ist;
- Ermittlung (324) einer ersten Menge (A1) von Attributen, wobei die erste Menge aus Attributen besteht, die in der zweiten Attributspezifikation spezifiziert sind;
- Durchführung eines Schreibzugriffs (326) durch das erste Attribut-Provider-Computersystem auf den geschützten Speicherbereich des ID-Tokens zur Speicherung der ersten Attributmenge (A1) in dem ID-Token;
- Senden (328) eines ersten Bestätigungssignals (S1) von dem ersten Attribut-Provider-Computersystem (172) an das Nutzercomputersystem (100), wobei das erste Bestätigungssignal angibt, ob die in der zweiten Attributspezifikation (AR1) spezifizierten Attribute vollständig ermittelt und in dem ID-Token gespeichert wurden;
- Durchführung eines Lesezugriffs (330) des ID-Provider-Moduls zum Lesen der in dem ID-Token gespeicherten Attribute durch das ID-Provider-Modul und Weiterleitung der gelesenen Attribute an das Dienst-Computersystem.

2. Verfahren nach Anspruch 1, ferner mit:
- Ermittlung der Klassenidentifikatoren durch das Dienst-Computersystem (150) oder das ID-Provider-Modul (136);
- Übermittlung der ermittelten Klassenidentifikatoren von dem die Ermittlung durchführenden Computersystem (136, 150) an das Nutzer-Computersystem;
wobei das Nutzer-Computersystem die übermittelten Klassenidentifikatoren (702) an das Attribut-Provider-Verzeichnis-Computersystem (199) sendet und wobei das Nutzer-Computersystem (100) die Identifikatoren (704) von dem Dienst-Computersystem empfängt; oder
ferner mit:
- Ermittlung der Klassenidentifikatoren durch das Dienst-Computersystem (150) oder das ID-Provider-Modul (136);
wobei das die Klassenidentifikatoren ermittelnde Computersystem (136, 150) die ermittelten Klassenidentifikatoren (702) an das Attribut-Provider-Verzeichnis-Computersystem (199) sendet und die Identifikatoren (704) von dem Attribut-Provider-Verzeichnis-Computersystem (199) empfängt;
- Übermittlung der ermittelten Identifikatoren (704) von dem die Ermittlung durchführenden Computersystem (136, 150) an das Nutzer-Computersystem.

3. Verfahren nach einem der vorhergehenden Ansprüche, ferner mit:
- in Antwort auf den Empfang der Identifikatoren (704), verwenden eines zweiten(AP2-ID) der Identifikatoren durch das Nutzercomputersystem, um eine Adresse eines zweiten (173) der Attribut-Provider-Computersysteme zu identifizieren; und senden eines zweiten Triggersignals (T2) von dem Nutzer-Computersystem an die identifizierte Adresse des zweiten Attribut-Provider-Computersystems (173), wobei das zweite Triggersignal frei ist von der zweiten Attributspezifikation (105) und frei ist von Teilen der zweiten Attributspezifikation, wobei das zweite Triggersignal die Adresse (#106) des ID-Tokens (106) beinhaltet;
- in Antwort auf Empfang des zweiten Triggersignals, Initialisierung einer gegenseitigen Authentifizierung des zweiten Attribut-Provider-Computersystems und des ID-Tokens durch das zweite Attribut-Provider-Computersystem unter Verwendung der Adresse des ID-Tokens;
- nach gegenseitiger Authentifizierung des zweiten Attribut-Provider-Computersystems und des ID-Tokens, Lesezugriff des zweiten Attribut-Provider-Computersystems auf den geschützten Speicherbereich des ID-Tokens zum Auslesen und/oder Generieren einer dritten Attributspezifikation (AR2), wobei die dritte Attributspezifikation eine Menge derjenigen Attribute der ersten Attributspezifikation (105) spezifiziert, welcher der Attributklasse angehören, zu deren Bereitstellung das zweite Attribut-Provider-Computersystem (173) ausgebildet ist;
- Ermittlung einer zweiten Menge (A2) von Attributen, wobei die zweite Menge aus Attributen besteht, die in der dritten Attributspezifikation spezifiziert sind;
- Durchführung eines Schreibzugriffs durch das zweite Attribut-Provider-Computersystem auf den geschützten Speicherbereich des ID-Tokens zur Speicherung der zweiten Attributmenge (A2) in dem ID-Token;
- Senden eines zweiten Bestätigungssignals (S2) von dem zweiten Attribut-Provider-Computersystem (173) an das Nutzercomputersystem (100), wobei das zweite Bestätigungssignal angibt, ob die in der dritten Attributspezifikation (AR2) spezifizierten Attribute vollständig ermittelt und in dem ID-Token gespeichert wurden.

4. Verfahren nach einem der vorigen Ansprüche, wobei das Verfahren ferner umfasst:
- Zugriff des ID-Provider-Moduls auf den geschützten Speicherbereich des ID-Tokens zur Ermittlung von Attributen, die in der ersten Attributspezifikation spezifiziert sind und die bereits in dem ID-Token gespeichert vorliegen;
- Ermitteln einer Differenzattributspezifikation, die selektiv diejenigen Attribute der ersten Attributspezifikation spezifiziert, die nicht bereits in dem ID-Token gespeichert sind;
- Verwenden der Differenzattributspezifikation als die erste Attributspezifikation bei der Speicherung der ersten Attributspezifikation in dem ID-Token; und
- Ausgabe der ermittelten, in dem ID-Token gespeicherten Attribute an das Dienst-Computersystem.

5. Verfahren nach einem der vorigen Ansprüche,
- wobei das Attribut-Provider-Verzeichnis-Computersystem (APV) dazu ausgebildet ist, mehrere erste Attribut-Provider-Computersysteme (172, 1722, 1723) in Antwort auf einen Empfang des ersten Klassenidentifikators (K-ID1) zu identifizieren; und
- wobei das Nutzer-Computersystem für jedes der mehreren identifizierten ersten Attribut-Provider-Computersysteme einen ersten Identifikator (AP1-ID, AP1.1-ID, AP1.2-ID) empfängt, der das jeweilige erste Attribut-Provider-Computersystem identifiziert;
- wobei das Senden des ersten Triggersignals (T1) selektiv an dasjenige der identifizierten ersten Attribut-Provider-Computersysteme erfolgt, welches hinsichtlich eines der folgenden Kriterien einen höheren Wert als die anderen identifizierten ersten Attribut-Provider-Computersysteme aufweist:
∘ Anzahl der in der zweiten Attributspezifikation spezifizierten Attribute, die bereitgestellt werden können;
∘ gewährtes Vertrauensniveau der bereitgestellten Attribute,
∘ Menge aktuell verfügbarer Datenverarbeitungsressourcen;
∘ Grad der bisher beobachteten Zuverlässigkeit und Verfügbarkeit des identifizierten ersten Attribut-Provider-Computersystems;
- wobei insbesondere jedes der identifizierten ersten Attribut-Provider-Computersysteme (172, 1722, 1723) lediglich einen Teil der in der zweiten Attributspezifikation (AR1) spezifizierten Attribute bereitstellen kann;
- wobei insbesondere das Nutzer-Computersystem in mehreren Iterationen jeweils eines der identifizierten ersten Attribut-Provider-Computersysteme dazu veranlasst, möglichst viele der in der zweiten Attributspezifikation spezifizierten Attribute bereitzustellen und in dem ID-Token zu speichern und dazu veranlasst, für die nächste Iteration eine neue Version der zweiten Attributspezifikation in dem ID-Token zu speichern, wobei die neue Version selektiv nur noch diejenigen Attribute der ursprünglichen zweiten Attributspezifikation beinhaltet, die in keiner der bisher durchgeführten Iterationen bereitgestellt wurden.

6. Verfahren nach einem der vorhergehenden Ansprüche, ferner umfassend eine Generierung des ersten Triggersignals (T1), wobei die Generierung umfasst:
- Generierung einer URL, die einen Zugriff auf das ID-Token über das Netzwerk mittels eines an das Nutzer-Computersystem gekoppeltes Lesegeräts ermöglicht, wobei die URL die Adresse (#106) des ID-Tokens beinhaltet;
- Generierung eines Requests, der an eine Anfrageschnittstelle des ersten Attributprovider-Computersystems gerichtet ist und die URL enthält; und
- Senden des Request als das erste Triggersignal (T1) an die Anfrageschnittstelle des ersten Attribut-Provider-Computersystem (172); und/oder
ferner umfassend:
- Übertragung einer ersten Signaturanfrage von dem ersten Attribut-Provider-Computersystem (172) an den Token zur Erzeugung einer digitalen Signatur der zweiten Attributspezifikation (AR1);
- Erzeugung der digitalen Signatur der zweiten Attributspezifikation durch den ID-Token;
- Übermittlung der erzeugten digitalen Signatur an das erste Attribut-Provider-Computersystem (172);
- Prüfung der übermittelten digitalen Signatur durch das erste Attribut-Provider-Computersystem mit einem öffentlichen Signaturprüfschlüssel, wobei die Ermittlung der ersten Menge Attribute gemäß der zweiten Attributspezifikation durch das erste Attribut-Provider-Computersystem und die Speicherung der ersten Menge Attribute in dem ID-Token nur dann erfolgt, wenn die Prüfung ergibt, dass die digitale Signatur valide ist;
wobei insbesondere in dem geschützten Speicherbereich des ID-Tokens für jedes der Attribut-Provider-Computersysteme (172, 1722, 1723, 173, 174) ein eigener privater Signierschlüssel gespeichert ist, der einem der Attribut-Provider-Computersysteme zugeordnet ist, wobei jedes der Attribut-Provider-Computersysteme Zugriff auf einen öffentlichen Signaturprüfschlüssel hat, welcher mit dem privaten Signierschlüssel, der dem Attributprovider-Computersystem zugeordnet ist, ein asymmetrisches kryptographisches Schlüsselpaar ausbildet, wobei der öffentliche Signaturprüfschlüssel dazu ausgebildet ist, eine von dem korrespondierenden privaten Signierschlüssels generierte digitale Signatur auf deren Validität hin zu überprüfen.

7. Verfahren nach einem der vorigen Ansprüche,
- wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen,
- wobei der ID-Token einen flüchtigen elektronischen Speicher (113) aufweist, in dem die zweite und dritten Attributspezifikationen gespeichert werden, sodass die zweiten Attributspezifikationen aus dem flüchtigen elektronischen Speicher gelöscht werden, wenn der ID-Token aus der Reichweite des Lesegeräts entfernt wird, und wobei die aufgrund des Schreibzugriffs der ersten und zweiten Attribut-Provider-Computersysteme (172, 173) in dem ID-Token gespeicherten ersten und zweiten Mengen der Attribute in dem nichtflüchtigen elektronischen Speicher (118) gespeichert werden, sodass auf diese durch einen nachfolgenden weiteren Lesezugriff aufgrund einer weiteren Dienstanforderung zugegriffen werden kann; oder
- wobei alternativ die zweiten und dritten Attributspezifikationen und die erste und zweite Menge der Attribute in dem nicht-flüchtigen Speicher gespeichert werden; und/oder
ferner mit:
- Senden einer ersten Anforderung zur PIN-Eingabe von dem ersten Attribut-Provider-Computersystem (172) über den zweiten geschützten Übertragungskanal (SM[CA]#2) an das ID-Token;
- Erlauben, durch das ID-Token, des Auslesens der zweiten Attributspezifikation (AR1) nur im Fall der erfolgten Eingabe der gültigen PIN in Antwort auf die erste Anforderung zur PIN-Eingabe; und/oder
- Senden einer zweiten Anforderung zur PIN-Eingabe von dem zweiten Attribut-Provider-Computersystem (173) über den dritten geschützten Übertragungskanal (SM[CA]#3) an das ID-Token; und
- Erlauben, durch das ID-Token, des Auslesens der dritten Attributspezifikation (AR2) nur im Fall der erfolgten Eingabe der gültigen PIN in Antwort auf die zweite Anforderung zur PIN-Eingabe.

8. Verfahren nach einem der vorhergehenden Ansprüche, wobei das Auslesen der zweiten Attributspezifikation durch das erste Attribut-Provider-Computersystem (172) durch die Durchführung eines Verfahrens nach a) oder b) ermöglicht wird,
wobei Verfahren a) umfasst:
- Aufteilung der ersten Attributspezifikation (105) durch das Dienst-Computersystem in mehrere weitere Attributspezifikationen (AR1, AR2, AR3), die jeweils nur diejenigen Attribute der ersten Attributspezifikation spezifizieren, die einer gemeinsamen Attributklasse angehören;
- Senden der weiteren Attributspezifikation von dem Dienst-Computersystem an das ID-Provider-Modul, wobei die Durchführung des Schreibzugriffs des ID-Provider-Moduls auf den ID-Token ein Schreiben der weiteren Attributspezifikationen in dem geschützten Speicherbereich des ID-Tokens umfasst;
wobei Verfahren b) umfasst:
- Im Zuge des Lesezugriffs des ersten Attribut-Provider-Computersystems auf den geschützten Speicherbereich des ID-Tokens, Auswertung der in dem ID-Token gespeicherten ersten Attributspezifikation durch das erste Attribut-Provider Computersystem um diejenigen in der ersten Attributspezifikation spezifizierten Attribute zu identifizieren, welche einer Attributklasse angehören, zu deren Bereitstellung das erste Attribut-Provider-Computersystem ausgebildet ist;
- Generierung einer zweiten Attributspezifikation (AR1) durch das erste Attribut-Provider-Computersystem, wobei die zweite Attributspezifikation selektiv die identifizierten Attribute spezifiziert;
- Schreiben der generierten zweiten Attributspezifikation auf den geschützten Speicherbereich des ID-Tokens durch das erste Attribut-Provider-Computersystems.

9. Verfahren nach einem der vorhergehenden Ansprüche,
- wobei die Authentifizierung des ID-Provider-Moduls gegenüber dem ID-Token mithilfe eines Berechtigungszertifikats (144) des ID-Provider-Moduls erfolgt, in dem Leserechte des ID-Provider-Moduls zum Lesen von Attributen aus dem ID-Token spezifiziert sind, wobei der ID-Token für die Lesezugriffe des ID-Provider-Moduls eine Prüfung der Leseberechtigung des ID-Provider-Moduls mithilfe des Berechtigungszertifikats durchführt; und
- wobei in dem Berechtigungszertifikat Schreibrechte des ID-Provider-Moduls zum Schreiben der ersten, zweiten und/oder dritten Attributspezifikation in dem ID-Token spezifiziert sind, wobei der ID-Token für die Schreibzugriffe des ID-Provider-Moduls eine Prüfung der Schreibberechtigung des ID-Provider-Moduls mithilfe des Berechtigungszertifikats durchführt; und/oder
- wobei die Authentifizierung des ersten Attribut-Provider-Computersystems (172) gegenüber dem ID-Token mithilfe eines Berechtigungszertifikats des ersten Attribut-Provider-Computersystems erfolgt, wobei in dem Berechtigungszertifikat Leserechte des ersten Attribut-Provider-Computersystems zum Lesen der ersten und/oder zweiten Attributspezifikation aus dem ID-Token spezifiziert sind, wobei der ID-Token für den Lesezugriff des ersten Attribut-Provider-Computersystems eine Prüfung der Leseberechtigung des ersten Attribut-Provider-Computersystems mithilfe des Berechtigungszertifikats durchführt; und
- wobei in dem Berechtigungszertifikat Schreibrechte des ersten Attribut-Provider-Computersystems zum Schreiben der ersten Menge der Attribute (A1) in dem ID-Token spezifiziert sind, wobei der ID-Token für den Schreibzugriff des ersten Attribut-Provider-Computersystems eine Prüfung der Schreibberechtigung des ersten Attribut-Provider-Computersystems mithilfe des Berechtigungszertifikats durchführt.
- wobei der geschützte Speicherbereich des ID-Token insbesondere mehrere Unterbereiche enthält;
- wobei jeder der Unterbereich einer der Attributklassen spezifisch zugeordnet ist,
- wobei der ID-Token einen lesenden und/oder schreibenden Zugriff des ersten Attribut-Provider-Computersystems auf einen der Unterbereiche nur ermöglicht, wenn das Berechtigungszertifikat des ersten Attribut-Provider-Computersystems einen Nachweis einer Lese- und/oder Schreibberechtigung für diesen Unterbereich beinhaltet; und
- wobei das Berechtigungszertifikat des ersten Attribut-Provider-Computersystems dem ersten Attribut-Provider-Computersystem eine Berechtigung zum Lesen und/oder Schreiben nur auf denjenigen der Unterbereiche einräumt, welchem diejenige Attributklasse zugewiesen ist, zu deren Bereitstellung der erste Attribut-Provider ausgebildet ist;
- wobei der ID-Token einen schreibenden Zugriff des ersten Attribut-Provider-Computersystems auf den einen Speicherbereich zur Speicherung der ersten Attributmenge nur ermöglicht, wenn das Berechtigungszertifikat des ersten Attribut-Provider-Computersystems einen Nachweis einer Schreibberechtigung für diesen Speicherbereich beinhaltet.

10. Verfahren nach einem der vorhergehenden Ansprüche, wobei vor der Speicherung von Attributen in dem ID-Token aufgrund eines Schreibzugriffs die zu schreibenden Attribute auf einem Display (181) des ID-Tokens, des Lesegeräts oder des Nutzer-Computersystems angezeigt werden, und die zu schreibenden Attribute vorzugsweise erst nach Eingabe einer Bestätigung durch den Nutzer durch Betätigung eines Bedienelements (182) des ID-Tokens, des Lesegeräts bzw. des Nutzer-Computersystems in den nicht-flüchtigen elektronischen Speicher geschrieben werden; und/oder
wobei die erste Attributspezifikation von dem ID-Provider-Modul an das ID-Token über einen ersten geschützten Übertragungskanal übertragen wird; wobei die erste Attributmenge und/oder die zweite Attributspezifikation zwischen dem ersten Attribut-Provider-Computersystem und dem ID-Token über einen zweiten geschützten Übertragungskanal kommuniziert wird;
wobei die zweite Attributmenge und/oder die dritte Attributspezifikation zwischen dem zweiten Attribut-Provider-Computersystem und dem ID-Token über einen dritten geschützten Übertragungskanal kommuniziert wird; wobei das Nutzer-Computersystem die Kommunikation zwischen dem ID-Token und dem ID-Provider-Modul, dem ersten und den zweiten Attribut-Provider-Computersystem koordiniert; und
wobei Daten, die über den ersten, zweiten oder dritten geschützten Übertragungskanal übertragen werden, vor dem Zugriff des Nutzer-Computersystems geschützt sind.

11. ID-Token, der einem Nutzer (102) zugeordnet ist, wobei der ID-Token einen elektronischen Speicher (118) mit einem geschützten Speicherbereich (124) aufweist, in dem Attribute gespeichert sind, wobei ein Zugriff auf den geschützten Speicherbereich nur über einen Prozessor (128) des ID-Tokens möglich ist, wobei der ID-Token eine Kommunikationsschnittstelle (108) zur Kommunikation mit einem Lesegerät eines Nutzer-Computersystems (100) aufweist, wobei das Nutzer-Computersystem an ein ID-Provider-Modul über ein Netzwerk gekoppelt ist, und wobei der ID-Token zur Durchführung der folgenden Schritte konfiguriert ist:
- gegenseitige Authentifizierung des ID-Provider-Moduls und des ID-Tokens in Interoperation mit dem ID-Provider-Modul;
- Aufbau eines ersten geschützten Übertragungskanals (SM[CA]#1) mit Ende-zu-Ende-Verschlüsselung zwischen dem ID-Token und dem ID-Provider-Modul über das Netzwerk;
- Empfang einer ersten Attributspezifikation (105) von dem ID-Provider-Modul und Speichern der empfangenen ersten Attributspezifikation in einen geschützten Speicherbereich des ID-Tokens, wobei die erste Attributspezifikation diejenigen Attribute spezifiziert, die das Dienst-Computersystem zur Erbringung des mit der Dienstanforderung angeforderten Dienstes benötigt;
- gegenseitige Authentifizierung des ersten Attribut-Provider-Computersystems und des ID-Tokens;
- nach gegenseitiger Authentifizierung des ersten Attribut-Provider-Computersystems und des ID-Tokens, Prüfung eines Attribut-Provider-Computersystem-spezifischen Berechtigungszertifikats des ersten Attribut-Provider-Computersystems um festzustellen, ob das erste Attribut-Provider-Computersystem zum Lesezugriff auf den geschützten Speicherbereich zum Lesen eines zweiten Attributspezifikation berechtigt ist; Falls das erste Attribut-Provider-Computersystem zum Lesen einer Attributspezifikation berechtigt ist, Erlaubnis des Lesezugriffs des ersten Attribut-Provider-Computersystems auf den geschützten Speicherbereich des ID-Tokens zum Auslesen und/oder Generieren einer zweiten Attributspezifikation (AR1), wobei die zweite Attributspezifikation eine Menge derjenigen Attribute der ersten Attributspezifikation (105) spezifiziert, welche einer Attributklasse angehören, zu deren Bereitstellung das erste Attribut-Provider-Computersystem (172) ausgebildet ist;
- Falls das erste Attribut-Provider-Computersystem zum Schreiben von Attributen in den geschützten Speicherbereich des ID-Tokens berechtigt ist, Erlaubnis des Schreibzugriffs des ersten Attribut-Provider-Computersystems auf den geschützten Speicherbereich zur Speicherung einer ersten Attributmenge (A1) in dem ID-Token, wobei die erste Menge aus Attributen besteht, die in der zweiten Attributspezifikation spezifiziert sind und von dem ersten Attribut-Provider-Computersystem ermittelt wurden.

12. ID-Token nach Anspruch 21, wobei der ID-Token dazu ausgebildet ist, sich mit einer Vielzahl von Attribut-Provider-Computersystemen (172, 1722, 1723, 173, 174), die jeweils zur Bereitstellung von Attributen einer bestimmten Attributklasse ausgebildet sind, gegenseitig zu authentifizieren, wobei das ID-Token hierbei von dem sich authentifizierenden Attribut-Provider-Computersystemen ein Attribut-Provider-Computersystemen-spezifisches Berechtigungszertifikat empfängt und zur Durchführung der folgenden Schritte konfiguriert ist:
- Erlaubnis eines Lesezugriffs zum Lesen einer Attributspezifikation von dem geschützten Speicherbereich und/oder Erlaubnis zum Schreiben von Attributen in den geschützten Speicherbereich nur dann, falls das Berechtigungszertifikat diesen Lese- und /oder Schreibzugriff erlaubt; und/oder
wobei die Kommunikationsschnittstelle des ID-Token zur drahtlosen Kommunikation und zur drahtlosen Einkopplung von Energie in den ID-Token durch das Lesegerät ausgebildet ist, um den ID-Token mit der für seinen Betrieb erforderlichen elektrischen Energie zu versorgen, wobei der ID-Token einen flüchtigen elektronischen Speicher aufweist, und der ID-Token so konfiguriert ist, dass die zweite Attributspezifikation in dem flüchtigen elektronischen Speicher gespeichert wird, sodass die zweite Attributspezifikation aus dem flüchtigen elektronischen Speicher gelöscht wird, wenn der ID-Token aus der Reichweite des Lesegeräts entfernt wird, und wobei die aufgrund des Schreibzugriffs des ersten Attribut-Provider-Computersystems in dem ID-Token gespeicherten Attribute in dem nichtflüchtigen elektronischen Speicher (118) gespeichert werden, sodass auf diese durch einen nachfolgenden weiteren ersten Lesezugriff aufgrund einer weiteren Dienstanforderung zugegriffen werden kann.

13. Attribut-Provider-Computersystem (172, 1722, 1723, 173, 174) mit einer Netzwerk-Schnittstelle (138) zum Zugriff auf einen ID-Token (106) über ein Netzwerk (116), wobei das Attribut-Provider-Computersystem zur Durchführung der folgenden Schritte konfiguriert ist:
- Empfang eines ersten Triggersignals (T1) von einem Nutzer-Computersystem, wobei das erste Triggersignal frei ist von einer ersten Attributspezifikation (105) und frei ist von Teilen der ersten Attributspezifikation, wobei die erste Attributspezifikation diejenigen Attribute spezifiziert, die ein Dienst-Computersystem zur Erbringung eines von dem Nutzer-Computersystem angeforderten Dienstes benötigt, wobei das erste Triggersignal eine Adresse (#106) des ID-Tokens (106) beinhaltet;
- in Antwort auf Empfang des ersten Triggersignals, Initialisierung einer gegenseitigen Authentifizierung des ersten Attribut-Provider-Computersystems und des ID-Tokens durch das erste Attribut-Provider-Computersystem unter Verwendung der Adresse des ID-Tokens;
- nach gegenseitiger Authentifizierung des ersten Attribut-Provider-Computersystems und des ID-Tokens, Lesezugriff des ersten Attribut-Provider-Computersystems auf den geschützten Speicherbereich des ID-Tokens zum Auslesen und/oder Generieren einer zweiten Attributspezifikation (AR1), wobei die zweite Attributspezifikation eine Menge derjenigen Attribute der ersten Attributspezifikation (105) spezifiziert, welche der Attributklasse angehören, zu deren Bereitstellung das erste Attribut-Provider-Computersystem (172) ausgebildet ist;
- Ermittlung einer ersten Menge (A1) von Attributen, wobei die erste Menge aus Attributen besteht, die in der zweiten Attributspezifikation spezifiziert sind;
- Durchführung eines Schreibzugriffs durch das erste Attribut-Provider-Computersystem auf den geschützten Speicherbereich des ID-Tokens zur Speicherung der ersten Attributmenge (A1) in dem ID-Token;
- Senden eines ersten Bestätigungssignals (S1) von dem ersten Attribut-Provider-Computersystem (172) an das Nutzercomputersystem (100), wobei das erste Bestätigungssignal angibt, ob die in der zweiten Attributspezifikation (AR1) spezifizierten Attribute vollständig ermittelt und in dem ID-Token gespeichert wurden.

14. Attribut-Provider-Computersystem (172, 1722, 1723, 173, 174) nach Anspruch 13, wobei das Attribut-Provider-Computersystem zur Durchführung der folgenden Schritte konfiguriert ist:
- Übertragung einer Signaturanfrage an das Nutzer-Computersystem zur Veranlassung des ID-Tokens, die zweite Attributspezifikation digital zu signieren,
- wobei das Lesen der zweiten Attributspezifikation ein Lesen der signierten zweiten Attributspezifikation umfasst;
- Durchführung einer Signaturprüfung der signierten zweiten Attributspezifikation;
- wobei die in der gelesenen zweiten Attributspezifikation spezifizierten Attribute nur dann von dem ersten Attribut-Provider-Computersystem ermittelt und in dem ID-Token gespeichert werden, wenn die Signaturprüfung ergibt, dass die Signatur der zweiten Attributspezifikation valide ist;
und/oder
mit einem Berechtigungszertifikat zur Authentifizierung gegenüber dem ID-Token,
- wobei in dem Berechtigungszertifikat Rechte des Attribut-Provider-Computersystems zum Lesen der zweiten Attributspezifikation aus dem ID-Token und zum Schreiben von Attributen in den ID-Token spezifiziert sind,
- wobei das Berechtigungszertifikat optional Rechte des Attribut-Provider-Computersystems zum Schreiben von weiteren Versionen der Attributspezifikation beinhaltet;
- wobei vorzugsweise die Lese- und/oder Schreibberechtigung sich selektiv nur auf einen Unterbereich des Speicherbereichs des ID-Tokens bezieht, der einer Attributklasse zugewiesen ist, zu deren Bereitstellung das Attribut-Provider-Computersystem ausgebildet ist; und/oder
- vorzugsweise das Attribut-Provider-Computersystem nicht zum Lesen von Attributen aus dem ID-Token berechtigt ist.

15. Nutzer-Computersystem, das mit einem ID-Provider-Modul und mit einem Dienst-Computersystem über ein Netzwerk verbunden ist, wobei das Nutzer-Computersystem ein Lesegerät (101) zum Zugriff auf einen geschützten Speicherbereich eines ID-Tokens beinhaltet, wobei ein Zugriff auf den geschützten Speicherbereich nur über einen Prozessor (128) des ID-Tokens möglich ist, und wobei der ID-Token eine Kommunikationsschnittstelle (108) zur Kommunikation mit dem Lesegerät (101) aufweist, wobei das ID-Token dazu konfiguriert ist, einen ersten geschützten Übertragungskanal mit dem ID-Provider-Modul auszubilden, wobei das Nutzer-Computersystem zur Durchführung der folgenden Schritte ausgebildet ist:
- Senden einer Dienstanforderung (103) des Nutzers von dem Nutzer-Computersystem (100) über ein Netzwerk an ein Dienst-Computersystem (150), welches mit einem ID-Provider-Modul (136) gekoppelt ist;
- In Antwort auf das Senden der Dienstanforderung:
o Einleiten einer gegenseitigen Authentisierung des Dienst-Computersystems und des ID-Tokens unter Aufbau eines geschützten Übertragungskanals zur Ermöglichung der Speicherung einer ersten Attributspezifikation (105) durch das Dienst-Computersystem in dem ID-Token über den geschützten Übertragungskanal, wobei die erste Attributspezifikation diejenigen Attribute spezifiziert, die das Dienst-Computersystem zur Erbringung des mit der Dienstanforderung angeforderten Dienstes benötigt;
∘ Empfang von Klassenidentifikatoren (702) von dem Dienst-Computersystem, wobei jeder der Klassenidentifikatoren eine Attributklasse identifiziert, welcher ein oder mehrere der in der ersten Attributspezifikation (105) spezifizierten Attribute angehören;
∘ Senden der empfangenen Klassenidentifikatoren an ein Attribut-Provider-Verzeichnis-Computersystem (199), und
∘ Empfang von ein oder mehreren Identifikatoren (704) für jeden der gesendeten Klassenidentifikatoren, wobei jeder der Identifikatoren (704) ein Attribut-Provider-Computersystem (172, 1722, 1723, 173, 174) identifiziert, welches dazu ausgebildet ist, nutzerbezogene Attribute der durch den Klassenidentifikator identifizierten Attributklasse bereitzustellen;
- in Antwort auf den Empfang der Identifikatoren (704), Verwenden eines ersten (AP1-ID) der Identifikatoren, um eine Adresse eines ersten (172) der Attribut-Provider-Computersysteme zu identifizieren; und Senden eines ersten Triggersignals (T1) von dem Nutzer-Computersystem an die identifizierte Adresse des ersten Attribut-Provider-Computersystems (172), wobei das erste Triggersignal frei ist von der ersten Attributspezifikation (105) und frei ist von Teilen der ersten Attributspezifikation, wobei das erste Triggersignal eine Adresse (#106) des ID-Tokens (106) beinhaltet;
- Empfang eines ersten Bestätigungssignals (S1) von dem ersten Attribut-Provider-Computersystem (172) durch das Nutzercomputersystem (100), wobei das erste Bestätigungssignal angibt, ob die in einer zweiten Attributspezifikation (AR1) spezifizierten Attribute vollständig von dem ersten Attribut-Provider-Computersystem ermittelt und in dem ID-Token gespeichert wurden.

16. Computersystem mit:
- einem ID-Token nach einem der vorhergehenden Ansprüche 11-12,
- mit einem ersten und einem zweiten Attribut-Provider-Computersystem gemäß einem der Ansprüche 13-14,
- einem Nutzer-Computersystem gemäß Anspruch 15, und
- einem ID-Provider-Modul (136), wobei das ID-Provider-Modul Bestandteil des Dienst-Computersystems (150) ist oder an das Dienst-Computersystem über ein Netzwerk (116) operativ gekoppelt ist.

## Claims

1. A method for reading attributes from an ID token (106) which is assigned to a user (102), wherein the ID token is a non-volatile electronic memory (118) with a protected memory area (124) in which attributes are stored, wherein access to the protected memory area is possible only via a processor (128) of the ID token, and wherein the ID token has a communication interface (108) for communication with a reader (101) of a user computer system (100), said method comprising the following steps:
- sending (302) a service request (103) on the part of the user from the user computer system (100) via a network to a service computer system (150) which is coupled to an ID provider module (136);
- in response to the receipt of the service request, sending (304) a first attribute specification (105) from the service computer system to the ID provider module, wherein the first attribute specification specifies those attributes which the service computer system requires in order to provide the service requested by means of the service request;
- mutually authenticating (306) the ID provider module and the ID token;
- performing write access (308) of the ID provider module to the ID token in order to write the first attribute specification (105) into a protected memory area of the ID token;
- sending (310) one or more class identifiers (702) to an attribute provider directory computer system (199), wherein each of the class identifiers identifies an attribute class to which one or more of the attributes specified in the first attribute specification (105) belong;
- for each of the sent class identifiers, receiving (316) one or more identifiers (704) by the user computer system (100), wherein each of the identifiers (704) identifies an attribute provider computer system (172, 1722, 1723, 173, 174) which is designed to provide user-related attributes of the attribute class identified by the class identifier;
- in response to the receipt of the identifiers (704), using a first (AP1-ID) of the identifiers by the user computer system in order to identify an address of a first (172) of the attribute provider computer systems; and sending (318) a first trigger signal (T1) from the user computer system to the identified address of the first attribute provider computer system (172), wherein the first trigger signal is free of the first attribute specification (105) and is free of parts of the first attribute specification, wherein the first trigger signal contains an address (#□106) of the ID token (106);
- in response to receipt of the first trigger signal, initialising a mutual authentication (320) of the first attribute provider computer system and the ID token by the first attribute provider computer system with use of the address of the ID token;
- following mutual authentication of the first attribute provider computer system and the ID token, granting read access (322) for the first attribute provider computer system to the protected memory area of the ID token in order to read and/or generate a second attribute specification (AR1), wherein the second attribute specification specifies an amount of those attributes of the first attribute specification (105) which belong to the attribute class which the first attribute provider computer system (172) is designed to provide;
- determining (324) a first amount (A1) of attributes, wherein the first amount consists of attributes which are specified in the second attribute specification;
- executing write access (326) of the first attribute provider computer system to the protected memory area of the ID token in order to store the first attribute amount (A1) in the ID token;
- sending (328) a first confirmation signal (S1) from the first attribute provider computer system (172) to the user computer system (100), wherein the first confirmation signal specifies whether the attributes specified in the second attribute specification (AR1) have been fully determined and stored in the ID token;
- performing read access (330) of the ID provider module for reading of the attributes stored in the ID token by the ID provider module, and forwarding the read attributes to the service computer system.

2. The method according to claim 1, also comprising the following steps:
- determining the class identifiers by the service computer system (150) or the ID provider module (136);
- transmitting the determined class identifiers from the computer system (136, 150) carrying out the determination to the user computer system;
wherein the user computer system sends the transmitted class identifiers (702) to the attribute provider directory computer system (199), and wherein the user computer system (100) receives the identifiers (704) from the service computer system; or
also comprising the following steps:
- determining the class identifiers by the service computer system (150) or the ID provider module (136);
wherein the computer system (136, 150) determining the class identifiers sends the determined class identifiers (702) to the attribute provider directory computer system (199) and receives the identifiers (704) from the attribute provider directory computer system (199);
- transmitting the determined identifiers (704) from the computer system (136, 150) performing the determination to the user computer system.

3. The method according to either one of the preceding claims, also comprising the following steps:
- in response to the receipt of the identifiers (704), using a second (AP2-ID) of the identifiers by the user computer system in order to identify an address of a second (173) of the attribute provider computer systems; and sending a second trigger signal (T2) from the user computer system to the identified address of the second attribute provider computer system (173), wherein the second trigger signal is free from the second attribute specification (105) and is free from parts of the second attribute specification, wherein the second trigger signal contains the address (#□106) of the ID token (106);
- in response to receipt of the second trigger signal, initialising a mutual authentication of the second attribute provider computer system and of the ID token by the second attribute provider computer system with use of the address of the ID token;
- following mutual authentication of the second attribute provider computer system and the ID token, granting read access of the second attribute provider computer system to the protected memory area of the ID token in order to read and/or generate a third attribute specification (AR2), wherein the third attribute specification specifies an amount of those attributes of the first attribute specification (105) which belong to the attribute class which the second attribute provider computer system (173) is designed to provide;
- determining a second amount (A2) of attributes, wherein the second amount consists of attributes which are specified in the third attribute specification;
- executing write access by the second attribute provider computer system to the protected memory area of the ID token in order to store the second attribute amount (A2) in the ID token;
- sending a second confirmation signal (S2) from the second attribute provider computer system (173) to the user computer system (100), wherein the second confirmation signal specifies whether the attributes specified in the third attribute specification (AR2) have been fully determined and stored in the ID token.

4. The method according to any one of the preceding claims, wherein the method also comprises the following steps:
- accessing the protected memory area of the ID token by the ID provider module in order to determine attributes which are specified in the first attribute specification and which are already stored in the ID token;
- determining a difference attribute specification which selectively specifies those attributes of the first attribute specification which are not already stored in the ID token;
- using the difference attribute specification as the first attribute specification when storing the first attribute specification in the ID token; and
- outputting the determined attributes stored in the ID token to the service computer system.

5. The method according to any one of the preceding claims,
- wherein the attribute provider directory computer system (APV) is designed to identify a plurality of first attribute provider computer systems (172, 1722, 1723) in response to receipt of the first class identifier (K-ID1); and
- wherein the user computer system receives a first identifier (AP1 -ID, AP1.1-ID, AP1.2-ID) for each of the plurality of identified first attribute provider computer systems, which first identifier identifies the corresponding first attribute provider,
- wherein first trigger signal (T1) is sent selectively to the identified first attribute provider computer system which, in respect of one of the following criteria, has a higher value then the other identified first attribute provider computer systems:
∘ number of attributes, specified in the second attribute specification, which can be provided;
∘ awarded trust level of the provided attributes;
∘ amounts of currently available data processing resources;
∘ degree of previously observed reliability and availability of the identified first attribute provider computer system;
- wherein in particular each of the identified first attribute provider computer systems (172, 1722, 1723) can provide merely part of the attributes specified in the second attribute specification (AR1);
- wherein in particular the user computer system, in a number of iterations, in each case prompts one of the identified first attribute provider computer systems to provide as many of the attributes specified in the second attribute specification as possible and to store these in the ID token and, for the next iteration, prompts the storage of a new version of the second attribute specification in the ID token, wherein the new version selectively contains only those attributes of the original second attribute specification which were not provided in any of the previously performed iterations.

6. The method according to any one of the preceding claims, further comprising a generation of the first trigger signal (T1), wherein the generation comprises the following steps:
- generating a URL which enables access to the ID token via the network by means of a reader coupled to the user computer system, wherein the URL contains the address (#□106) of the ID token;
- generating a request which is directed to a request interface of the first attribute provider computer system and contains the URL; and
- sending the request as the first trigger signal (T1) to the request interface of the first attribute provider computer system (172); and/or also comprising the following steps:
- transmitting a first signature request from the first attribute provider computer system (172) to the token in order to generate a digital signal of the second attribute specification (AR1);
- generating the digital signature of the second attribute specification by the ID token;
- transmitting the generated digital signature to the first attribute provider computer system (172);
- verifying the transmitted digital signature by the first attribute provider computer system using a public signature verification key, wherein the determination of the first amount of attributes according to the second attribute specification by the first attribute provider computer system and the storage of the first amount of attributes in the ID token are performed only if the verification indicates that the digital signature is valid;
wherein, in particular in the protected memory area of the ID token, for each of the attribute provider computer systems (172, 1722, 1723, 173, 174) a separate private signing key is stored, which is associated with one of the attribute provider computer systems, wherein each of the attribute provider computer systems has access to a public signature verification key, which together with the private signing key associated with the attribute provider computer system forms an asymmetric cryptographic key pair, wherein the public signature verification key is designed to check the validity of a digital signature generated by the corresponding private signing key.

7. The method according to any one of the preceding claims,
- wherein the communication interface of the ID token is designed for wireless communication and for wireless coupling of energy into the ID token through the reader in order to supply the ID token with the electrical energy necessary for its operation,
- wherein the ID token has a volatile electronic memory (113), in which the second and third attribute specifications are stored, so that the second attribute specifications are deleted from the volatile electronic memory if the ID token is moved out of range of the reader, and wherein the first and second amounts of attributes stored in the ID token on account of the write access of the first and second attribute provider computer systems (172, 173) are stored in the non-volatile electronic memory (118) so that they can be accessed by a subsequent further read access on account of a further service request; or
- wherein alternatively the second and third attribute specifications and the first and second amount of attributes are stored in the non-volatile memory; and/or
also comprising the following steps:
- sending a first request for PIN input from the first attribute provider computer system (172) via the second protected transmission channel (SM[CA]#□2) to the ID token;
- allowing, by the ID token, the second attribute specification (AR1) to be read only in the event that a valid PIN has been input in response to the first request for PIN input; and/or
- sending a second request for PIN input from the second attribute provider computer system (173) via the third protected transmission channel (SM[CA]#□3) to the ID token; and
- allowing, by the ID token, the third attribute specification (AR2) to be read only in the event that a valid PIN has been input in response to the second request for PIN input.

8. The method according to any one of the preceding claims, wherein the reading of the second attribute specification by the first attribute provider computer system (172) is made possible by the execution of a method a) or b),
wherein method a) comprises:
- dividing the first attribute specification (105) by the service computer system into a plurality of further attribute specifications (AR1, AR2, AR3), which each specify only those attributes of the first attribute specification which belong to a common attribute class;
- sending the further attribute specification from the service computer system to the ID provider module, wherein the execution of the write access of the ID provider module to the ID token comprises a writing of the further attribute specifications in the protected memory area of the ID token;
wherein method b) comprises:
- during the course of the read access of the first attribute provider computer system to the protected memory area of the ID token, evaluating the first attribute specification stored in the ID token by the first attribute provider computer system in order to identify those attributes specified in the first attribute specification which belong to an attribute class which the first attribute provider computer system is designed to provide;
- generating a second attribute specification (AR1) by the first attribute provider computer system, wherein the second attribute specification selectively specifies the identified attributes;
- writing the generated second attribute specification to the protected memory area of the ID token by the first attribute provider computer system.

9. The method according to any one of the preceding claims,
- wherein the ID provider module is authenticated to the ID token with the aid of an authorisation certificate (144) of the ID provider module in which read permissions of the ID provider module for reading attributes from the ID token are specified, wherein the ID token, for the read access of the ID provider module, verifies the read authorisation of the ID provider module with the aid of the authorisation certificate; and
- wherein write permissions of the ID provider module for writing the first, second and/or third attribute specification in the ID token are specified in the authorisation certificate, wherein the ID token, for the write access of the ID provider module, verifies the write authorisation of the ID provider module with the aid of the authorisation certificate; and/or
- wherein the first attribute provider computer system (172) is authenticated to the ID token with the aid of an authorisation certificate of the first attribute provider computer system, wherein the ID token, for the read access of the first attribute provider computer system, verifies the read authorisation of the first attribute provider computer system with the aid of the authorisation certificate; and
- wherein write permissions of the first attribute provider computer system for writing the first amount of attributes (A1) in the ID token are specified in the authorisation certificate, wherein the ID token, for the write access of the first attribute provider computer system, verifies the write authorisation of the first attribute provider computer system with the aid of the authorisation certificate,
- wherein the protected memory area of the ID token in particular contains a plurality of sub-areas;
- wherein each of the sub-areas is associated specifically with one of the attribute classes,
- wherein the ID token enables reading and/or writing access of the first attribute provider computer system to one of the sub-areas only if the authorisation certificate of the first attribute provider computer system contains proof of read and/or write authorisation for this sub-area; and
- wherein the authorisation certificate of the first attribute provider computer system allows the first attribute provider computer system authorisation to read and/or write only in those sub-areas allocated to the attribute class which the first attribute provider is designed to provide;
- wherein the ID token enables writing access of the first attribute provider computer system to the memory area for storing the first attribute amount only if the authorisation certificate of the first attribute provider computer system contains proof of write authorisation for this memory area.

10. The method according to any one of the preceding claims, wherein, before attributes are stored in the ID token on account of write access, the attributes to be written are shown on a display (181) of the ID token, of the reader or of the user computer system, and the attributes to be written are preferably written into the non-volatile electronic memory only once confirmation has been input by the user by actuation of a control element (182) of the ID token, of the reader or of the user computer system; and/or
wherein the first attribute specification is transmitted from the ID provider module to the ID token via a first protected transmission channel;
wherein the first attribute amount and/or the second attribute specification is communicated between the first attribute provider computer system and the ID token via a second protected transmission channel;
wherein the second attribute amount and/or the third attribute specification is communicated between the second attribute provider computer system and the ID token via a third protected transmission channel;
wherein the user computer system coordinates the communication between the ID token and the provider module, the first attribute provider computer system and the second attribute provider computer system; and
wherein data transmitted via the first, second or third protected transmission channel are protected against access of the user computer system.

11. An ID token which is assigned to a user (102), wherein the ID token has an electronic memory (118) with a protected memory area (124), in which attributes are stored, wherein access to the protected memory area is possible only via a processor (128) of the ID token, wherein the ID token has a communication interface (108) for communicating with a reader of a user computer system (100), wherein the user computer system is coupled to an ID provider module via a network, and wherein the ID token is configured to carry out the following steps:
- mutually authenticating the ID provider module and the ID token in interoperation with the ID provider module;
- establishing a first protected transmission channel (SM[CA]#□1) with end-to-end encryption between the ID token and the ID provider module via the network;
- receiving a first attribute specification (105) from the ID provider module and storing the received first attribute specification in a protected memory area of the ID token, wherein the first attribute specification specifies those attributes which the service computer system requires in order to provide the service requested by means of the service request;
- mutually authenticating the first attribute provider computer system and the ID token;
- following mutual authentication of the first attribute provider computer system and the ID token, verifying an attribute provider computer system-specific authorisation certificate of the first attribute provider computer system in order to determine whether the first attribute provider computer system is authorised for read access to the protected memory area in order to read a second attribute specification; if the first attribute provider computer system is authorised to read an attribute specification, allowing the read access of the first attribute provider computer system to the protected memory area of the ID token in order to read and/or generate a second attribute specification (AR1), wherein the second attribute specification specifies an amount of those attributes of the first attribute specification (105) which belong to an attribute class which the first attribute provider computer system (172) is designed to provide;
- if the first attribute provider computer system is authorised to write attributes into the protected memory area of the ID token, allowing the write access of the first attribute provider computer system to the protected memory area in order to store a first attribute amount (A1) in the ID token, wherein the first amount consists of attributes which are specified in the second attribute specification and were determined by the first attribute provider computer system.

12. The ID token according to claim 11, wherein the ID token is designed to authenticate itself to multiple attribute provider computer systems (172, 1722, 1723, 173, 174) which are each designed to provide attributes of a specific attribute class, wherein the ID token in this regard receives an attribute provider computer system-specific authorisation certificate from the authenticating attribute provider computer system and is configured to carry out the following steps:
- allowing read access to read an attribute specification from the protected memory area and/or allowing the writing of attributes into the protected memory area only if the authorisation certificate allows this read and/or write access; and/or
wherein the communication interface of the ID token is designed for wireless communication and for wireless coupling of energy into the ID token through the reader in order to supply the ID token with the electrical energy necessary for its operation, wherein the ID token has a volatile electronic memory, and the ID token is configured such that the second attribute specification is stored in the volatile electronic memory, so that the second attribute specification is deleted from the volatile electronic memory if the ID token is removed from the range of the reader, and wherein the attributes stored in the ID token on account of the write access of the first attribute provider computer system are stored in the non-volatile electronic memory (118) so that they can be accessed by a subsequent further first read access on account of a further service request.

13. An attribute provider computer system (172, 1722, 1723, 173, 174) with a network interface (138) for accessing an ID token (106) via a network (116), wherein the attribute provider computer system is configured to carry out the following steps:
- receiving a first trigger signal (T1) from a user computer system, wherein the first trigger signal is free of a first attribute specification (105) and is free of parts of the first attribute specification, wherein the first attribute specification specifies those attributes which a service computer system requires in order to provide a service requested from the user computer system, wherein the first trigger signal contains an address (#□106) of the ID token (106);
- in response to receipt of the first trigger signal, initialising a mutual authentication of the first attribute provider computer system and the ID token by the first attribute provider computer system with use of the address of the ID token;
- following mutual authentication of the first attribute provider computer system and the ID token, granting read access for the first attribute provider computer system to the protected memory area of the ID token in order to read and/or generate a second attribute specification (AR1), wherein the second attribute specification specifies an amount of those attributes of the first attribute specification (105) which belong to the attribute class which the first attribute provider computer system (172) is designed to provide;
- determining a first amount (A1) of attributes, wherein the first amount consists of attributes which are specified in the second attribute specification;
- executing write access of the first attribute provider computer system to the protected memory area of the ID token in order to store the first attribute amount (A1) in the ID token;
- sending a first confirmation signal (S1) from the first attribute provider computer system (172) to the user computer system (100), wherein the first confirmation signal specifies whether the attributes specified in the second attribute specification (AR1) have been fully determined and stored in the ID token;

14. The attribute provider computer system (172, 1722, 1723, 173, 174) according to claim 13, wherein the attribute provider computer system is configured to carry out the following steps:
- transmitting a signature request to the user computer system in order to prompt the ID token to digitally sign the second attribute specification,
- wherein the reading of the second attribute specification comprises a reading of the signed second attribute specification;
- performing a signature verification of the signed second attribute specification;
- wherein the attributes specified in the read second attribute specification are determined by the first attribute provider computer system and stored in the ID token only if the signature verification indicates that the signature of the second attribute specification is valid;
and/or
comprising an authorisation certificate for authentication to the ID token,
- wherein permissions of the attribute provider computer system to read the second attribute specification from the ID token and to write attributes into the ID token are specified in the authorisation certificate,
- wherein the authorisation certificate optionally contains permissions of the attribute provider computer system to write further versions of the attribute specification;
- wherein the read and/or write authorisation relates selectively only to a sub-area of the memory area allocated to an attribute class which the attribute provider computer system is designed to provide; and/or
- the attribute provider computer system preferably is not authorised to read attributes from the ID token.

15. A user computer system which is connected to an ID provider module and to a service computer system via a network, wherein the user computer system includes a reader (101) for accessing a protected memory area of an ID token, wherein access to the protected memory area is possible only via a processor (128) of the ID token, and wherein the ID token has a communication interface (108) for communication with the reader (101), wherein the ID token is configured to form a first protected transmission channel with the ID provider module, wherein the user computer system is designed to carry out the following steps:
- sending a service request (103) on the part of the user from the user computer system (100) via a network to a service computer system (150), which is coupled to an ID provider module (136);
- in response to the sending of the service request:
∘ initiating mutual authentication of the service computer system and of the ID token with establishment of a protected transmission channel in order to enable storage of a first attribute specification (105) by the service computer system in the ID token via the protected transmission channel, wherein the first attribute specification specifies those attributes which the service computer system requires in order to provide the service requested by means of the service request;
∘ receiving class identifiers (702) from the service computer system, wherein each of the class identifiers identifies an attribute class to which one or more of the attributes specified in the first attribute specification (105) belong;
∘ sending the received class identifiers to an attribute provider directory computer system (199), and
∘ receiving one or more identifiers (704) for each of the sent class identifiers, wherein each of the identifiers (704) identifies an attribute provider computer system (172, 1722, 1723, 173, 174), which is designed to provide user-related attributes of the attribute class identified by the class identifier;
- in response to the receipt of the identifiers (704), using a first (AP1-ID) of the identifiers in order to identify an address of a first (172) of the attribute provider computer systems; and sending a first trigger signal (T1) from the user computer system to the identified address of the first attribute provider computer system (172), wherein the first trigger signal is free of the first attribute specification (105) and is free of parts of the first attribute specification, wherein the first trigger signal contains an address (#□106) of the ID token (106);
- receiving a first confirmation signal (S1) from the first attribute provider computer system (172) by the user computer system (100), wherein the first confirmation signal specifies whether the attributes specified in a second attribute specification (AR1) have been fully determined by the first attribute provider computer system and stored in the ID token.

16. A computer system comprising:
- an ID token according to any one of the preceding claims 11-12,
- comprising a first and a second attribute provider computer system according to any one of claims 13-14,
- a user computer system according to claim 15, and
- an ID provider module (136), wherein the ID provider module is part of the service computer system (150) or is operatively coupled to the service computer system via a network (116).

## Revendications

1. Procédé de lecture d'attributs à partir d'un jeton d'identification (106) qui est associé à un utilisateur (102), le jeton d'identification présentant une mémoire (118) électronique non volatile avec une zone de mémoire (124) sécurisée dans laquelle sont stockés des attributs, où un accès à la zone de mémoire sécurisée n'est possible que par le biais d'un processeur (128) du jeton d'identification, et où le jeton d'identification présente une interface de communication (108) destinée à la communication avec un lecteur (101) d'un système informatique d'utilisateur (100), avec les étapes suivantes :
- l'envoi (302) d'une demande de service (103) de l'utilisateur à partir du système informatique d'utilisateur (100) par le biais d'un réseau à un système informatique de service (150), lequel est couplé avec un module de fournisseur d'identification (136) ;
- en réponse à la réception de la demande de service, l'envoi (304) d'une première spécification d'attributs (105) du système informatique de service au module de fournisseur d'identification, la première spécification d'attributs spécifiant les attributs en question dont le système informatique de service a besoin pour la fourniture du service demandé avec la demande de service ;
- l'authentification (306) réciproque du module de fournisseur d'identification et du jeton d'identification ;
- l'exécution d'un accès en écriture (308) du module de fournisseur d'identification dans le jeton d'identification pour l'écriture de la première spécification d'attributs (105) dans une zone de mémoire sécurisée du jeton d'identification ;
- l'envoi (310) d'un ou de plusieurs identificateurs de classes (702) à un système informatique d'annuaire de fournisseurs d'attributs (199), où chacun des identificateurs de classe identifie une classe d'attributs à laquelle appartiennent un ou plusieurs attributs spécifiés dans la première spécification d'attributs (105) ;
- pour chacun des identificateurs de classe envoyés, la réception (316) d'un ou de plusieurs identificateurs (704) par le système informatique d'utilisateur (100), chacun des identificateurs (704) identifiant un système informatique de fournisseur d'attributs (172, 1722, 1723, 173, 174), lequel est prévu pour fournir des attributs propres aux utilisateurs de la classe d'attributs identifiée par l'identificateur de classe ;
- en réponse à la réception des identificateurs (704), l'utilisation d'un premier identifiant (AP1-ID) des identificateurs par le système informatique d'utilisateur afin d'identifier une adresse d'un premier (172) des systèmes informatiques de fournisseurs d'attributs ; et l'envoi (318) d'un premier signal de déclenchement (T1) du système informatique d'utilisateur à l'adresse identifiée du premier système informatique de fournisseur d'attributs (172), où le premier signal de déclenchement est exempt de la première spécification d'attributs (105) et est exempt de parties de la première spécification d'attributs, où le premier signal de déclenchement contient une adresse (#106) du jeton d'identification (106) ;
- en réponse à la réception du premier signal de déclenchement, l'initialisation d'une authentification réciproque (320) du premier système informatique de fournisseur d'attributs et du jeton d'identification par le premier système informatique de fournisseur d'attributs, moyennant l'emploi de l'adresse du jeton d'identification ;
- après l'authentification réciproque du premier système informatique de fournisseur d'attributs et du jeton d'identification, l'accès en lecture (322) du premier système informatique de fournisseur d'attributs sur la zone de mémoire sécurisée du jeton d'identification pour la lecture et/ou pour la génération d'une deuxième spécification d'attributs (AR1), la deuxième spécification d'attributs spécifiant une quantité d'attributs en question de la première spécification d'attributs (105), lesquels font partie de la classe d'attributs dont la fourniture est assurée par le premier système informatique de fournisseur d'attributs (172) ;
- la détermination (324) d'une première quantité (A1) d'attributs, la première quantité étant constituée d'attributs qui sont spécifiés dans la deuxième spécification d'attributs ;
- l'exécution d'un accès en écriture (326) par le premier système informatique de fournisseur d'attributs sur la zone de mémoire sécurisée du jeton d'identification pour le stockage de la première quantité d'attributs (A1) dans le jeton d'identification ;
- l'envoi (328) d'un premier signal de confirmation (S1) du premier système informatique de fournisseur d'attributs (172) vers le système informatique d'utilisateur (100), où le premier signal de confirmation indique si les attributs spécifiés dans la deuxième spécification d'attributs (AR1) sont totalement déterminés et ont été stockés dans le jeton d'identification ;
- l'exécution d'un accès en lecture (330) du module de fournisseur d'identification pour la lecture des attributs stockés dans le jeton d'identification par le module de fournisseur d'identification et la transmission des attributs lus vers le système informatique de service.

2. Procédé selon la revendication 1, avec en outre :
- la détermination des identificateurs de classe par le système informatique de service (150) ou le module de fournisseur d'identification (136) ;
- la transmission des identificateurs de classe déterminés à partir du système informatique (136, 150) exécutant la détermination vers le système informatique d'utilisateur ;
le système informatique d'utilisateur envoyant les identificateurs de classe (702) transférés au système informatique d'annuaire de fournisseurs d'attributs (199) et le système informatique d'utilisateur (100) recevant les identificateurs (704) à partir du système informatique de service ; ou
en outre avec :
- la détermination des identificateurs de classe par le système informatique de service (150) ou le module de fournisseur d'identification (136) ;
où le système informatique (136, 150) déterminant les identificateurs de classe envoie les identificateurs de classe (702) identifiés au système informatique d'annuaire de fournisseurs d'attributs (199) et reçoit les identificateurs (704) du système informatique d'annuaire de fournisseurs d'attributs (199) ;
- la transmission des identificateurs (704) déterminés du système informatique (136, 150) exécutant la détermination vers le système informatique d'utilisateur.

3. Procédé selon l'une des revendications précédentes, avec en outre :
- en réponse à la réception des identificateurs (704), l'utilisation d'un deuxième (AP2-ID) des identificateurs par le système informatique d'utilisateur afin d'identifier une adresse d'un deuxième (173) des systèmes informatiques de fournisseur d'attributs ; et l'envoi d'un deuxième signal de déclenchement (T2) du système informatique d'utilisateur vers l'adresse du deuxième système informatique de fournisseur d'attributs (173) identifiée, où le deuxième signal de déclenchement est exempt de la deuxième spécification d'attributs (105) et est exempt de parties de la deuxième spécification d'attributs, où le deuxième signal de déclenchement contient l'adresse (#106) du jeton d'identification (106) ;
- en réponse à la réception du deuxième signal de déclenchement, l'initialisation d'une authentification réciproque du deuxième système informatique de fournisseur d'attributs et du jeton d'identification par le deuxième système informatique de fournisseur d'attributs, moyennant l'emploi de l'adresse du jeton d'identification ;
- après l'authentification réciproque du deuxième système informatique de fournisseur d'attributs et du jeton d'identification, l'accès en lecture du deuxième système informatique de fournisseur d'attributs sur la zone de mémoire sécurisée du jeton d'identification pour la lecture et/ou la génération d'une troisième spécification d'attributs (AR2), la troisième spécification d'attributs spécifiant une quantité d'attributs en question de la première spécification d'attributs (105), lesquels font partie de la classe d'attributs dont la fourniture est assurée par le deuxième système informatique de fournisseur d'attributs (173) ;
- la détermination d'une deuxième quantité (A2) d'attributs, la deuxième quantité étant constituée d'attributs qui sont spécifiés dans la troisième spécification d'attributs ;
- l'exécution d'un accès en écriture par le deuxième système informatique de fournisseur d'attributs sur la zone de mémoire sécurisée du jeton d'identification pour le stockage de la deuxième quantité d'attributs (A2) dans le jeton d'identification ;
- l'envoi d'un deuxième signal de confirmation (S2) du deuxième système informatique de fournisseur d'attributs (173) vers le système informatique d'utilisateur (100), où le deuxième signal de confirmation indique si les attributs spécifiés dans la troisième spécification d'attributs (AR2) sont totalement déterminés et ont été stockés dans le jeton d'identification.

4. Procédé selon l'une des revendications précédentes, où le procédé comprend en outre :
- l'accès du module de fournisseur d'identification à la zone de mémoire sécurisée du jeton d'identification pour la détermination d'attributs qui sont spécifiés dans la première spécification d'attributs et qui sont déjà présents stockés dans le jeton d'identification ;
- la détermination d'une spécification d'attributs de différence qui spécifie sélectivement les attributs en question de la première spécification d'attributs qui ne sont pas déjà stockés dans le jeton d'identification ;
- l'utilisation de la spécification d'attributs de différence en tant que première spécification d'attributs lors du stockage de la première spécification d'attributs dans le jeton d'identification ; et
- la délivrance des attributs déterminés, stockés dans le jeton d'identification, au système informatique de service.

5. Procédé selon l'une des revendications précédentes,
- dans lequel le système informatique d'annuaire de fournisseurs d'attributs (APV) est conçu pour identifier plusieurs premiers systèmes informatiques de fournisseurs d'attributs (172, 1722, 1723) en réponse à une réception du premier identificateur de classe (K-ID1) ; et
- dans lequel le système informatique d'utilisateur reçoit un premier identificateur (AP1 -ID, AP1.1-ID, AP1.2-ID) qui identifie le premier système informatique de fournisseur d'attributs respectif pour chacun parmi les nombreux premiers systèmes informatiques de fournisseurs d'attributs identifiés ;
- dans lequel l'envoi du premier signal de déclenchement (T1) a lieu sélectivement vers le premier système informatique de fournisseur d'attributs identifié, lequel présente une valeur plus élevée en ce qui concerne les critères suivants que les autres premiers systèmes informatiques de fournisseurs d'attributs identifiés :
∘ un nombre des attributs spécifiés dans la deuxième spécification d'attributs qui peuvent être fournis ;
∘ un niveau de confiance des attributs fournis octroyé,
∘ une quantité de ressources de traitement de données actuellement disponibles ;
∘ un degré de confiance observé jusqu'à présent et de disponibilité du premier système informatique de fournisseur d'attributs identifié ;
- dans lequel, en particulier, chacun des premiers systèmes informatiques de fournisseurs d'attributs (172, 1722, 1723) identifiés peut fournir simplement une partie des attributs spécifiés dans la deuxième spécification d'attributs (AR1) ;
- dans lequel, en particulier, le système informatique d'utilisateur fait en sorte qu'en plusieurs itérations, respectivement l'un des premiers systèmes informatiques de fournisseurs d'attributs identifiés, fournisse et stocke dans le jeton d'identification si possible beaucoup parmi les attributs spécifiés dans la deuxième spécification d'attributs et fait en sorte de stocker une nouvelle version de la deuxième spécification d'attributs dans le jeton d'identification pour l'itération suivante, où la nouvelle version contient sélectivement uniquement les attributs de la deuxième spécification d'attributs d'origine en question qui n'ont pas déjà été fournis dans aucune des itérations effectuées jusqu'à présent.

6. Procédé selon l'une des revendications précédentes, comprenant en outre une génération du premier signal de déclenchement (T1), la génération comprenant :
- la génération d'un localisateur uniforme de ressources URL qui permet un accès au jeton d'identification par le biais du réseau au moyen d'un lecteur couplé au système informatique d'utilisateur, l'URL contenant l'adresse (#106) du jeton d'identification ;
- la génération d'une requête qui est adressée à une interface de questionnement du premier système informatique de fournisseur d'attributs et qui contient l'URL ; et
- l'envoi de la requête en tant que premier signal de déclenchement (T1) à l'interface de questionnement du premier système informatique de fournisseur d'attributs (172) ; et/ou comprenant en outre :
- la transmission d'une première demande de signature du premier système informatique de fournisseur d'attributs (172) au jeton pour la création d'une signature numérique de la deuxième spécification d'attributs (AR1) ;
- la création de la signature numérique de la deuxième spécification d'attributs par le jeton d'identification ;
- la transmission de la signature numérique créée au premier système informatique de fournisseur d'attributs (172) ;
- la vérification de la signature numérique transmise par le premier système informatique de fournisseur d'attributs avec une clé de vérification de signature publique, la détermination des attributs de la première quantité selon la deuxième spécification d'attributs par le premier système informatique de fournisseur d'attributs et le stockage de la première quantité d'attributs dans le jeton d'identification n'ayant lieu que lorsque la vérification statue que la signature numérique est valide ;
où, en particulier, une clé de signature privée propre est stockée dans la zone de mémoire sécurisée du jeton d'identification pour chacun des systèmes informatiques de fournisseur d'attributs (172, 1722, 1723, 173, 174) qui est associée à l'un des systèmes informatiques de fournisseurs d'attributs, où chacun des systèmes informatiques de fournisseurs d'attributs a accès à une clé de vérification de signature publique, laquelle est associée avec la clé de signature privée qui est associée au système informatique de fournisseur d'attributs, formant une paire de clés cryptographiques asymétriques, où la clé de vérification de signature publique est prévue pour vérifier la validité d'une signature numérique générée par la clé de signature privée correspondante.

7. Procédé selon l'une des revendications précédentes,
- dans lequel l'interface de communication du jeton d'identification est prévue pour la communication sans fil et pour le couplage sans fil d'énergie dans le jeton d'identification par le lecteur afin d'alimenter le jeton d'identification avec l'énergie électrique nécessaire pour son fonctionnement,
- dans lequel le jeton d'identification présente une mémoire électronique volatile (113) dans laquelle sont stockées les deuxièmes et troisièmes spécifications d'attributs de sorte que les deuxièmes spécifications d'attributs sont effacées de la mémoire électronique volatile lorsque le jeton d'identification est éloigné de la portée du lecteur et dans lequel les premières et deuxièmes quantités des attributs stockés dans le jeton d'identification en raison de l'accès en écriture des premier et deuxième systèmes informatiques de fournisseurs d'attributs (172, 173), de sorte qu'on peut avoir accès à ceux-ci par un nouvel accès en lecture ultérieur en raison d'une nouvelle demande de service ; ou
- dans lequel les deuxièmes et troisièmes spécifications d'attributs et les première et deuxième quantités des attributs peuvent être stockées alternativement dans la mémoire non volatile ; et/ou
en outre avec :
- un envoi d'une première demande pour une entrée de code PIN du premier système informatique de fournisseur d'attributs (172) au jeton d'identification par le biais du deuxième canal de transmission (SM[CA]#2) ;
- la permission, par le jeton d'identification, de lire la deuxième spécification d'attributs (AR1) uniquement dans le cas d'une entrée réussie du code PIN valide en réponse à la première demande d'entrée de code PIN ; et/ou
- l'envoi d'une deuxième demande d'entrée de code PIN du deuxième système informatique de fournisseur d'attributs (173) au jeton d'identification par le biais du troisième canal de transmission (SM[CA]#3) sécurisé ; et
- la permission, par le jeton d'identification, de lire la troisième spécification d'attributs (AR2) uniquement dans le cas de l'entrée réussie du code PIN valide en réponse à la deuxième demande d'entrée de code PIN.

8. Procédé selon l'une des revendications précédentes, dans lequel la lecture de la deuxième spécification d'attributs est rendue possible par le premier système informatique de fournisseur d'attributs (172) par l'exécution d'un procédé selon a) ou b),
où le procédé a) comprend :
- une subdivision de la première spécification d'attributs (105) par le système informatique de service, en plusieurs nouvelles spécifications d'attributs (AR1, AR2, AR3) qui ne spécifient respectivement que les attributs en question de la première spécification d'attributs qui font partie d'une classe d'attributs commune ;
- l'envoi de la nouvelle spécification d'attributs du système informatique de service au module de fournisseur d'identification, l'exécution de l'accès en écriture du module de fournisseur d'identification sur le jeton d'identification comprenant l'écriture des nouvelles spécifications d'attributs dans la zone de mémoire sécurisée du jeton d'identification ;
où le procédé b) comprend :
- au cours de l'accès en lecture du premier système informatique de fournisseur d'attributs sur la zone de mémoire sécurisée du jeton d'identification, l'évaluation de la première spécification d'attributs stockée dans le jeton d'identification par le premier système informatique de fournisseur d'attributs afin d'identifier les attributs en question spécifiés dans la première spécification d'attributs lesquels font partie d'une classe d'attributs dont la fourniture est prévue par le premier système informatique de fournisseur d'attributs ;
- la génération d'une deuxième spécification d'attributs (AR1) par le système informatique de fournisseur d'attributs, où la deuxième spécification d'attributs spécifie sélectivement les attributs identifiés ;
- l'écriture de la deuxième spécification d'attributs générée sur la zone de mémoire sécurisée du jeton d'identification par le premier système informatique de fournisseur d'attributs.

9. Procédé selon l'une des revendications précédentes,
- dans lequel l'authentification du module de fournisseur d'identification vis-à-vis du jeton d'identification a lieu à l'aide d'un certificat d'autorisation (144) du module de fournisseur d'identification en ce que des droits de lecture du module de fournisseur d'identification sont spécifiés pour la lecture d'attributs à partir du jeton d'identification, dans lequel le jeton d'identification exécute une vérification de l'autorisation de lecture pour les accès en lecture du module de fournisseur d'identification à l'aide du certificat d'autorisation ; et
- dans lequel des droits d'écriture du module de fournisseur d'identification sont spécifiés dans le certificat d'autorisation pour l'écriture des première, deuxième et/ou troisième spécifications d'attributs dans le jeton d'identification, où le jeton d'identification effectue une vérification de l'habilitation en écriture du module de fournisseur d'identification pour les accès en écriture du module de fournisseur d'identification à l'aide du certificat d'autorisation ; et/ou
- dans lequel l'authentification du premier système informatique de fournisseur d'attributs (172) vis-à-vis du jeton d'identification a lieu à l'aide d'un certificat d'autorisation du premier système informatique de fournisseur d'attributs, où, dans le certificat d'autorisation sont spécifiés des droits de lecture du premier système informatique de fournisseur d'attributs pour la lecture de la première et/ou de la deuxième spécification d'attributs à partir du jeton d'identification, dans lequel, pour l'accès en lecture du premier système informatique de fournisseur d'attributs, le jeton d'identification exécute une vérification de l'autorisation de lecture pour l'accès en lecture du premier système informatique de fournisseur d'attributs du module de fournisseur d'identification à l'aide du certificat d'autorisation ; et
- dans lequel des droits d'écriture du premier système informatique de fournisseur d'attributs sont spécifiés dans le certificat d'autorisation pour l'écriture de la première quantité des attributs (A1) dans le jeton d'identification, dans lequel le jeton d'identification exécute une vérification de l'autorisation en écriture du premier système informatique de fournisseur d'attributs à l'aide du certificat d'autorisation pour l'accès en écriture du premier système informatique de fournisseur d'attributs,
- dans lequel la zone de mémoire sécurisée du jeton d'identification contient en particulier plusieurs zones secondaires ;
- dans lequel l'une des classes d'attributs est associée spécifiquement à chacune des zones secondaires,
- dans lequel à chacune des zones secondaires est attribuée une classe d'attributs de manière spécifique,
- dans lequel le jeton d'identification ne permet un accès en lecture et/ou en écriture du premier système informatique de fournisseur d'attributs sur l'une des zones secondaires que lorsque le certificat d'autorisation du premier système informatique de fournisseur d'attributs contient une indication d'une autorisation de lecture et/ou d'écriture pour cette zone secondaire ; et
- dans lequel le certificat d'autorisation du premier système informatique de fournisseur d'attributs englobe une autorisation pour la lecture et/ou l'écriture pour la zone secondaire en question à laquelle la classe d'attributs en question est attribuée pour la fourniture de laquelle le premier fournisseur d'attributs est prévu ;
- dans lequel le jeton d'identification ne permet un accès en écriture du premier système de fournisseur d'attributs sur une zone de mémoire pour le stockage de la première quantité d'attributs que lorsque le certificat d'autorisation du premier système informatique de fournisseur d'attributs contient une indication d'une autorisation d'écriture pour cette zone de mémoire.

10. Procédé selon l'une des revendications précédentes, dans lequel, avant le stockage d'attributs dans le jeton d'identification en raison d'un accès en écriture, les attributs à écrire sont indiqués sur un affichage (181) du jeton d'identification, du lecteur ou du système informatique d'utilisateur, et les attributs à écrire ne sont écrits dans la mémoire électronique non volatile seulement après l'entrée d'une confirmation par l'utilisateur par une confirmation d'un élément d'actionnement (182) du jeton d'identification, du lecteur, respectivement du système informatique d'utilisateur ; et/ou
dans lequel la première spécification d'attributs est transmise du module de fournisseur d'identification vers le jeton d'identification par le biais d'un premier canal de transmission sécurisé ;
dans lequel la première quantité d'attributs et/ou la deuxième spécification d'attributs est communiquée entre le premier système informatique de fournisseur d'attributs et le jeton d'identification par le biais d'un deuxième canal de transmission sécurisé ;
dans lequel la deuxième quantité d'attributs et/ou la troisième spécification d'attributs est communiquée entre le deuxième système informatique de fournisseur d'attributs et le jeton d'identification par le biais d'un troisième canal de transmission sécurisé ;
dans lequel le système informatique d'utilisateur coordonne la communication entre le jeton d'identification et le module de fournisseur d'identification du premier et du deuxième système informatique de fournisseur d'attributs ; et
dans lequel des données qui peuvent être transmises par le biais du premier, du deuxième ou du troisième canal de transmission sécurisé sont sécurisées avant l'accès du système informatique d'utilisateur.

11. Jeton d'identification qui est associé à un utilisateur (102), où le jeton d'identification présente une mémoire électronique (118) avec une zone de mémoire (124) sécurisée, dans laquelle sont stockés des attributs, où un accès à la zone de mémoire sécurisée n'est possible que par le biais d'un processeur (128) du jeton d'identification, et où le jeton d'identification présente une interface de communication (108) destinée à la communication avec un lecteur (101) d'un système informatique d'utilisateur (100), où le système informatique d'utilisateur est couplé à un module de fournisseur d'identification par le biais d'un réseau, et où le jeton d'identification est configuré pour l'exécution des étapes suivantes :
- l'authentification réciproque du module de fournisseur d'identification et du jeton d'identification en interopération avec le module de fournisseur d'identification ;
- l'établissement d'un premier canal de transmission (SM[CA]#1) sécurisé avec un cryptage de bout en bout entre le jeton d'identification et le module de fournisseur d'identification par le biais du réseau ;
- la réception d'une première spécification d'attributs (105) du module de fournisseur d'identification et le stockage de la première spécification d'attributs reçue dans une zone de mémoire sécurisée du jeton d'identification, la première spécification d'attributs spécifiant les attributs en question dont a besoin le système informatique de service pour la délivrance du service demandé avec la demande de service ;
- l'authentification réciproque du premier système informatique de fournisseur d'attributs et du jeton d'identification ;
- après l'authentification réciproque du premier système informatique de fournisseur d'attributs et du jeton d'identification, la vérification d'un certificat d'autorisation spécifique au système informatique de fournisseur d'attributs du premier système informatique de fournisseur d'attributs afin de constater si le premier système informatique de fournisseur d'attributs est autorisé à l'accès en lecture sur la zone de mémoire sécurisée pour la lecture d'une deuxième spécification d'attributs ;
dans le cas où le premier système informatique de fournisseur d'attributs est autorisé pour la lecture d'une spécification d'attributs, l'autorisation à l'accès en lecture du premier système informatique de fournisseur d'attributs sur la zone de mémoire sécurisée du jeton d'identification pour la lecture et/ou la génération d'une deuxième spécification d'attributs (AR1), la deuxième spécification d'attributs spécifiant une quantité des attributs en question de la première spécification d'attributs (105), lesquels font partie de la classe d'attributs dont la fourniture est assurée par le premier système informatique de fournisseur d'attributs (172) ;
- dans le cas où le premier système informatique de fournisseur d'attributs est autorisé pour l'écriture d'attributs dans la zone de mémoire sécurisée du jeton d'identification, l'autorisation à l'accès en écriture du premier système informatique de fournisseur d'attributs pour la zone de mémoire sécurisée en vue du stockage d'une première quantité d'attributs (A1) dans le jeton d'identification, la première quantité étant constituée d'attributs qui sont spécifiés dans la deuxième spécification d'attributs et qui ont été déterminés par le premier système informatique de fournisseur d'attributs.

12. Jeton d'identification selon la revendication 11, où le jeton d'identification est prévu pour s'authentifier de manière réciproque avec un grand nombre de systèmes informatiques de fournisseurs d'attributs (172, 1722, 1723, 173, 174) qui sont respectivement prévus pour la fourniture d'attributs d'une classe d'attributs définie, où le jeton d'identification reçoit par ce biais des certificats d'autorisation spécifiques aux systèmes informatiques de fournisseurs d'attributs par les systèmes informatiques de fournisseurs d'attributs s'authentifiant et est configuré pour l'exécution des étapes suivantes :
- l'autorisation d'un accès en lecture pour la lecture d'une spécification d'attributs à partir de la zone de mémoire sécurisée et/ou l'autorisation pour l'écriture d'attributs dans la zone de mémoire sécurisée uniquement si le certificat d'autorisation permet cet accès en lecture et/ou en écriture ; et/ou
dans lequel l'interface de communication du jeton d'identification est prévu pour la communication sans fil et le couplage sans fil d'énergie dans le jeton d'identification par le lecteur afin d'approvisionner le jeton d'identification en énergie électrique nécessaire pour son fonctionnement, où le jeton d'identification présente une mémoire électronique volatile, et le jeton d'identification est configuré de telle manière que la deuxième spécification d'attributs est stockée dans la mémoire électronique volatile, de sorte que la deuxième spécification d'attributs est effacée de la mémoire électronique volatile lorsque le jeton d'identification est éloigné de la portée du lecteur et dans lequel les attributs stockés dans le jeton d'identification en raison de l'accès en écriture du premier système informatique de fournisseur d'attributs sont stockés dans la mémoire électronique (118) non volatile de sorte qu'on puisse avoir accès à ceux-ci par un nouvel accès en lecture ultérieur en raison d'une nouvelle demande de service.

13. Système informatique de fournisseur d'attributs (172, 1722, 1723, 173, 174) doté d'une interface de réseau (138) pour l'accès à un jeton d'identification (106) par le biais d'un réseau (116), le système informatique de fournisseur d'attributs étant configuré pour l'exécution des étapes suivantes :
- la réception d'un premier signal de déclenchement (T1) du système informatique d'utilisateur, où le premier signal de déclenchement est exempt de la première spécification d'attributs (105) et est exempt de parties de la première spécification d'attributs, la première spécification d'attributs spécifiant les attributs en question dont un système informatique de service a besoin pour la délivrance d'un service demandé par le système informatique d'utilisateur, où le premier signal de déclenchement contient une adresse (#106) du jeton d'identification (106) ;
- en réponse à la réception du premier signal de déclenchement, l'initialisation d'une authentification réciproque du premier système informatique de fournisseur d'attributs et du jeton d'identification par le premier système informatique de fournisseur d'attributs moyennant l'emploi de l'adresse du jeton d'identification ;
- après l'authentification réciproque du premier système informatique de fournisseur d'attributs et du jeton d'identification, l'accès en lecture du premier système informatique de fournisseur d'attributs sur la zone de mémoire sécurisée du jeton d'identification pour la lecture et/ou la génération d'une deuxième spécification d'attributs (AR1), la deuxième spécification d'attributs spécifiant une quantité des attributs en question de la première spécification d'attributs (105) lesquels font partie de la classe d'attributs dont la fourniture est assurée par le premier système informatique de fournisseur d'attributs (172) ;
- la détermination d'une première quantité (A1) d'attributs, la première quantité étant constituée d'attributs qui sont spécifiés dans la deuxième spécification d'attributs ;
- l'exécution d'un accès en écriture (326) par le premier système informatique de fournisseur d'attributs sur la zone de mémoire sécurisée du jeton d'identification pour le stockage de la première quantité d'attributs (A1) dans le jeton d'identification ;
- l'envoi d'un premier signal de confirmation (S1) du premier système informatique de fournisseur d'attributs (172) vers le système informatique d'utilisateur (100), où le premier signal de confirmation indique si les attributs spécifiés dans la deuxième spécification d'attributs (AR1) sont totalement déterminés et ont été stockés dans le jeton d'identification.

14. Système informatique de fournisseur d'attributs (172, 1722, 1723, 173, 174) selon la revendication 13, où le système informatique de fournisseur d'attributs est configuré pour l'exécution des étapes suivantes :
- la transmission d'une demande de signature vers le système informatique d'utilisateur pour que le jeton d'identification effectue la signature numérique de la deuxième spécification d'attributs,
- où la lecture de la deuxième spécification d'attributs comprend une lecture de la deuxième spécification d'attributs signée ;
- l'exécution de la vérification de signature de la spécification d'attributs signée ;
- où les attributs lus spécifiés dans la deuxième spécification d'attributs ne sont déterminés par le premier système informatique de fournisseur d'attributs et ne sont stockés dans le jeton d'identification que lorsque la vérification de signature statue que la signature de la deuxième spécification d'attributs est valide ;
et/ou
avec un certificat d'autorisation pour l'authentification vis-à-vis du jeton d'identification,
- où des droits du système informatique de fournisseur d'attributs sont spécifiés dans le certificat d'autorisation pour la lecture de la deuxième spécification d'attributs à partir du jeton d'identification et pour l'écriture d'attributs dans le jeton d'identification,
- où le certificat d'autorisation contient éventuellement des droits du système informatique de fournisseur d'attributs pour l'écriture de nouvelles versions de la spécification d'attributs ;
- où de préférence l'autorisation de lecture et/ou d'écriture ne concerne sélectivement qu'une zone secondaire de la zone de mémoire du jeton d'identification à laquelle est attribuée une classe d'attributs dont la fourniture est assurée par le système informatique de fournisseur d'attributs ; et/ou
- de préférence, le système informatique de fournisseur d'attributs n'est pas habilité à la lecture d'attributs à partir du jeton d'identification.

15. Système informatique d'utilisateur qui est relié avec un module de fournisseur d'identification et avec un système informatique de service par le biais d'un réseau, le système informatique d'utilisateur contenant un lecteur (101) pour l'accès à une zone de mémoire sécurisée d'un jeton d'identification, où un accès à la zone de mémoire sécurisée n'est possible que par le biais d'un processeur (128) du jeton d'identification, et où le jeton d'identification présente une interface de communication (108) pour la communication avec le lecteur (101), où le jeton d'identification est configuré pour constituer un premier canal de transmission sécurisé avec le module de fournisseur d'identification, le système informatique d'utilisateur étant prévu pour l'exécution des étapes suivantes :
- l'envoi d'une demande de service (103) de l'utilisateur à partir du système informatique d'utilisateur (100) par le biais d'un réseau vers le système informatique de service, lequel est couplé avec le module de fournisseur d'identification (136) ;
- en réponse à l'envoi de la demande de service :
∘ la mise en place d'une authentification réciproque du système informatique de service et du jeton d'identification, moyennant l'établissement d'un canal de transmission sécurisé pour permettre le stockage d'une première spécification d'attributs (105) par le système informatique de service dans le jeton d'identification par le biais du canal de transmission sécurisé, la première spécification d'attributs spécifiant les attributs en question dont a besoin le système informatique de service pour la délivrance du service demandé avec la demande de service ;
∘ la réception d'identificateurs de classe (702) à partir du système informatique de service, chacun des identificateurs de classe identifiant une classe d'attributs à laquelle appartiennent un ou plusieurs des attributs spécifiés dans la première spécification d'attributs (105) ;
∘ l'envoi des identificateurs de classe reçus à un système informatique d'annuaire de fournisseurs d'attributs (199), et
∘ la réception d'un ou de plusieurs identificateurs (704) pour chacun des identificateurs de classe envoyés, où chacun des identificateurs (704) identifie un système informatique de fournisseur d'attributs (172, 1722, 1723, 173, 174), lequel est prévu pour mettre à disposition des attributs associés à l'utilisateur de la classe d'attributs identifiée par l'identificateur de classe ;
- en réponse à la réception des identificateurs (704), l'utilisation d'un premier identifiant (AP1-ID) des identificateurs afin d'identifier une adresse d'un premier (172) des systèmes informatiques de fournisseurs d'attributs ; et l'envoi d'un premier signal de déclenchement (T1) du système informatique d'utilisateur à l'adresse identifiée du premier système informatique de fournisseur d'attributs (172), où le premier signal de déclenchement est exempt de la première spécification d'attributs (105) et est exempt de parties de la première spécification d'attributs, où le premier signal de déclenchement contient une adresse (#106) du jeton d'identification (106) ;
- la réception d'un premier signal de confirmation (S1) du premier système informatique de fournisseur d'attributs (172) par le système informatique d'utilisateur (100), où le premier signal de confirmation indique si les attributs spécifiés dans une deuxième spécification d'attributs (AR1) sont totalement déterminés par le premier système informatique de fournisseur d'attributs et ont été stockés dans le jeton d'identification.

16. Système informatique doté :
- d'un jeton d'identification selon l'une des revendications précédentes 11 et 12,
- doté d'un premier et d'un deuxième système informatique de fournisseur d'attributs selon l'une des revendications 13 et 14,
- d'un système informatique d'utilisateur selon la revendication 15, et
- d'un module de fournisseur d'identification (136), le module de fournisseur d'identification faisant partie intégrante du système informatique de service (150) ou étant couplé fonctionnellement au système informatique de service par le biais d'un réseau (116).
